(19) Europäisches Patentamt / European Patent Office / Office européen des brevets

(11) **EP 2 119 248 B1**

(12) **EUROPEAN PATENT SPECIFICATION**

(45) Date of publication and mention
of the grant of the patent:
**12.01.2011 Bulletin 2011/02**

(21) Application number: **07711833.9**

(22) Date of filing: **07.03.2007**

(51) Int Cl.:
*H04N 17/00* *(2006.01)*

(86) International application number:
**PCT/EP2007/001968**

(87) International publication number:
**WO 2008/106994 (12.09.2008 Gazette 2008/37)**

(54) **CONCEPT FOR DETERMINING A VIDEO QUALITY MEASURE FOR BLOCK CODED IMAGES**

KONZEPT ZUR BESTIMMUNG EINES VIDEOQUALITÄTSMASSES FÜR BLOCKCODIERTE BILDER

CONCEPT DE DÉTERMINATION D'UNE MESURE DE QUALITÉ VIDÉO POUR IMAGES CODÉES BLOQUÉES

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**18.11.2009 Bulletin 2009/47**

(73) Proprietor: **Fraunhofer-Gesellschaft zur Förderung der angewandten Forschung e.V.
80686 München (DE)**

(72) Inventors:
• **NDJIKI-NYA, Patrick
13505 Berlin (DE)**
• **WIEGAND, Thomas
10719 Berlin (DE)**

(74) Representative: **Schenk, Markus et al
Schoppe, Zimmermann, Stöckeler & Zinkler
Patentanwälte
Postfach 246
82043 Pullach bei München (DE)**

(56) References cited:
**WO-A-2005/055618**

• **KARUNASEKERA S A ET AL: "A distortion measure for image artifacts based on human visual sensitivity" ACOUSTICS, SPEECH, AND SIGNAL PROCESSING, 1994. ICASSP-94., 1994 IEEE INTERNATIONAL CONFERENCE ON ADELAIDE, SA, AUSTRALIA 19-22 APRIL 1994, NEW YORK, NY, USA,IEEE, vol. v, 19 April 1994 (1994-04-19), pages V-117, XP010133668 ISBN: 0-7803-1775-0**

**Description**

The present invention relates to a concept for determining a video quality measure. The invention is particularly useful for, but not necessarily limited to aspects of the measurement of the quality of an image signal or a video signal on the basis of a reference image signal for a reference video signal.

Images, whether as individual images, such as photographs, or as a series of images, such as frames of a video signal, are increasingly transmitted and stored digitally. Although digital memories are getting larger, there is a continuous quest for reducing digital image data to as little as possible to reduce transmission time, bandwidth requirements or memory usage. This leads to improved intra-and inter-image compression techniques. Inevitably, most of such compression techniques lead to a loss of data in decompressed images. While the loss from one compression technique may be acceptable to the human eye or an electronic eye, the loss from another compression technique may not be. In general, the loss of data also varies according to sampling and quantization amounts chosen in any compression technique.

To be able to test and judge various compression techniques, it is necessary to determine the quality of the respective end result. That may be achieved by a subjective human judgment, although a more objective, empirical approach may be preferred. However, as the ultimate target for an image is most usually the human eye and brain, the criteria for determining quality are generally selected according to how much the particular properties or features of a decompressed image or video are noticed.

Distortion caused by compression can be classified for example as blockiness, blurring, jaggedness, ghost figures, and quantization errors.

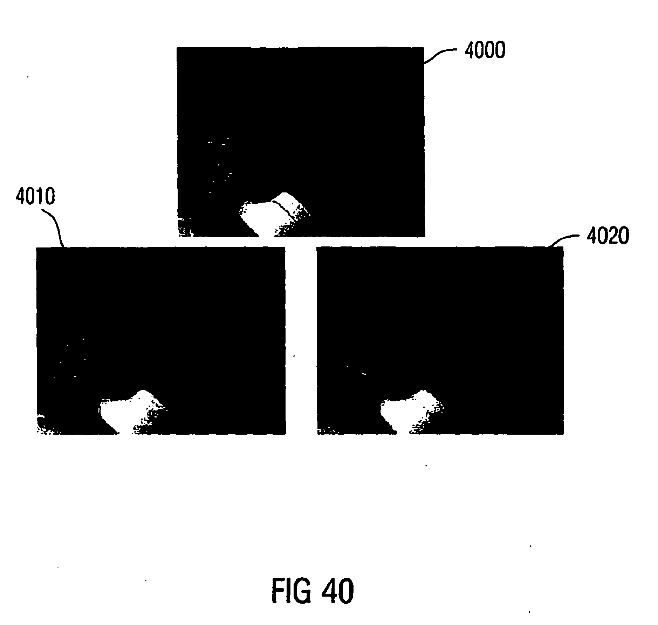

Blockiness is one of the most annoying types of distortion. Blockiness, also known as the blocking effect, is one of the major disadvantages of block-based coding techniques, such as JPEG or MPEG. It results from intensity discontinuities at the boundaries of adjacent transformation blocks in a decoded image. Blockiness tends to be a result of coarse quantization in DCT-based (DCT = Discrete Cosine Transform) image compression. On the other hand, a loss or coarse quantization of high frequency components in subband-based image compression (such as JPEG-2000 image compression) results in pre-dominant blurring effects. Examples of digital image or video impairments are depicted in Fig. 40. Image 4000 on the top of Fig. 40 represents a source image. Image 4010 on the left bottom of Fig. 40 represents a coded image impaired by blocking or tiling artifacts. Image 4020 on the right bottom of Fig. 40 shows an image impaired by the aforementioned blurring artifact.

A typical image processing chain optionally comprises an acquisition, a processing, a compression, a storage, and a transmission step. Images can be degraded at each step of the chain. Due to the large variety of image processing modules, a number of impairment patterns can be observed (as described above).

In analog image processing (AIP), established quality evaluation standards are used to measure the annoyance of corresponding distortions. These standards provide mathematical measures such as the differential gain, the differential phase, or waveform distortion that feature a high correlation with subjective human quality perception. As the performance of an analog image or video processing chain can be assumed to be time-invariant, the measurement of its characteristics can be conducted using adequate test signals. Unfortunately, the measures used in AIP are of limited help in the digital image processing (DIP) framework due to the distinct nature of occurring artifacts. For DIP, typical artifacts are the aforementioned blockiness, ringing, motion compensation in accuracies, jerky, unnatural motion, etc. These artifacts are highly correlated with the image content. The behavior of DIP systems is time-varying as it depends on operational properties of the digital transmission system. In fact are many decisions taken in a transmission system depending on the input signal. Modules like motion estimation and adaptive quantization yield dynamic behavior of digital transmission systems due to high signal dependency that is strongly correlated with bit rate or error rate. Hence, deterministic test signals cannot be used in the digital transmission framework to reliably gauge the operational behavior of the system.

Various attempts to objectively measure digital image quality have been proposed. Traditionally, peak signal-to-noise ratio (PSNR) has been used to represent the quality of a compressed image for video sequence. However, PSNR has been found to correlate poorly with subjective quality ratings, particularly at much lower bit rates and frame rates.

Another quality assessment measure for compressed digital image and video sequences is the best measure standardized by VQEG, that is the general model of the national telecommunications and information administration (NTIA). NTIA's general model is merely linear with respect to subjective data and VQEG's phase 2 evaluations show that no significant performance improvement of the assessors can be achieved through non-linear regression.

E.P. Ong, X. Yang, W. Lin, Z. Lu, and S. Yao, "Video Quality Metric for Low Bitrate Compressed Video", Proc. ICIP 2004, IEEE International Conference on Image Processing, pages 3531-3534, Singapore 2004 proposes an objective video quality metric to automatically measure the perceived quality of a stream of video images based on a combined measure of distortion-invisibility, block-fidelity, and content richness fidelity. A block-fidelity or spatial video measure measures the amount of distortion at block-boundaries in a decoded image or a video signal d(y,x,t) when compared to an original reference image or video signal o(y,x,t).

In the following d(y,x,t) and o(y,x,t) is referred to a video signal and a reference video signal, respectively, both having a temporal dimension t. For the sake of simplicity, also an image signal d(y,x) or a reference image signal o(y, x) with no temporal dimension is referred to as d(y,x,t) or o(y,x,t), respectively, as it could be seen as an (reference) image being regarded at the time instant t. The same holds for the spatial video measure of an image signal.

The blocking effect is one of the most significant coding artifacts that often occurs in video compression. The block-fidelity or the spatial video quality measure $Q_s$ (t) for a frame at time instant t according to Ong et al. can be generally expressed as

$$Q_s(t) = \frac{e^{\frac{\tau}{1+\delta(t)}}}{e^{\tau}} = e^{-\frac{\delta\tau}{1+\delta(t)}} \tag{1}$$

wherein $\tau$ can be freely selected and steers an interval of $\delta(t)$ for which contrast is enhanced or reduced. The denominator in equation (1) relates to a normalization factor. The variable $\delta(t)$ represents a differential term that assesses the distance between the given reference o(y,x,t) and the corresponding distorted signal d(y,x,t) according to

$$\delta(t) = \frac{|E_o(t) - E_d(t)|}{E_o(t)} \tag{2}$$

where $E_0(t)$ and $E_d(t)$ correspond to mean absolute spatial gradients in the original o(y,x,t) and the distorted signal d(y, x,t), respectively. Ong et al. compute the mean absolute spatial gradient of the original signal according to

$$E_o(t) = \frac{1}{(\frac{Y}{4}-1)X} \sum_{y=1}^{\frac{Y}{4}-1} \sum_{x=1}^{X} |o_h(4y,x,t)| + \frac{1}{(\frac{X}{4}-1)Y} \sum_{t=1}^{Y} \sum_{x=1}^{\frac{X}{4}-1} |o_v(y,4x,t)| \tag{3}$$

and the mean absolute spatial gradient of the distorted signal according to

$$E_d(t) = \frac{1}{(\frac{Y}{4}-1)X} \sum_{y=1}^{\frac{Y}{4}-1} \sum_{x=1}^{X} |d_h(4y,x,t)| + \frac{1}{(\frac{X}{4}-1)Y} \sum_{t=1}^{Y} \sum_{x=1}^{\frac{X}{4}-1} |d_v(y,4x,t)|. \tag{4}$$

$E_0(t)$ and $E_d(t)$ reflect the mean occurrence of given gradient directions in the original and the distorted signals. $o_{h,v}(y, x,t)$ and $d_{h,v}(y,x,t)$ represent high pass filtered original and distorted signals, respectively, where $o_h(y,x,t)$ corresponds to a horizontal edge reference image signal representing horizontal edges in the reference image o(y,x,t), $o_v(y,x,t)$ corresponds to a vertical edge reference image signal representing vertical edges in the reference image signal o(y,x, t), $d_h(y,x,t)$ corresponds to a horizontal edge image signal representing horizontal edges in the image signal d(y,x,t) and $d_v(y,x,t)$ corresponds to a vertical edge image signal representing vertical edges in the image signal d(y,x,t). Y and X depict the height and the width of the image or of the video signals, i.e. a vertical resolution of Y lines and a horizontal resolution of X columns. A filtering operation is defined by

$$d_h(y,x,t) = d(y,x,t) * f_h(y,x) \quad \wedge \quad o_h(y,x,t) = o(y,x,t) * f_h(y,x) \tag{5}$$

$$d_v(y,x,t) = d(y,x,t) * f_v(y,x) \quad \wedge \quad o_v(y,x,t) = o(y,x,t) * f_v(y,x) , \qquad (6)$$

where $f_h(y,x)$ and $f_v(y,x)$ are linear gradient filters for horizontal and vertical edge detection, respectively. The '*' denotes the convolution operation. The block-fidelity or spatial video quality measure $Q_s(t)$ defined in equation (1) applies to single pictures or to individual frames of a video sequence. Given a video sequence, a global quality score for the whole sequence can be given according to

$$Q_{s,tot} = \frac{1}{L_v} \sum_{n=0}^{L_v-1} Q_s(nT_v/L_v) \qquad (7)$$

where $L_v$ corresponds to a total number of frames in a given video sequence, while $T_v$ is its total duration in seconds.

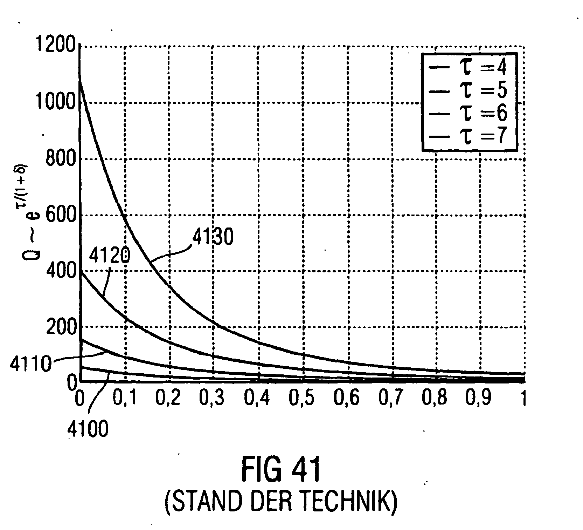

Fig. 41 depicts properties of the block-fidelity measure $Q_s(t)$ given by equation (1). Fig. 41 shows four curves for $Q_s(t)$ depending on $\delta(t)$ with four different values of $\tau$ as parameters. Curve 4100 shows the course of the block-fidelity measure $Q_s(t)$ depending on $\delta(t)$ for $\tau = 4$. Curve 4110 shows the course of $Q_s(t)$ for $\tau = 5$, curve 4120 shows the course of $Q_s(t)$ for $\tau = 6$, and curve 4130 shows the course of a spatial quality measure $Q_s(t)$ for $\tau = 7$.

Ong et al. use simple gradient filters $f_h(y,x)$, $f_v(y,x)$ in their work. Their video quality measure is furthermore constrained to the block-based video coding framework. Furthermore, Ong et al. consider the whole picture or a whole frame of a video sequence as a region of interest. 4 x 4 macro block transitions are considered in the formulation by Ong et al. in order to detect possible blocking effects. Ong et al. sample the high pass filtered masks $o_{h,v}(y,x,t)$ and $d_{h,v}(y,x,t)$ in parallel to the gradient direction, that is horizontal edge masks $o_h(y,x,t)$ and $d_h(y,x,t)$ are sampled vertically, while vertical edge masks $o_v(y,x,t)$ and $d_v(y,x,t)$ are sampled horizontally. Their approach comprises two further measures that aim to catch the properties of the human visual system (HVS). The former are pooled together with the block-fidelity measure in a multiplicative manner. One of the additional measures, the so-called distortion invisibility term, however, is very complex as it incorporates color, spatial and temporal masking. The formulation of the different masking properties features more than 20 degrees of freedom, which appears to be hardly manageable.

Disturbing artifacts like blocking can be detected by the block fidelity or spatial quality measure $Q_s(t)$ as already explained before. It should be noted that the block fidelity measure formulated by Ong et al. inherently detects blurring artifacts, when high-frequency areas that are particularly affected by low pass effects are sampled. If $E_d(t)$ is larger than $E_0(t)$ in equation (2), this indicates that the distorted signal $d(y,x,t)$ has gained some additional edges compared to the original picture $o(y,x,t)$. This may be related to tiling effects in the distorted signal $d(y,x,t)$. On the other hand, if $E_d(t)$ is smaller than $E_0(t)$, it can be assumed that a loss of contrast has occurred between the original signal $o(y,x,t)$ and the distorted signal $d(y,x,t)$. Contrast loss detection properties of the block-fidelity measure by Ong et al. is however limited by the fact that the structural features like object boundaries are not properly sampled by the block-fidelity measure given by Ong et al.

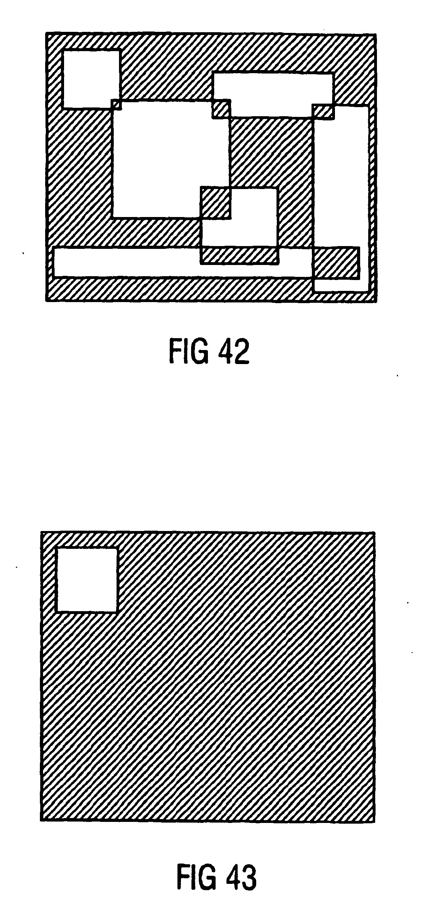

Fig. 42 gives an example of an input image to be analyzed by the block-fidelity measure proposed by Ong et al. It is an artificial picture with sharp object boundaries, that is a high contrast.

Fig. 43 depicts a response obtained by applying Ong et al.'s sampling approach described in equation (8). Sampled images like the one depicted in Fig. 42 are the basis for the block-fidelity measure $Q_s(t)$. It can be seen in Fig. 43 that major structural information is ignored by a measure given by Ong et al., if the former does not match the macro block grid, which will assumingly be the case in most natural images.

As contrast of pictures plays an important role in quality perception, it is desirable to purposely integrate this impairment detection ability into a block-fidelity measure or spatial quality measure $Q_s(t)$. Further, it would be desirable to have a spatial video quality measure that can be applied to overall spatial picture quality assessment as well as to region-of-interests (ROI) impairment evaluations, which could be applied to sub-texture synthesis of images or video sequences.

Texture synthesis can be classified into two fields: rigid and non-rigid texture synthesis. A texture synthesizer for rigid image or video textures divides an incoming video sequence into overlapping groups of pictures (GoP). A first group of picture consists of the first picture of a sequence and the last picture of the group of pictures can a priori be set at an arbitrary distance from the first frame of the group of pictures. The two frames are then used as key frames by the texture synthesizer for rigid textures. Between the key pictures, an arbitrary number of pictures, also called synth pictures in the following, are partially or fully synthesized depending on their content. Samples that cannot be obtained from the key frames are tackled by using a Markovian intra synthesis approach. The texture synthesizer for non-rigid video textures is based on graph-cut techniques. The incoming video sequence is divided into overlapping groups of pictures by the texture synthesis module for non-rigid textures. The first group of pictures consists of a reference burst that temporally precedes the synth burst. The synth burst itself is followed by another reference burst in temporal order. The reference bursts are chosen such that they contain the example textures required to synthesize the synthesis burst, also called synth burst in the following. The length of each burst must be determined depending on the video content.

The international patent application WO 2005/060272 A1 also suggests a motion-activity measure which is incorporated into an overall video quality model. The motion-activity feature measures contributions of the motion in a video sequence to the perceived image quality. In the application WO 2005/060272 A1 a motion-activity measure M is defined according to

$$M = -\sum_{p(d_f)\neq 0} p(d_f)\log_e(p(d_f)),\qquad (8)$$

where

$$p(d_f) = \frac{N(d_f)}{\sum_{\forall d_f} N(d_f)}\qquad (9)$$

and

$$d_f(x,y) = I(x,y,t) - I(x,y,t-1).\qquad (10)$$

I(x,y,t) is the color value of the image I at pixel location I(x,y) and at frame t, I(x,y,t-1) is the color value of the image I at pixel location (x,y) and at frame t-1, $d_f$ is the frame difference value, $N(d_f)$ is the number of occurrence of $d_f$ in the image-pair, and $p(d_f)$ is the probability or relative frequency of $d_f$ appearing in the image-pair.

This motion-activity measure is a global video-quality feature computed from an ensemble of color differences between a pair of consecutive frames, based on the sum, for all differences, of the product of the probability of a particular difference and the logarithm of the probability of the particular difference.

All these conventional video quality measure approaches are disadvantageous as the same require simplification, significant performance improvement and adaptation to the given content-based video coding framework.

It is hence the object of the present invention to provide a concept for determining an image quality measure providing for an improved objective image quality measurement in content-based video coding.

This object is achieved by an apparatus according to claim 1, an apparatus according to claim 11, a method according to claim 13 and a method according to claim 14.

In accordance with a further aspect, the present invention provides a computer program for carrying out the inventive method.

According to a first aspect, the present invention provides an apparatus for determining an image quality measure of an image signal having a vertical resolution of Y lines and a horizontal resolution of X columns on the basis of a reference image signal, having a vertical resolution of Y lines and a horizontal resolution of X columns, the apparatus comprising means for determining a vertical edge image signal representing vertical edges in the image signal, a horizontal edge image signal representing horizontal edges in the image signal, a vertical edge reference image signal representing vertical edges in the reference image signal, and the horizontal edge reference image signal representing horizontal edges in the reference image signal, a means for determining a first mean absolute spatial gradient in the reference image signal based on a first sum of samples of the horizontal edge reference image signal, and a second sum of samples of the vertical edge reference image signal, wherein the samples of the first sum are spaced one line and $\kappa$ columns apart, and the samples of the second sum are spaced $\kappa$ lines and one column apart, and for determining a second mean absolute spatial gradient in the image signal based on a third sum of samples of the horizontal edge image signal, and a fourth sum of samples of the vertical edge image signal, wherein the samples of the third sum are spaced one line and $\kappa$ columns apart in the samples of the fourth sum are spaced $\kappa$ lines and one column apart, and a means for calculating the image quality measure, based on the first and the second mean absolute spatial gradients.

According to a second aspect, the present invention provides an apparatus for determining a spatial quality measure of a video signal having a vertical resolution of Y lines and a horizontal resolution of X columns on the basis of a reference video signal, having a vertical resolution of Y lines and a horizontal resolution of X columns, the apparatus a further apparatus for determining a spatial image quality measure of an image signal, with a plurality of frames of the video sequence, each frame representing an image signal to obtain a plurality of spatial image quality measures, the further apparatus comprising means for determining a vertical edge image signal representing vertical edges in the image signal, a horizontal edge image signal representing horizontal edges in the image signal, a vertical edge reference image signal representing vertical edges in the reference image signal and a horizontal edge reference image signal representing horizontal edges in a reference image signal, means for determining a first mean absolute spatial gradient in the reference image signal based on a first sum of samples of the horizontal edge reference image signal and a second sum of samples of the vertical edge reference image signal, wherein the samples of the first some are spaced one line and $\kappa$ columns apart, and the samples of the second sum are spaced $\kappa$ lines and one column apart, and for determining the second mean absolute spatial gradient in the image signal based on a third sum of samples of the horizontal edge image signal in a forth sum of samples of the vertical edge image signal, wherein the samples of the third sum are spaced one line in $\kappa$ columns apart and the samples of the fourth sum are spaced $\kappa$ lines and one column apart, and means for calculating the image quality measure on a frame basis, based on the first and the second mean absolute spatial gradient and a means for forming the spatial video quality measure on the basis of a plurality of the image quality measures referring to single frames of the video sequence.

Thus, in accordance with preferred embodiments, a novel video quality measure is provided that allows proper sampling of object boundaries in an image signal or a video signal. The inventive approach samples high pass-filtered edge masks orthogonal to gradient directions, that is horizontal edge masks are sampled horizontally, while vertical edge masks are sampled vertically. By doing so, contrasts of pictures, which plays an important role in quality perception, is integrated in the impairment detection ability of the inventive video quality measure.

According to a preferred embodiment of the present invention, the means for determining the vertical edge image signal, the horizontal edge image signal, the vertical edge reference image signal and the horizontal edge reference image signal is adapted to perform gradient filtering with sophisticated gradient filters like Sobel matrix filters. Thereby robustness against spurious edges can be achieved. The selected edge detector filter according to the preferred embodiment is linear and unisotropic and approximates the gradient of local luminance. A Sobel filter matrix has smoothing abilities, which makes it relatively insensitive to noise.

An example provides an apparatus for determining a temporal video quality measure of a video signal based on a reference video signal, both of which have two spatial dimensions and a temporal dimension, the apparatus comprising means for performing unisotropically gradient filtering on a plurality of first slices of a video signal having a temporal extension and a first spatial extension for a first predetermined edge orientation having a non-zero spatial component to obtain a first filtered signal extending in the two spatial dimensions and the temporal dimension, and on a plurality of second slices of the video signal having a temporal extension and a second spatial extension perpendicular to the first spatial extension for a second predetermined edge orientation having a non-zero spatial component to obtain a second filtered signal extending in the two spatial dimensions and the temporal dimension, as well as on a plurality of first slices of a reference video signal having the temporal extension and the first spatial extension for the first predetermined edge orientation having the non-zero spatial component to obtain a third filtered signal extending in the two spatial dimensions and the temporal dimension, and on a plurality of second slices of the reference video signal having the temporal extension and the second spatial extension for the second predetermined edge orientation to obtain a fourth filtered signal extending in the two-spatial dimensions and the temporal dimension, means for, in the two spatial dimensions, for at least one predetermined time instant, performing a sum on summands comprising samples of the first filtered signal, a sum on summands comprising samples of the second filtered signal, a sum on summands comprising samples of the third filtered signal, and a sum on summands comprising samples of the fourth filtered signal, respectively, in order to obtain a first, a second, a third, and a fourth mean absolute temporal gradient and means for calculating the video quality assessment measure based on a first, second, third, and forth mean absolute temporal gradient.

A further example, allows for evaluating motion properties of portions of synthetic textures in images or a video sequence by matching them with the motion properties of their original counterparts. This is carried out by detecting possible motion inconsistencies based on temporal gradients.

In the following, preferred embodiments of the present invention will be described with respect to the accompanying drawings, in which:

Fig. 1     shows a principle block diagram of an apparatus for determining a spatial image quality measure according to an embodiment of the present invention;

Fig. 2     shows a flow chart relating to an exemplary process in the operation of the apparatus of Fig. 1;

Fig. 3     shows a detailed block diagram of an apparatus for determining a spatial image quality measure according to a preferred embodiment of the present invention;

Fig. 4      shows a flow chart relating to an exemplary process in the operation of the apparatus of Fig. 3, according to an embodiment of the present invention;

Fig. 5      shows an example for accurate sampling of structural information of an image signal by the spatial image quality measure according to an embodiment of the present invention;

Fig. 6      shows an example of accurate sampling of structural information and macro block transitions of an image signal by the spatial image quality measure according to an embodiment of the present invention;

Fig. 7      shows a principle block diagram of an apparatus for determining a temporal video quality measure of a video signal based on a reference video signal, according to an embodiment;

Fig. 8      shows a flow chart relating to an exemplary process in the operation of the apparatus of Fig. 7;

Fig. 9      shows a detailed block diagram of an apparatus for determining a temporal video quality measure according to another embodiment;

Fig. 10     shows a flow chart relating a an exemplary process in the operation of the apparatus of Fig. 9, according to an embodiment of the present invention;

Fig. 11     principally shows first slices of a video signal having a temporal extension and a first spatial extension and second slices of the video signal having a temporal extension and a second spatial extension, according to another embodiment;

Fig. 12     shows a temporal unisotropic gradient filtering example of two consecutive pictures of a "canoe" video sequence, according to another embodiment;

Fig. 13     shows a schematic block diagram of an apparatus for determining a spatial video quality measure and a temporal video quality measure, according to an embodiment of the present invention;

Fig. 14     shows example key frames of test sequences provided by MPEG;

Fig. 15     shows a diagram depicting subjective differential mean opinion scores plotted over bit rates;

Fig. 16     shows example key frames of test sequences used for an evaluation of the efficiency of the inventive video quality measures with respect to texture synthesis artifacts;

Fig. 17     shows linear regression results for the inventive video quality measure and a first ground truth set;

Fig. 18     shows linear regression results for the inventive spatial video quality measure and a second ground truth set;

Fig. 19     shows linear regression results for PSNR and the first ground truth set;

Fig. 20     shows linear regression results for PSNR and the second ground truth set;

Fig. 21     shows linear regression results for NTIAs general video quality measure and the first ground truth set;

Fig. 22     shows linear regression results for the NTIA general video quality measure and the second ground truth set;

Fig. 23     shows Pearson's correlation coefficients achieved for evaluated video quality measures;

Fig. 24     shows Spearman's correlation coefficients achieved for evaluated video quality measures;

Fig. 25     shows a key frame of a "Tempete" sequence and its corresponding high pass filtered version;

Fig. 26     shows linear regression results for the inventive video spatial quality measure and the second ground truth set including a "Tempete" sequence;

Fig. 27    shows a complexity evaluation of relevant video quality assessors;

Fig. 28    shows spatial artifacts related to rigid texture synthesis in a "concrete" video sequence;

Fig. 29    shows spatial artifacts related to covering and uncovering effects in a "Husky" video sequence;

Fig. 30    shows spatial artifacts related to covering and uncovering effects and handled with Markovian intra-synthesis post-processing;

Fig. 31    shows subjectively annoying temporal artifacts in the "concrete" video sequence and a corresponding quality score;

Fig. 32    shows temporal gradients measured for a reference and an impaired video sequence and a corresponding difference signal;

Fig. 33    shows subjectively non-annoying temporal transitions in the "concrete" video sequence and corresponding quality score;

Fig. 34    shows temporal gradient measures for a reference and an impaired video sequence and corresponding difference signal;

Fig. 35    shows subjectively annoying spatio-temporal artifacts in a "Rain" video sequence and corresponding quality scores;

Fig. 36    shows quality scores for synthetic video sequences with and without noticeable impairments;

Fig. 37    shows an exemplary threshold selection for rigid texture synthesis scenario, according to an embodiment of the present invention;

Fig. 38    shows quality scores for synthetic video sequences with and without noticeable impairments (non-rigid textures);

Fig. 39    shows a threshold selection for non-rigid texture scenarios, according to an embodiment of the present invention;

Fig. 40    shows examples of digital video impairments (blocking or tiling, blurring artifacts);

Fig. 41    shows principle properties of a block-fidelity measure;

Fig. 42    shows an example of an input image to be analyzed; and

Fig. 43    shows an inaccurate sampling of structural information by the block-fidelity measure proposed by Ong et al.

Where the same reference numbers appear in more than one figure, they are being referred to the same components and should be understood accordingly.

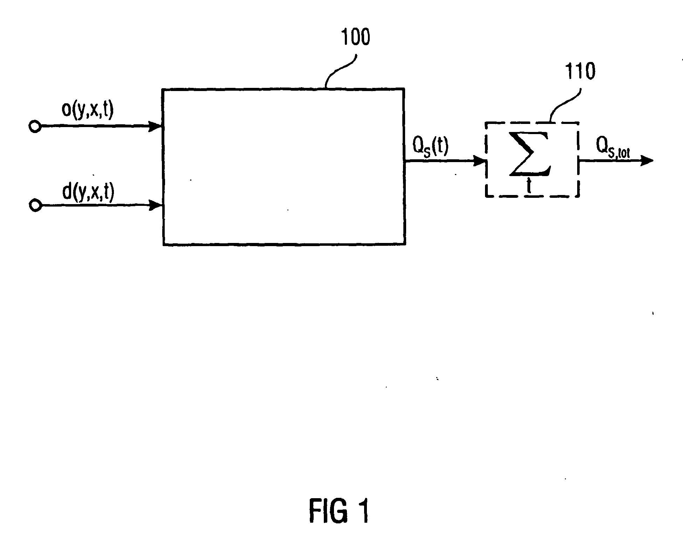

Fig. 1 shows a principle block diagram of an apparatus 100 for determining a spatial image quality measure $Q_s(t)$ of an image signal $d(y,x,t)$ having a vertical resolution of Y lines and a horizontal resolution of X columns on the basis of a reference image signal $o(y,x,t)$ having a vertical resolution of Y lines and a horizontal resolution of X columns.

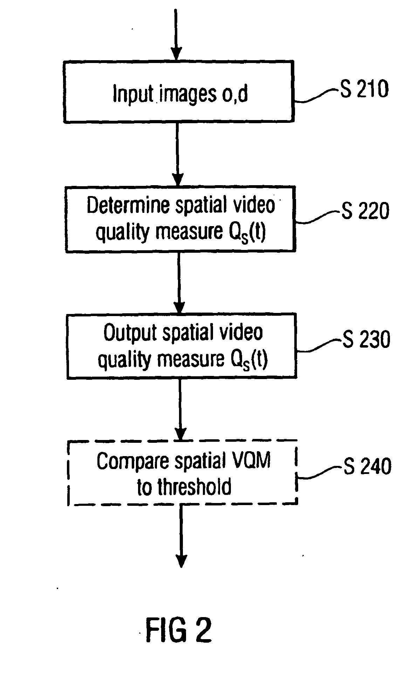

An exemplary process in the operation of the apparatus according to Fig. 1 is described with reference to Fig. 2.

The image signal or a distorted image signal $d(y,x,t)$, corresponding to an image whose quality is to be determined, is input together with the reference image signal $o(y,x,t)$ in a first step S210 to the apparatus 100 for determining the spatial image quality measure $Q_s(t)$ for a given time instant t. On the basis of the image signal $d(y,x,t)$ and the reference image signal $o(y,x,t)$ the apparatus 100 determines the spatial image quality measure $Q_s(t)$ of the image signal in a second step S220. In a third step 230, the spatial image quality measure $Q_s(t)$ is output from the apparatus 100 for further processing.

According to an embodiment of the present invention, the spatial image quality measure $Q_s(t)$ can be compared to a threshold in order to be able to decide whether the quality of the decompressed image signal d(y,x,t) meets certain objective requirements. If $Q_s(t)$ is below a predefined threshold, an underlying image compression method can, for example, be repeated or changed in order to obtain a better video quality.

If the image signal at the given time instant t belongs to a video signal or a video sequence and the time instant t refers to a single frame of the video sequence $Q_s(t)$ can be averaged according to equation (7) to obtain a global video quality score $O_{s,tot}$, defined for the entire video sequence. This optional accumulation for averaging of $Q_s(t)$ for all frames of an entire video sequence is indicated by block 110 in Fig. 1.

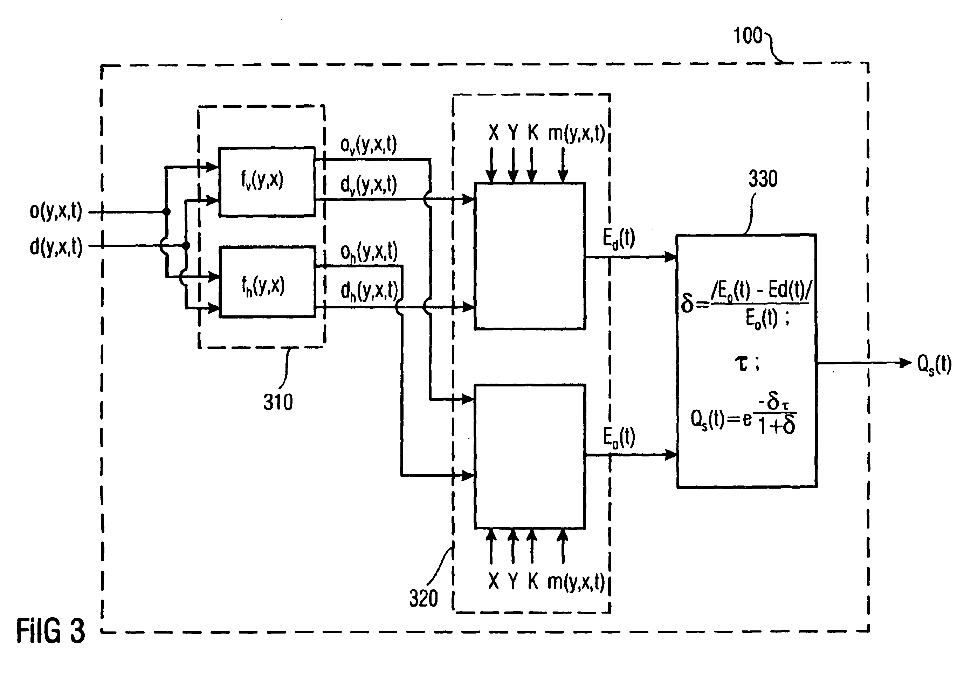

Fig. 3 shows a more detailed block diagram of the apparatus 100 for determining the spatial image quality measure $Q_s(t)$ according to an embodiment of the present invention.

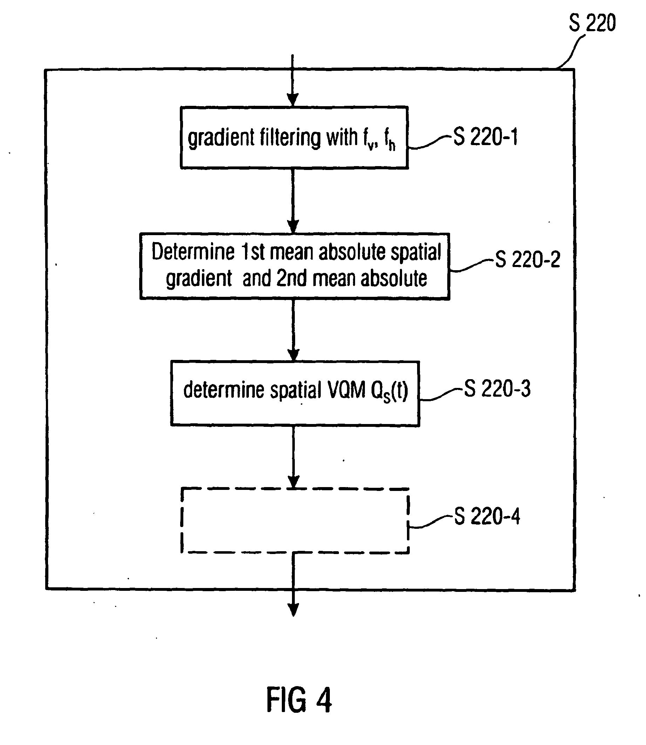

An exemplary process in the operation of the apparatus according to Fig. 3 is described with reference to Fig. 4.

The apparatus 100 comprises a means 310 for, in a step S220-1, determining a vertical edge image signal $d_v$(y,x,t) representing vertical edges in the image signal d(y,x,t), a horizontal edge image signal $d_h$(y,x,t) representing horizontal edges in the image signal d(y,x,t), a vertical edge reference image signal $o_v$(y,x,t) representing vertical edges in the reference image signal o(y,x,t) and a horizontal edge reference image signal $o_h$(y,x,t) representing also horizontal edges in the reference image signal o(y,x,t).

The means 310 is further connected with a means 320 for, in a step S220-2, determining a first mean absolute spatial gradient $E_0(t)$ in the reference image signal o(y,x,t) based on a first sum of samples of the horizontal edge reference image signal $o_h$(y,x,t) and a second sum of samples of the vertical edge reference image signal $o_v$(y,x,t), wherein the samples of the first sum are spaced one line and $\kappa$ columns apart, and the samples of the second sum are spaced $\kappa$ lines and one column apart. The means 320 further determines a second mean absolute spatial gradient $E_d$(t) in the image signal d(y,x,t) based on a third sum of samples of the horizontal edge image signal $d_h$(y,x,t) and a fourth sum of samples of the vertical edge image signal $d_v$(y,x,t), wherein the samples of the third sum are spaced one line and $\kappa$ columns apart and the samples of the fourth sum are spaced $\kappa$ lines and one column apart.

Further, the means 320 is connected to a means 330 for, in a step S220-3, calculating the spatial image quality measure $Q_s(t)$ based on the first $E_0(t)$ and the second absolute spatial gradient $E_d(t)$.

In step S220-1 the original or reference image signal o(y,x,t) and the distorted image signal d(y,x,t) are input to means 310 in order to get the high pass filtered original $o_{h,v}$(y,x,t) and distorted signals $d_{h,v}$(y,x,t), respectively, according to

$$d_h(y,x,t) = d(y,x,t) * f_h(y,x) \quad \wedge \quad o_h(y,x,t) = o(y,x,t) * f_h(y,x) \qquad (11)$$

and

$$d_v(y,x,t) = d(y,x,t) * f_v(y,x) \quad \wedge \quad o_v(y,x,t) = o(y,x,t) * f_v(y,x) . \qquad (12)$$

$f_h$(y,x) is a linear gradient filter for horizontal edge detection, while $f_v$(y,x) is a linear gradient filter for vertical edge detection. According to a preferred embodiment $f_h$(y,x) corresponds to a Sobel filter matrix according to

$$f_h(y,x) = \begin{pmatrix} 0,25 & 0,5 & 0,25 \\ 0 & 0 & 0 \\ -0,25 & -0,5 & -0,25 \end{pmatrix}, \qquad (13)$$

and $f_v$(y,x) corresponds to a Sobel filter matrix according to

$$f_v(y,x) = \begin{pmatrix} -0,25 & 0 & 0,25 \\ -0,5 & 0 & 0,5 \\ -0,25 & 0 & 0,25 \end{pmatrix} \qquad (14)$$

Sobel filters are preferred, according to embodiments of the present invention, to achieve robustness against spurious edges. The selected edge detectors $f_h(y,x)$ and $f_v(y,x)$ are linear and unisotropic and approximate the gradients of local luminance of an image. Sobel filters have smoothing abilities, which make them relatively insensitive to noise.

It shall be noted that, of course, also the gradient filters like, for example, Prewitt gradient filters can be used and that the present invention is not limited to the usage of Sobel-like gradient filters.

After the filtering operation in step S220-1 by means 310, the high pass filtered vertical edge image signal $d_v(y,x,t)$, horizontal edge image signal $d_h(y,x,t)$, vertical edge reference image signal $o_v(y,x,t)$, and horizontal edge reference image signal $o_h(y,x,t)$ are available and input, in a second step S220-2, to the means 320 for determining the first mean absolute spatial gradient $E_0(t)$ and the second mean absolute spatial gradient $E_d(t)$. The means 320 determines the first mean absolute spatial gradient $E_0(t)$ according to

$$E_o(t) = \frac{1}{(\frac{X}{\kappa}-1)Y} \sum_{y=1}^{Y} \sum_{x=1}^{\frac{X}{\kappa}-1} |o_h(y,\kappa x,t)| \cdot m(y,x,t) + \frac{1}{(\frac{Y}{\kappa}-1)X} \sum_{y=1}^{\frac{Y}{\kappa}-1} \sum_{x=1}^{X} |o_v(\kappa y,x,t)| \cdot m(y,x,t) \qquad (15)$$

and the second mean absolute spatial gradient $E_d(t)$ according to

$$E_d(t) = \frac{1}{(\frac{X}{\kappa}-1)Y} \sum_{y=1}^{Y} \sum_{x=1}^{\frac{X}{\kappa}-1} |d_h(y,\kappa x,t)| \cdot m(y,x,t) + \frac{1}{(\frac{Y}{\kappa}-1)X} \sum_{y=1}^{\frac{Y}{\kappa}-1} \sum_{x=1}^{X} |d_v(\kappa y,x,t)| \cdot m(y,x,t) .$$

$$(16)$$

Here, $m(y,x,t)$ denotes a binary mask that defines regions of interest in the images, respectively. Its components are set to "1" if such a region is given and to "0" otherwise. If a complete image is considered, the binary mask $m(y,x,t)$ can be omitted in above equations. Y and X denote the height and the width of the image signals, respectively. $\kappa$ corresponds to a $\kappa$ x $\kappa$ macro-block size. According to an embodiment of the present invention $\kappa$ is chosen to 16. However, embodiments of the present invention are not limited to this value and in principle arbitrary integer values for $\kappa$ can be chosen, e.g. $1 \le \kappa \le 128$.

In contrast to the first and second mean absolute spatial gradients proposed by Ong et al., where the sampling of the edge masks $o_v(y,x,t)$, $d_v(y,x,t)$, $o_h(y,x,t)$, $d_h(y,x,t)$ is performed in parallel to the gradient's direction, respectively, the sampling of the edge masks according to the inventive method is performed orthogonally to the gradient's direction. That is horizontal edge masks $O_h(y,x,t)$, $d_h(y,x,t)$ are sampled horizontally, while vertical edge masks $o_v(y,x,t)$, $d_v(y,x,t)$ are sampled vertically.

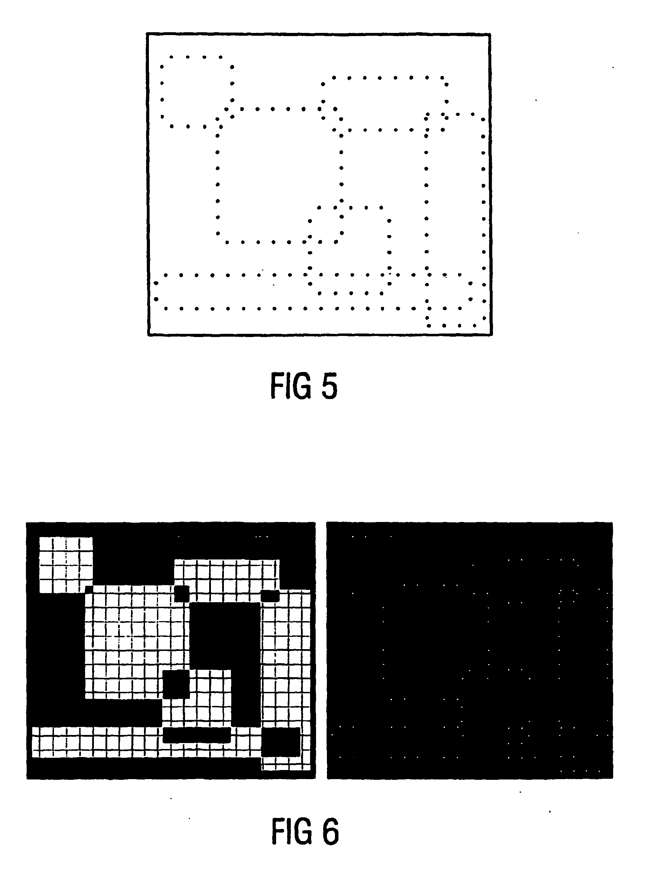

The inventive method allows for a better preservation of object boundaries, which are in general particularly important for subjective quality perception. Given again the example of an input image to be analyzed according to Fig. 42, Fig. 5 shows the impact of the inventive sampling method of structure information. As can be seen, equations (15) and (16) lead to the depicted blocking detection feature points in Fig. 5. Object boundaries are better preserved by the inventive approach compared to the approach of Ong et al.

Notice, that due to a purposeful inclusion of object boundary samples into a set of feature points used for determining the spatial image quality measure $Q_s(t)$, not only can tiling effects be detected by the inventive measure but also distortions affecting object boundaries. Hence, the block-fidelity measure by Ong et al. is being generalized by the inventive approach to achieve a simple, generic impairment detection tool.

An example for the purposeful inclusion of boundary samples into the set of feature points is given in Fig. 6. Fig. 6 shows an example for accurate sampling of structural information and macro block transitions by the inventive spatial image quality measure.

Spatial and temporal masking or facilitation effects are important HVS properties that account for stimuli interactions. These HVS features, in fact, explain why a given impairment is more or less annoying in the presence of different textures. That is, masking and facilitation effects give insight into elevation or reduction of visibility thresholds in the presence of spatial or temporal discontinuities.

According to an embodiment of the present invention, the vertical edge image signal $d_v(y,x,t)$, the horizontal edge image signal $d_h(y,x,t)$, the vertical edge reference signal $o_v(y,x,t)$, and the horizontal edge reference image signal $o_h(y,x,t)$ are weighted with an object contour matrix $C(y,x,t)$ to obtain a weighted vertical edge image signal $d_v(y,x,t)$, a weighted horizontal edge image signal $d_h'(y,x,t)$, a weighted vertical edge reference image signal $o_v'(y,x,t)$ and a weighted horizontal edge reference image signal $o_h'(y,x,t)$. According to an embodiment of the present invention the object contour matrix C is determined from the original signals according to

$$C(y,x,t) = \frac{|o_v(y,x,t)| + |o_h(y,x,t)| + |o_{45}(y,x,t)| + |o_{135}(y,x,t)|}{4}, \qquad (17)$$

where $o_{45*}(y,x,t)$ and $o_{135*}(y,x,t)$ are determined according to

$$o_{45*}(y,x,t) = o(y,x,t) * f_{45*}(y,x) \quad \wedge \quad o_{135*}(y,x,t) = o(y,x,t) * f_{135*}(y,x) \qquad (18)$$

with $f_{45*}(y,x)$ being a linear gradient filter for 45° diagonal edges according to

$$f_{45*}(y,x) = \begin{pmatrix} -0,5 & -0,25 & 0 \\ -0,25 & 0 & 0,25 \\ 0 & 0,25 & 0,5 \end{pmatrix} \qquad (19)$$

and $f_{135*}(y,x)$ being a linear gradient filter for 135° diagonal edges according to

$$f_{135*}(y,x) = \begin{pmatrix} 0 & 0,25 & 0,5 \\ -0,25 & 0 & 0,25 \\ -0,5 & -0,25 & 0 \end{pmatrix}. \qquad (20)$$

The enhancement of object boundaries via the contour matrix C(y,x,t) can now be formulated as

$$d_h(y,x,t) = \big(d(y,x,t) * f_h(y,x)\big)C(y,x,t) \wedge o_h(y,x,t) = \big(o(y,x,t) * f_h(y,x)\big)C(y,x,t) \qquad (21)$$

and

$$d_v(y,x,t) = \big(d(y,x,t) * f_v(y,x)\big)C(y,x,t) \wedge o_v(y,x,t) = \big(o(y,x,t) * f_v(y,x)\big)C(y,x,t). \qquad (22)$$

This enhanced block fidelity formulation assumes that objects and particularly their boundaries are of salient relevance for subjective quality perception. Hence, locations featuring spatial discontinuities are assigned a high weight, while other locations are assigned low weights. Note that this impairment detector fails, however, if a noisy source signal is given, where object contours cannot be properly identified.

Spatial impairments due to texture synthesis typically occur at transitions between original and synthetic textures in the shape of spurious edges. Hence, the enhanced block-fidelity or spatial image quality measure according to embodiments of the present invention for spatial artifact detection is applied exclusively in those transitions. This is achieved via an adequate initialization of the binary mask defined in equations (15) and (16).

Once, the first mean absolute spatial gradient $E_o(t)$ and the second mean absolute spatial gradient $E_d(t)$ have been determined by the means 320 in the step S220-2 the overall spatial impairment score $Q_s(t)$ is obtained by

$$Q_s(t) = e^{-\frac{\delta(t)\tau}{1+\delta(t)}}$$

(23)

with

$$\delta(t) = \frac{\left| E_o(t) - E_d(t) \right|}{E_o(t)}$$

(24)

by the means 330 for calculating the image quality measure $Q_s(t)$ based on the first $E_o(t)$ and the second mean absolute spatial gradient $E_d(t)$ in step S220-3. According to embodiments of the present invention, $\tau$ can be chosen to lie in the range $0 < \tau < 50$.

If not only a spatial image quality measure of a single image shall be computed, but a total spatial video quality measure of a video sequence, this can optionally be achieved by a fourth step S220-4 by computing the total spatial video quality measure, defined for an entire video sequence, according to equation (11). Pictures that have not been processed by texture synthesizers are not considered for quality estimation as they perfectly match the original signal $o(y,x,t)$ and what bias the measured potential loss of quality through synthesis.

In digital video images not only spatial artifacts but also temporal artifacts, like jerky motion, are also important for subjective video quality perception. Hence, a temporal video quality measure for temporal distortions is proposed.

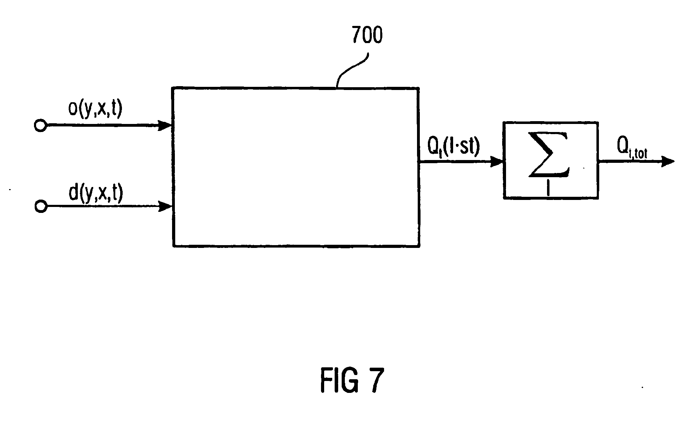

Fig. 7 shows an apparatus 700 for determining a temporal video quality measure $Q_t(t)$ of a video signal $d(y,x,t)$ based on a reference video signal $o(y,x,t)$, both of which have two spatial dimensions and a temporal dimension t.

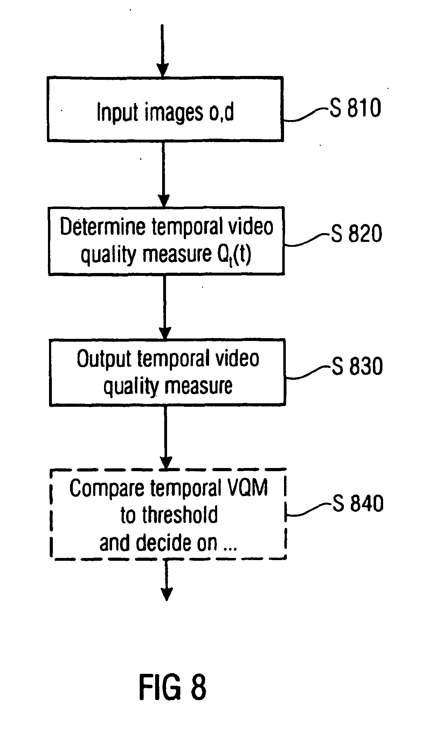

An exemplary process in the operation of the apparatus of Fig. 7 is described with reference to Fig. 8.

A video signal or a distorted video signal $d(y,x,t)$ corresponding to a video signal whose quality is to be measured and a reference video signal $o(y,x,t)$ are input, in a first step S810, to the apparatus 700 for determining the temporal video quality measure $Q_t(t)$. In a second step S820 the apparatus 700 determines the temporal video quality measure $Q_t(t)$ for at least one predetermined time instant t. In a third step S830, the temporal video quality measure $Q_t(t)$ is output from the apparatus 700 for further optional processing.

The further optional processing in step 740 could comprise a comparison of the temporal video quality measure $Q_t(t)$ to a predefined threshold. According to another embodiment, the optional step S740 could comprise an accumulation of determined temporal video quality measures $Q_t(t)$ for a whole video sequence according to

$$Q_{t,pa} = \frac{1}{L_v - 1} \sum_{l=0}^{L_v-1} Q_t(l\Delta t) ,$$

(25)

with $\Delta t = 1/f_s$ being the temporal difference between to consecutive frames and $f_s$ being the frame rate of the video sequence.

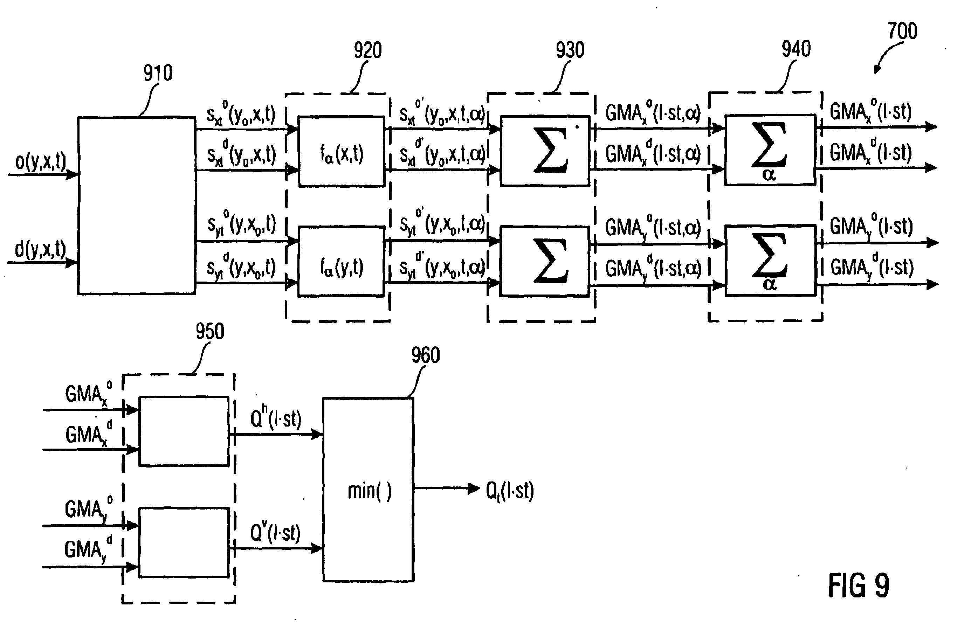

Fig. 9 shows a more detailed block diagram of the apparatus 700 for determining the temporal video quality measure $Q_t(t)$ according to an embodiment.

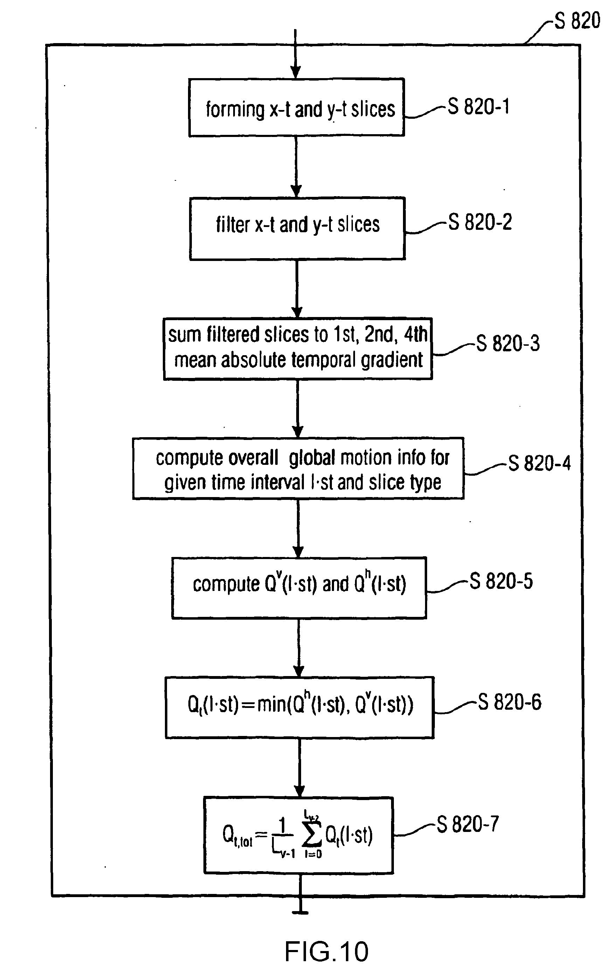

An exemplary process in the operation of the apparatus of Fig. 9 is described with reference to Fig. 10.

The apparatus 700 comprises a means 910 for forming, in a first step S820-1, a plurality of first slices of the video signal $d(y,x,t)$ having a temporal extension and a first spatial extension in the horizontal direction, a plurality of second slices of the video signal $d(y,x,t)$ having the temporal extension and a second spatial extension in the vertical direction, third slices of the reference video signal $o(y,x,t)$ having the temporal extension and the first spatial extension in the horizontal direction and for forming a plurality of fourth slices of the reference video signal $o(y,x,t)$ having the temporal extension and the second spatial extension in the vertical direction.

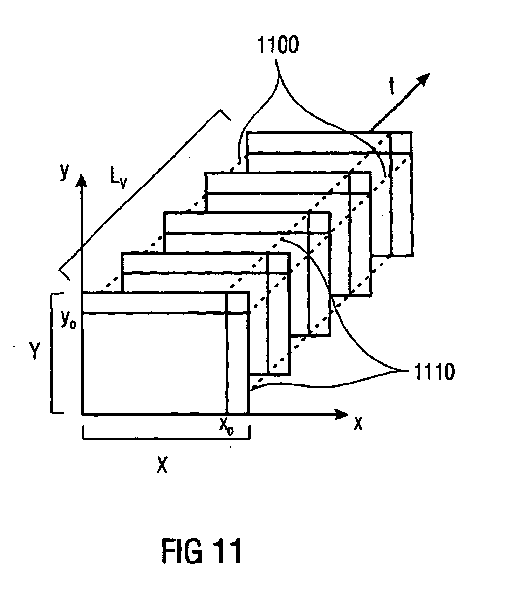

The inventive temporal video quality measure Qt(t) comprises the evaluation of motion properties of synthesized textures by matching them with motion properties of their original counterparts. This is carried out by detecting possible motion inconsistencies based on temporal gradients. For that, the first slices $s_{xt}^d(y_0,x,t)$ of the distorted signal, the second slices $s_{yt}^d(y,x_0,t)$ of the distorted signal, the third slices $s_{xt}^o(y_0,x,t)$ of the original signal, the fourth slices $s_{yt}^o(y,x_0,t)$ of the original signal are defined. These slices are exemplarily depicted in Fig. 11.

Fig. 11 shows a sequence of frames of a video sequence with a first slice $s_{xt}{}^d(y_0,x,t)$ 1100 of the video signal $d(y,x,t)$ having a temporal extension and the first spatial extension in x-direction (x-t-slice). Further, Fig. 11 shows a second slice $s_{yt}{}^d(y,x_0,t)$ 1110 of the video signal $d(y,x,t)$ having a temporal extension and the second spatial extension in y-direction (y-t slice).

In any case, the first, second, third and fourth slices do have the temporal extension t as potential temporal distortions are to be detected by the inventive temporal video quality measure.

Further, the apparatus 700 depicted in Fig. 9 comprises a means 920 for performing, in a step S820-2, an unisotropical gradient filtering on the plurality of first slices $s_{xt}{}^d$ of the video signal $d(y,x,t)$ having the temporal extension and the first spatial extension (x-t slice) for a first predetermined edge orientation $\alpha_1$ having a non-zero spatial component to obtain a first filtered signal $s_{xt}{}^{d,}(y_0,x,t,\alpha_1)$ extending in the two spatial dimensions (x,y) and the temporal dimension (t), and on a plurality of second slices $s_{yt}{}^d$ of the video signal $d(y,x,t)$ having the temporal extension and a second spatial extension (y-t slice) perpendicular to the first spatial extension for a second predetermined edge orientation $\alpha_2$ having a non-zero spatial component to obtain a second filtered signal $S_{yt}{}^d(y,x_0,t,\alpha_2)$ extending in the two spatial dimensions (x,y) and the temporal dimension (t), as well as on a plurality of third slices $s_{xt}{}^o$ of the reference video signal $o(y,x,t)$ having the temporal extension and the first spatial extension for the first predetermined edge orientation $\alpha_1$ having the non-zero spatial component to obtain a third filtered signal $S_{xt}{}^{o'}(y_0,x,t,\alpha_1)$ extending in the two spatial dimensions and the temporal dimension, and on a plurality of second slices $s_{yt}{}^o$ of the reference video signal $o(y,x,t)$ having the temporal extension and the second spatial extension for the second predetermined edge orientation $\alpha_2$ to obtain a fourth filtered signal $S_{yt}{}^{o'}(y,x_0,t,\alpha_2)$ extending in the two spatial dimensions and the temporal dimension.

The unisotropical gradient filtering performed in step S820-2 can be formalized according to

$$s_{yt}^{d}{'}(y,x_0,t,\alpha_2)=s_{yt}^{d}(y,x_0,t)*f_{\alpha_2}(y,t) \quad \wedge \quad s_{xt}^{d}{'}(y_0,x,t,\alpha_1)=s_{xt}^{d}(y_0,x,t)*f_{\alpha_1}(x,t)$$

and

$$s_{yt}^{o}{'}(y,x_0,t,\alpha_2)=s_{yt}^{o}(y,x_0,t)*f_{\alpha_2}(y,t) \quad \wedge \quad s_{xt}^{o}{'}(y_0,x,t,\alpha_1)=s_{xt}^{o}(y_0,x,t)*f_{\alpha_1}(x,t)\acute{} \ ,$$

$$(27)$$

where $s_{yt}{}^d$ and $s_{yt}{}^o$ represent y-t slices at a fixed abscissa location $x_0$, respectively. $s_{xt}{}^d$ and $s_{xt}{}^o$ can be interpreted correspondingly. $f_\alpha$ is a linear, unisotropic gradient filter for a preferred edge orientation of $\alpha$ degrees. As mentioned before, $s_{yt}{}^{d'}$, $s_{yt}{}^o$, and $s_{yt}{}^{d'}$, $s_{yt}{}^{o'}$ correspond to the filtered slices, respectively.

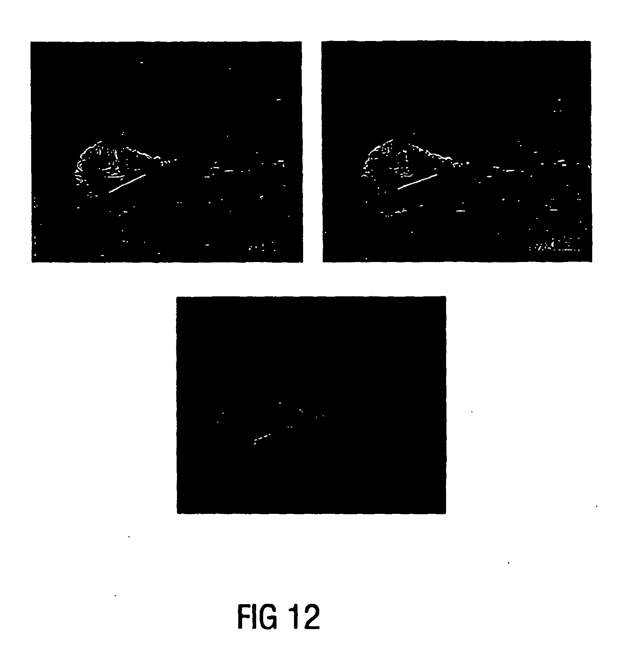

Fig. 12 depicts the latter filtered slices, each filtered for both main diagonal edge orientations, that is 45° and 135°, applied on a "canoe" video signal. I.e. the following filtered slices are obtained:

$$s_{yt}^{d}{}'(y,x_0,t,45°) = s_{yt}^{d}(y,x_0,t) * f_{45*}(y,t),$$

$$s_{yt}^{d}{}'(y,x_0,t,135°) = s_{yt}^{d}(y,x_0,t) * f_{135*}(y,t),$$

$$s_{xt}^{d}{}'(y_0,x,t,45°) = s_{xt}^{d}(y_0,x,t) * f_{45*}(x,t),$$

$$s_{xt}^{d}{}'(y_0,x,t,135°) = s_{xt}^{d}(y_0,x,t) * f_{135*}(x,t),$$

$$s_{yt}^{o}{}'(y,x_0,t,45°) = s_{yt}^{o}(y,x_0,t) * f_{45*}(y,t),$$

$$s_{yt}^{o}{}'(y,x_0,t,135°) = s_{yt}^{o}(y,x_0,t) * f_{135*}(y,t),$$

$$s_{xt}^{o}{}'(y_0,x,t,45°) = s_{xt}^{o}(y_0,x,t) * f_{45*}(x,t),$$

$$s_{xt}^{o}{}'(y_0,x,t,135°) = s_{xt}^{o}(y_0,x,t) * f_{135*}(x,t), \tag{28}$$

with $f_{45*}(\cdot,t)$ being

$$f_{45*}(\cdot,t) = \begin{pmatrix} -1 & 0 \\ 0 & 1 \end{pmatrix} \tag{29}$$

and $f_{135*}(\cdot,t)$ being

$$f_{135*}(\cdot,t) = \begin{pmatrix} 0 & -1 \\ 1 & 0 \end{pmatrix}. \tag{30}$$

The "canoe" video signal features a large global translational motion in x-direction and local motion of the canoeist. The two pictures on top of Fig. 12 show two consecutive frames of the "canoe" video sequence, while the picture at the bottom of Fig. 12 shows a temporal filtering example of the two consecutive frames. It can be seen that salient locations that feature higher motion activity are brighter than such with less motion.

The means 920 is connected to means 930 for, in the two spatial dimensions (x,y), for at least one predetermined time instant $l\Delta t$, in a step S820-3, performing a sum on summands comprising samples of the first filtered slices $s_{xt}^{d}{}'$, sum on summands comprising samples of the second filtered slices $s_{yt}^{d}{}'$, a sum on summands comprising samples of the third filtered slices $s_{xt}^{o}{}'$, and a sum on summands comprising samples of the fourth filtered slices $s_{yt}^{o}{}'$, respectively, in order to obtain a first mean absolute temporal gradient $GMA_x^{d}(l\Delta t,\alpha)$, a second mean absolute temporal gradient $GMA_y^{d}(l\Delta t,\alpha)$, a third mean absolute temporal gradient $GMA_x^{o}(l\Delta t,\alpha)$, and a fourth mean absolute temporal gradient $GMA_y^{o}(l\Delta t,\alpha)$. The first, second, third and fourth mean absolute temporal gradients can be computed according to

$$GMA_x^d(\Delta t, \alpha) = \frac{1}{K} \sum_{x=1}^{X} \sum_{y=1}^{Y} \left| s_{xt}^d{}'(y, x, \Delta t, \alpha) \right| \cdot m(y, x, \Delta t) ,$$

$$GMA_y^d(\Delta t, \alpha) = \frac{1}{K} \sum_{x=1}^{X} \sum_{y=1}^{Y} \left| s_{yt}^d{}'(y, x, \Delta t, \alpha) \right| \cdot m(y, x, \Delta t) ,$$

$$GMA_x^o(\Delta t, \alpha) = \frac{1}{K} \sum_{x=1}^{X} \sum_{y=1}^{Y} \left| s_{xt}^o{}'(y, x, \Delta t, \alpha) \right| \cdot m(y, x, \Delta t) ,$$

$$GMA_y^o(\Delta t, \alpha) = \frac{1}{K} \sum_{x=1}^{X} \sum_{y=1}^{Y} \left| s_{yt}^o{}'(y, x, \Delta t, \alpha) \right| m(y, x, \Delta t) , \qquad (31)$$

with $K \le X \cdot Y$ and $\Delta t = t - (t - 1/f_s)$. $m(y,x,l\Delta t)$ represents a binary mask that is set at locations of interest, as already mentioned before. K is a number of samples set in the binary mask and $f_s$ is the frame rate of the video signal, respectively. Note that boundary issues in preceding filtering operations are neglected. The mean

absolute temporal gradients or directional global motion information $GMA_x^d(l\Delta t, \alpha)$, $GMA_y^d(l\Delta t, \alpha)$, $GMA_x^o(l\Delta t, \alpha)$ and $GMA_y^o(l\Delta t, \alpha)$ for the predetermined time instant $l\Delta t$ and edge orientation $\alpha$ can be seen as a mean motion activity at the transition between two consecutive frames.

According to an embodiment of the present invention, the overall global motion information for a given time instant $l\Delta t$ and slice type can now be formulated according to

$$GMA_x^d(l\Delta t) = \frac{1}{P} \sum_{p=1}^{P} GMA_x^d(l\Delta t, \alpha_p) ,$$

$$GMA_y^d(l\Delta t) = \frac{1}{P} \sum_{p=1}^{P} GMA_y^d(l\Delta t, \alpha_p) ,$$

$$GMA_x^o(l\Delta t) = \frac{1}{P} \sum_{p=1}^{P} GMA_x^o(l\Delta t, \alpha_p) ,$$

$$GMA_y^o(l\Delta t) = \frac{1}{P} \sum_{p=1}^{P} GMA_y^o(l\Delta t, \alpha_p) , \qquad (32)$$

where P corresponds to a number of considered edge orientations $\alpha_p$.

According to embodiments of the present invention the determination of the overall global motion information for a given time interval and slice type is performed in means 940 of the apparatus 700 in step S820-4.

The temporal video quality measure for a given time interval $\Delta t$ and slice type can now be determined according to

$$Q^v(l\Delta t) = \frac{e^{\frac{\tau}{1+\delta_v}}}{e^{\tau}}, \qquad (33)$$

$$Q^h(l\Delta t) = \frac{e^{\frac{\tau}{1+\delta_h}}}{e^{\tau}} \qquad (34)$$

with

$$\delta_v = \frac{\left|GMA_y^o(l\Delta t) - GMA_y^d(l\Delta t)\right|}{GMA_y^o(l\Delta t)}, \qquad (35)$$

$$\delta_h = \frac{\left|GMA_x^o(l\Delta t) - GMA_x^d(l\Delta t)\right|}{GMA_x^o(l\Delta t)}. \qquad (36)$$

The determination of the temporal artifact detector for a given time interval lΔt and slice type is performed in a means 950 comprised by the apparatus 700 in step S820-5.

A slice-independent temporal video quality measure $Q_t(l\Delta t)$ can now be determined in a means 960 in step S820-6 according to

$$Q_t(l\Delta t) = \min\left(Q^h(l\Delta t), Q^v(l\Delta t)\right) \qquad (37)$$

where $Q^{h,v}(l\Delta t)$ are the slice-orientation-dependent temporal quality measures.

As aforementioned, an overall detector or video quality measure $Q_{t,tot}$ for the whole video sequence can be determined according to equation (25) in step S820-7.

Equation (37) implies that the slice type with the largest distortion is selected for the overall quality measurement. This allows for detection of horizontal and vertical erroneous displacements of objects in a video scene.

Embodiments of the present invention can be applied to texture synthesizers for rigid and non-rigid textures. It should be, however, noticed that the mask m(y,x,t) should be initialized differently in both cases. The fundamental difference between the two texture synthesizers results in the fact that the synthesizer for rigid textures basically computes each synthesized picture independently of others, while the synthesizer for non-rigid textures links subsequent frames by optimizing the textures simultaneously. Hence, the mask used for two consecutive pictures corresponds to the union of the single mask for rigid texture. This ensures that all synthesized macro blocks are evaluated by a temporal video quality measure. The mask for non-rigid texture synthesis is obtained by computing the union of all masks in the considered set of pictures. It should be noted that the quality evaluation may be slightly biased by unsynthesized samples in the unified masks.

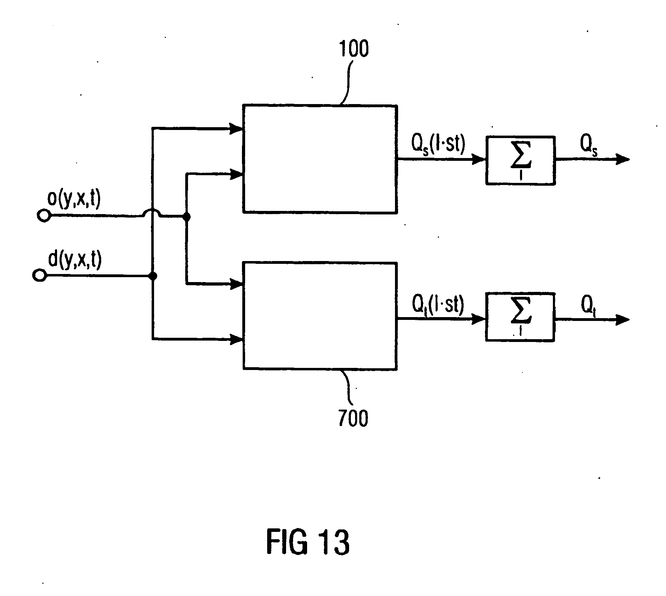

According to further embodiments, the present invention provides an apparatus for determining both, a spatial video quality measure $Q_{s,tot}$ and a temporal video quality measure $Q_{t,tot}$ of a video signal d(y,x,t) on the basis of a reference video signal o(y,x,t), which is shown in a principle block diagram in Fig. 13. The apparatus 1300 comprises an apparatus 100 for determining a spatial image quality measure $Q_s(l\Delta t)$ and an apparatus 700 for determining a temporal video quality measure $Q_t(l\Delta t)$.

Hence, referring to the embodiment of the present invention depicted in Fig. 13, a video sequence can be analysed and judged based upon the spatial quality measure $Q_{s,tot}$ for spatial artefacts and the temporal quality measure $Q_{t,tot}$ for temporal artefacts.

In the following, a verification and validation framework of the inventive video quality assessors is presented. The framework is basically twofold: Prerequisites are first defined for ground truth set data and specific statistical tools are further selected to evaluate the overall performance of the inventive video quality model. The test conditions formulated in this section correspond to the recommendations of VQEG in the so-called Phase II benchmarks in ITU-R WG6Q 6/39-E, "Final Report from the Video Quality Experts Group on the Validation of Objective Models of Video Quality Assessment, Phase II", August 2003.

Video data can feature several distortions after they have been processed. Some of this bias can hamper or even worse impede quality assessment. It must thus be distinguished between impairments that can be removed a posteriori and such that are permanent.

Correctable artifacts can be for instance created when a source video sequence o(y,x,t) passes through a corresponding codec. The decoded video sequence d(y,x,t) may then feature a number of scaling and alignment discrepancies compared to the source signal o(y,x,t). In order to allow for a fair benchmark of objective quality measurement methods, distorted test data are normalized, where normalization consists in the removal of deterministic disparities between original and distorted signals. Typical correctable artifacts are global temporal frame shift, global horizontal (vertical) spatial image shift, or global chrominance (luminance) gain and offset. The normalized sequences are used for both subjective and objective ratings. Note that the post-processing of the distorted test material is also called calibration.

Artifacts that can not be corrected through calibration may yield inconsistent responses of the model under test. Hence, data featuring such impairments are explicitly excluded from the ground truth. Among the permanent artifacts are chrominance differential timing, picture jitter, and spatial re-scaling.

Calibration is not implemented in the present scope as it does not constitute a primary objective of the present invention. Adequate algorithms have been proposed in ITU-R WG6Q 6/39-E, "Final Report from the Video Quality Experts Group on the Validation of Objective Models of Video Quality Assessment, Phase II", August 2003, that could be integrated into the given content-based video coding framework if necessary. Hence, the ground truths selected for performance evaluations of the inventive VQMs (VQM = Video Quality Measure) do not feature above-mentioned distortions.

In concordance with the VQEG recommendations ITU-R WG6Q 6/39-E, "Final Report from the Video Quality Experts Group on the Validation of Objective Models of Video Quality Assessment, Phase II", August 2003, the inventive concept or model is evaluated based on three major criteria. The first criterion relates to the prediction accuracy, i.e., the ability of the model to reliably predict the subjective video perception. The second criterion refers to the prediction monoticity. This criterion measures the model performance w.r.t. the relative magnitudes of subjective quality ratings. Finally, the third criterion, the prediction consistency, refers to the model's robustness against a large variety of impairments.

The prediction accuracy represents the ability of the quality model to predict the differential mean opinion score (DMOS) ratings with a reduced error. The MOS is a quantitative measure of the subjective quality of a video sequence as judged by a panel of human observers (ITU-R WG6Q 6/39-E, "Final Report from the Video Quality Experts Group on the Validation of Objective Models of Video Quality Assessment, Phase II", August 2003). The DMOS is in turn a comparative subjective quality measure between a distorted d(y,x,t) and a reference video sequence o(y,x,t).

The criterion recommended by VQEG for prediction accuracy evaluation is Pearson's linear correlation coefficient (ITU-R WG6Q 6/39-E, "Final Report from the Video Quality Experts Group on the Validation of Objective Models of Video Quality Assessment, Phase II", August 2003). The latter metric must be maximized by the model under test and increases given decreasing average errors. Pearson's correlation reflects the degree of linear relationship between two variables. It ranges from +1 to - 1. A correlation of +1 or -1 means that there is a perfect positive or negative linear relationship between the considered variables. This relationship is positive when the slope is positive (high scores on the abscissa are associated with high scores on the ordinate) and it is negative when the slope is negative (high scores on the abscissa are associated with low scores on the ordinate). A correlation of zero means that there is no linear relationship between the two considered variables.

The mathematical formulation of Pearson's correlation coefficient can be given as

$$r_p = \frac{\sum_{i=1}^{N} (x_i - \mu_x)(y_i - \mu_y)}{N \sigma_x \sigma_y}, \tag{38}$$

where N corresponds to the number of measurements conducted or video sequences in the ground truth. $\mu_x$ and $\mu_y$ are the mean values of the variables x and y, where these variables correspond to the predicted DMOS, i.e. DMOSp, and

the subjective DMOS. $\sigma_x$ and $\sigma_y$ are the corresponding standard deviations.

The DMOS predicted by the model under test (DMOSp) should ideally correlate with the corresponding subjective DMOS in terms of sign and magnitude. Spearman's rank correlation coefficient, denoted $r_s$ in the following, is a sensitive monotonicity measure recommended by ITU-R WG6Q 6/39-E, "Final Report from the Video Quality Experts Group on the Validation of Objective Models of Video Quality Assessment, Phase II", August 2003. It assesses how well an arbitrary monotonic function could describe the relationship between two variables. Unlike Pearson's coefficient, Spearman's correlation does not require any assumption w.r.t. the functional relationship between the variables (e.g. linear relationship), nor does it require the variables to be measured on interval scales; it can be used for variables measured at the ordinal level. Spearman's coefficient can be seen as a special case of Pearson's correlation as the data are converted to ranks before calculating the former coefficient.

Prediction consistency relates to the ability of the quality model under test to provide consistently accurate predictions for a large range of video sequences without excessively failing for a subset of these.

The model's prediction consistency can be measured by the number of outlier sequences. The latter are defined as having an error greater than a given threshold such as one confidence interval. Prediction consistency is given as a fraction of the total number of sequences. A small outlier fraction means that the model's predictions are relatively consistent.

The prediction consistency criterion recommended by ITU-R WG6Q 6/39-E, "Final Report from the Video Quality Experts Group on the Validation of Objective Models of Video Quality Assessment, Phase II", August 2003, is the outlier ratio defined as follows

$$or = \frac{N_{out1}}{N} \, , \qquad\qquad (39)$$

where $N_{out1}$ corresponds to the number of outliers. A video sequence is considered to be an outlier if

$$\left| DMOS_i - DMOSp_i \right| > 2\sigma_{DMOS} \quad , \quad i = 0, ..., N \quad , \qquad (40)$$

where $\sigma_{DMOS}$ corresponds to the standard deviation of the subjective DMOS.

It must be noted that, in the Phase II evaluations, VQEG proposes three further metrics besides the ones presented above, namely the root mean square error, the resolving power and classification errors. They are, however, not further considered in the present scope because appropriate statements can be made with the three "core" metrics presented above.

Experimental results are conducted to validate the inventive spatial $Q_s$, $Q_{s,tot}$ and temporal video quality measures $Q_t$, $Q_{t,tot}$. As the framework of the present invention is block transform coding, validation is done with corresponding ground truth sets. The inventive spatial VQM is thereby compared to relevant impairment measures in order to benchmark its performance. All quality measures are evaluated by matching the corresponding predicted opinion scores with subjective opinion scores in the first experiment.

The inventive VQMs have been developed for consistency evaluations of synthetic video sequences. Hence, ground truth sets consisting of such material are evaluated using these VQMs in the second experiment. Classification rules are proposed in order to enable automatic clustering of synthetic video sequences into good and bad synthesis. The classification accuracy of the inventive VQMs in general and the temporal VQM in particular constitutes a further validation of these.

Four ground truths have been used in the present scope to evaluate the inventive video quality measures. Two of the data sets are designed for the exclusive block transform coding (BTC) scenario, where no texture synthesis is operated. The other two sets relate to the analysis-synthesis coding framework. They are compiled to benchmark spatial and temporal artifact detection capabilities of the inventive quality measures.

The BTC data sets are provided by MPEG , and Fraunhofer Heinrich-Hertz-Institut (HHI). The MPEG data set consists of four video sequences and was used to benchmark the performance of MPEG-4 and H.26L anchors (ISO/IEC JTC 1/SC 29/WG 11 N3671, "Call for Proposals for New Tools to further Improve Video Coding Efficiency", La Baule, France, October 2000). Details on the video sequences selected by MPEG can be found in following Table 1.

Tab. 1

| Property Designation | Property |
|---|---|
| Subj. eval. appr. | DSIS |
| Video codec | MPEG-4 and H.26L |
| Resolution | QCIF (176×144) |
| Frame rate | 10 Hz and 15 Hz |
| Duration | 10s |
| Bit rate | 32 kbps and 64 kbps |
| Number of test sequences | 4 |

The HHI data correspond to five video clips obtained from several German television channels. The clips feature various contents as news, sports, cartoon, monochrome and colour movies that are MPEG-2 coded (cp. Table 2).

Tab. 2

| Property Designation | Property |
|---|---|
| Subj. eval. appr. | DSCQS |
| Video codec | MPEG-2 |
| Resolution | QVGA (320×240) |
| Frame rate | 12.5 Hz |
| Duration | 10s |
| Bit rate | Variable |
| Number of test sequences | 5 |

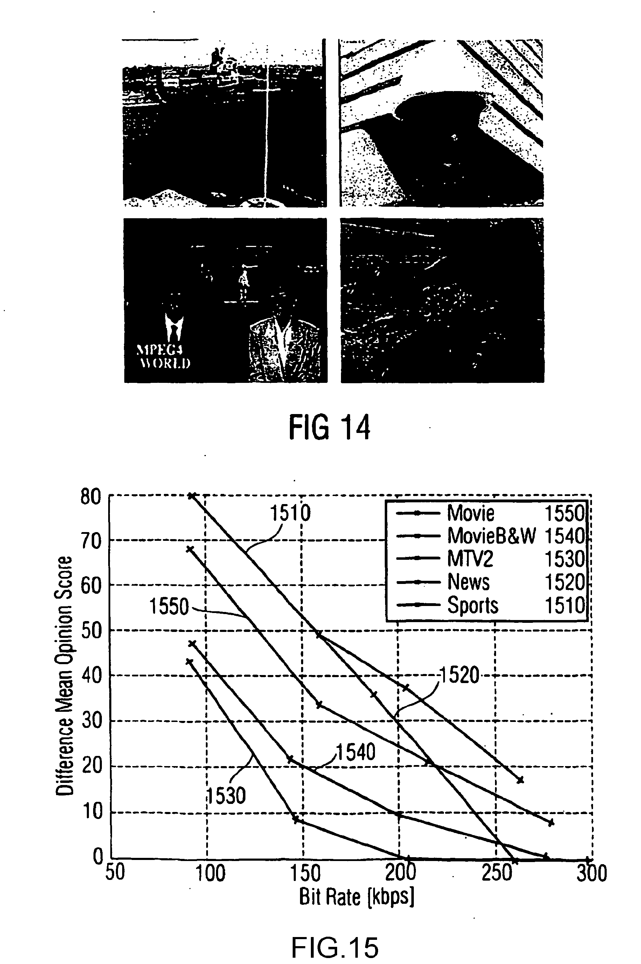

In this scope only examples of MPEG data are shown in Fig. 14. Fig. 14 exemplarily shows key frames of test sequences provided by MPEG. "Container Ship" (top left), "Foreman" (top right), "News" (bottom left), and "Tempete" (bottom right).

Both data sets, i.e. MPEG and HHI, are subjectively evaluated yielding subjective Mean Opinion Score (MOS). The HHI data set was evaluated using the Double Stimulus Continuous Quality Scale (DSCQS) method, while the MPEG data were evaluated with the Double Stimulus Impairment Scale (DSIS) approach.

The HHI data are coded with an MPEG-2 codec at five different bit rates per sequence. The highest bit rate is thereby used as reference sequence in the subjective experiments. The MPEG data are coded using an H.26L and an MPEG-4 codec.

Subjective video quality variations depending on bit rate fluctuations are depicted in Fig. 15 for the HHI data. Reference numeral 1510 refers to the subjective DMOS vs. bit-rate for a sports content. Reference numeral 1520 refers to the subjective DMOS vs. bit-rate for a news content. Reference numeral 1530 refers to the subjective DMOS vs. bit-rate for a music-video content. Reference numeral 1540 refers to the subjective DMOS vs. bit-rate for a black and white movie content. Reference numeral 1550 refers to the subjective DMOS vs. bit-rate for a colour movie content.

The same information but for the MPEG data can be found in Table 3.

Tab. 3

| Sequence | MP4-A | MP4-B | H.26L-A | H.26L-B |
|---|---|---|---|---|
| Container | 3.71 | 4.12 | 4.18 | 4.71 |
| Foreman | 1.53 | 2.12 | 1.71 | 3.18 |
| News | 2.12 | 3.06 | 3.29 | 4.06 |
| Tempete | 3.06 | 3.53 | 3.59 | 4.65 |

While the preceding paragraphs referred to ground truth sets for video coding, the subsequent paragraphs are related to quality evaluation of texture synthesis.

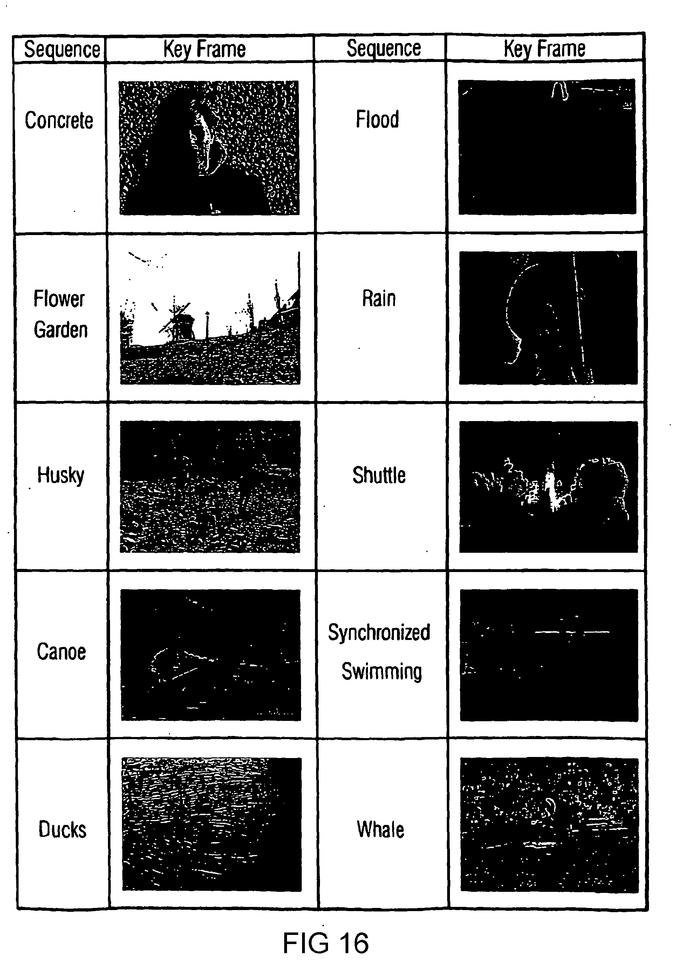

Two ground truth sets are used for evaluation of the performance of the inventive spatio-temporal VQMs. Key frames of test sequences used for evaluation of efficiency of inventive VQMs w.r.t. texture synthesis artifacts are depicted in Fig. 16, while corresponding information on synthesized textures can be found in Table 4.

Tab. 4

| Video Sequence | Synth. Texture | Synth. Text. Type |
|---|---|---|
| "Concrete" | Wall | Rigid |
| "Flower Garden" | Flower bed | Rigid |
| "Husky" | Ground | Rigid |
| "Canoe" | Water | Non-rigid |
| "Ducks" | Water | Non-rigid |
| "Flood" | Water | Non-rigid |
| "Rain" | Rain | Non-rigid |
| "Shuttle" | Smoke | Non-rigid |
| "Synchro. Swimming" | Water | Non-rigid |
| "Whale Show" | Water | Non-rigid |

The gound truth sets refer to synthesis results generated by a texture synthesizer for rigid textures and a synthesizer for non-rigid textures respectively.

Each ground truth set features synthetic textures with imperceptible distortions and such with annoying artifacts. The classification of synthetic results into annoying and imperceptible artifacts was carried out by the inventors. Impaired test sequences typically feature sporadical artifacts at given time instances.

The statistical evaluation method of the benchmarked video quality measures is described in the following section.

As explained in the previous sections, double stimulus subjective evaluation methods have been used for both MPEG and HHI ground truths. That is, for each test subject, video sequence and codec setting two opinion scores are available, one for the reference video sequence and one for the coded video. The relative difference between the assessed values for source and processed video sequences is used for further evaluations. That is, the absolute difference is normalized by the opinion score of the reference video sequence. This is done to account for individual subjective quality scales of test subjects.

The subjective scores obtained for the MPEG data have been been mapped onto the range 1-5 by MPEG for their evaluations. The corresponding MOS thus lie in the same range. The MOS have been mapped onto the range 1-100 in the present scope in order to achieve comparable results for MPEG and HHI data.

A single subjective score is required for each video sequence. This is achieved by computing the median value of the corresponding differential opinion scores achieved from the test subjects. The influence of outlier scores on the differential mean opinion score (DMOS) is limited by this operation.

Given a ground truth, the functional relationship between subjective and predicted MOS can be highly non-linear depending on the video quality assessment model. Comparability of different assessors can be achieved by means of non-linear regression. The inventive VQM features an inbuilt logistic function with a degree of freedom $\tau$ that steers the linearity of the relationship between subjective and predicted MOS (eq. (1)). Reference assessors selected in this work are PSNR (PSNR = Peak Signal-to-Noise Ratio) and the best measure standardized by ITU-R WG6Q 6/39-E, "Final Report from the Video Quality Experts Group on the Validation of Objective Models of Video Quality Assessment, Phase II", August 2003, i.e. the general model of the National Telecommunications and Information Administration (NTIA). PSNR is defined as

$$PSNR = 10\log_{10} \frac{255^2 \, XY}{\sum_{y=1}^{Y}\sum_{x=1}^{X}[o(y,x,t)-d(y,x,t)]^2} \, . \qquad (41)$$

As NTIA's general model is nearly linear with respect to subjective data (ITU-R WG6Q 6/39-E, "Final Report from the Video Quality Experts Group on the Validation of Objective Models of Video Quality Assessment, Phase II", August 2003) and VQEG's phase II evaluations show that no significant performance improvement of the assessors can be achieved through non-linear regression (ITU-R WG6Q 6/39-E, "Final Report from the Video Quality Experts Group on the Validation of Objective Models of Video Quality Assessment, Phase II", August 2003), linear regression will be conducted in the experimental evaluations in the present work. Notice that 95% confidence intervals are used for linear regression.

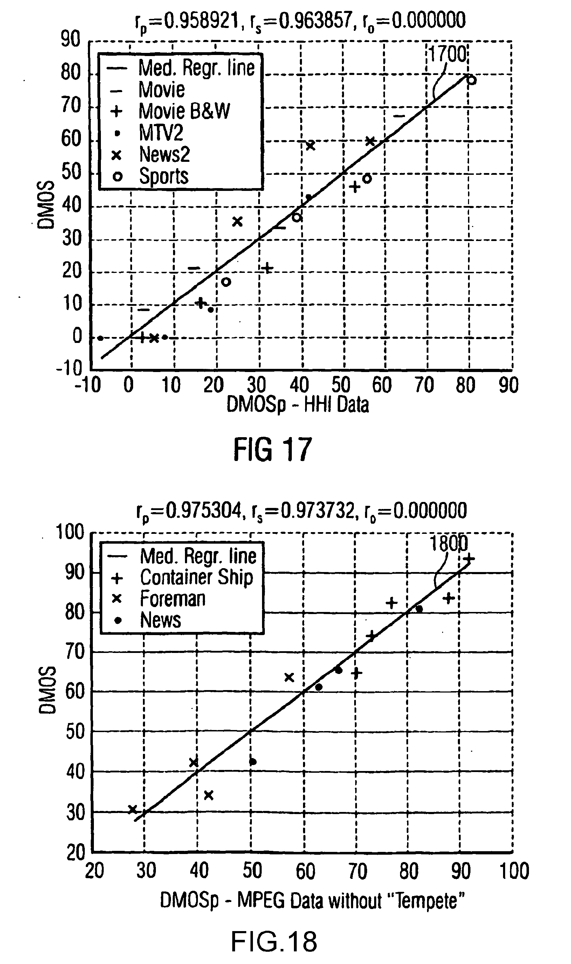

The statistical metrics presented above are computed for each regression line determined in the experimental evaluations. In order to ensure reproducibility of the results achieved in the experiments, the cross validation approach is used. The latter approach allows identification of models that perform best on unknown data. This is achieved by evaluating the correlation between the subjective MOS and the predicted MOS (MOSp) with data that have not been used to determine the regression line. Since the ground truth sets are relatively small, a regression line is determined with all sequences available in a given ground truth set except one of the sequences. The sequence left out is used to determine the statistical metrics. The mean statistical metrics are finally determined from the left out sequences. This procedure, where no explicit validation data set can be afforded due to limited ground truths, corresponds to a special case of the cross validation approach called "leave-one-out" method. Note that the cross validation approach is a statistical tool that can be applied to various other problems that differ from the present one. It should also be noted that, the regression line 1700 plotted in Fig. 17, for example, is the median regression line obtained from the cross validation iterations.

In this section, the inventive video quality measure is evaluated w.r.t. its performance and compared to PSNR and VQEG's best quality assessor proposed by the NTIA. The data used in this section are the HHI and the MPEG data that can be used to evaluate assessors based on block transform coded video sequence. As already explained above, these sequences feature artifacts that are relevant for the coding framework of the present work. The inventive spatial VQM $Q_s$ defined in eqs. (1), (2), (16) - (19) is used here. Its configuration is given in table 5. The full image plane is considered for quality assessment.

Tab. 5

| Parameters | Setting |
|---|---|
| $\tau$ | 11 |
| $\kappa$ | 16 |
| $f_h(i,j)$ (Sobel operator) | $\begin{pmatrix} 0.25 & 0.5 & 0.25 \\ 0 & 0 & 0 \\ -0.25 & -0.5 & -0.25 \end{pmatrix}$ |
| $f_v(i,j)$ (Sobel operator) | $\begin{pmatrix} -0.25 & 0 & 0.25 \\ -0.5 & 0 & 0.5 \\ -0.25 & 0 & 0.25 \end{pmatrix}$ |
| $f_{45^*}((i,j)$ (Sobel operator) | $\begin{pmatrix} -0.5 & -0.25 & 0 \\ -0.25 & 0 & 0.25 \\ 0 & 0.25 & 0.5 \end{pmatrix}$ |
| $f_{135^*}(i,j)$ (Sobel operator) | $\begin{pmatrix} 0 & 0.25 & 0.5 \\ -0.25 & 0 & 0.25 \\ -0.5 & -0.25 & 0 \end{pmatrix}$ |

Fig. 17 and Fig. 18 depict the regression results obtained for the inventive VQM $Q_s$ and both data sets, where Fig. 17 depicts the linear regression results for the inventive VQM $Q_s$ and the HHI ground truth set and Fig. 18 depicts the linear regression results for the inventive VQM $O_s$ and the MPEG ground truth set.

The statistical metrics are also given. It can be seen that high correlation coefficient values are obtained both for Pearson and Spearman. The outlier ratio is zero.

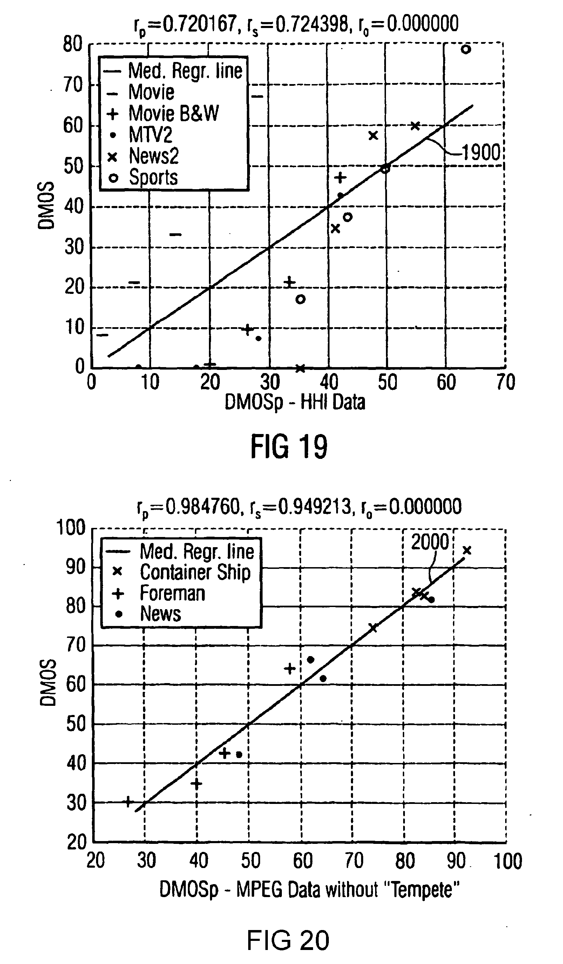

Fig. 19 and Fig. 20 depict the regression results obtained for PSNR and both data sets, where Fig. 19 depicts the linear regression results for PSNR and the HHI ground truth set and Fig. 20 depicts the linear regression results for PSNR and the MPEG ground truth set.

It can be seen that high correlation coefficient values are obtained for the MPEG data. Given the fact that two codec architectures were benchmarked with these data and PSNR as the distortion criterion, these results appear to be plausible. Pearson's correlation coefficient is slightly higher (0.00946) for PSNR than for the inventive VQM $Q_s$. Interestingly, it is the other way round for Spearman's correlation coefficient but with a much larger margin (0.0245). This implies that the inventive VQM $Q_s$ features better rank correlation properties than PSNR on a data set that is adapted to the latter measure. PSNR's performance is significantly degraded in the case of the HHI data set. Significantly lower correlation coefficients are obtained. The outlier ratio is zero for both data sets.

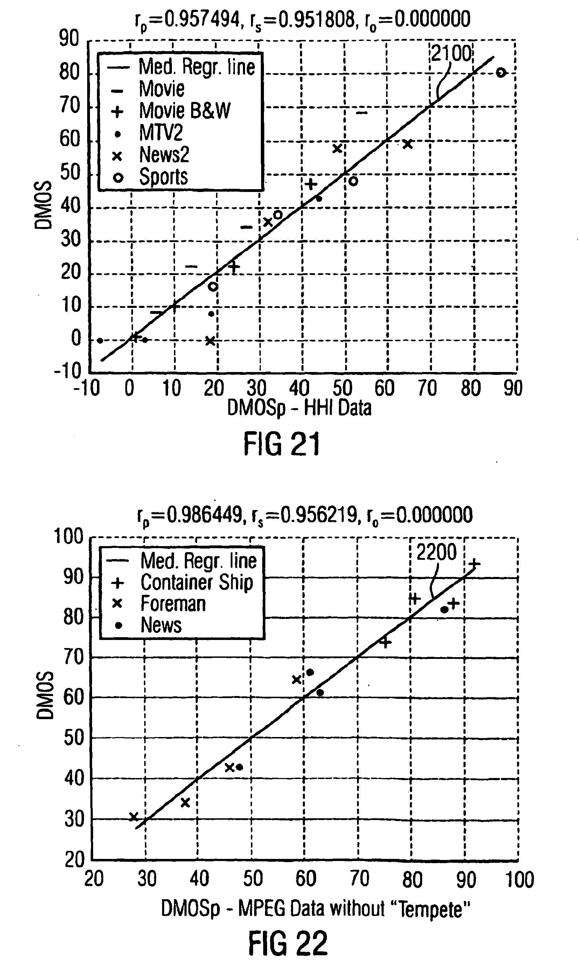

Fig. 21 and Fig. 22 depict the regression results obtained for NTIA's general model and both data sets, where Fig. 21 depicts the linear regression results for NTIA's general VQM and the HHI ground truth set and Fig. 22 depicts the linear regression results for NTIA's general VQM and the MPEG ground truth set.

This VQM has been completely implemented in user friendly software that is freely available via NTIA's web site. It can be seen that the general model performs slightly better than PSNR on the MPEG data set. However, Spearman's correlation coefficient is still lower than in the case of the inventive metric. The results obtained for the HHI data are significantly better than PSNR's but slightly worse than the inventive measure. The outlier ratio is zero for both data sets.

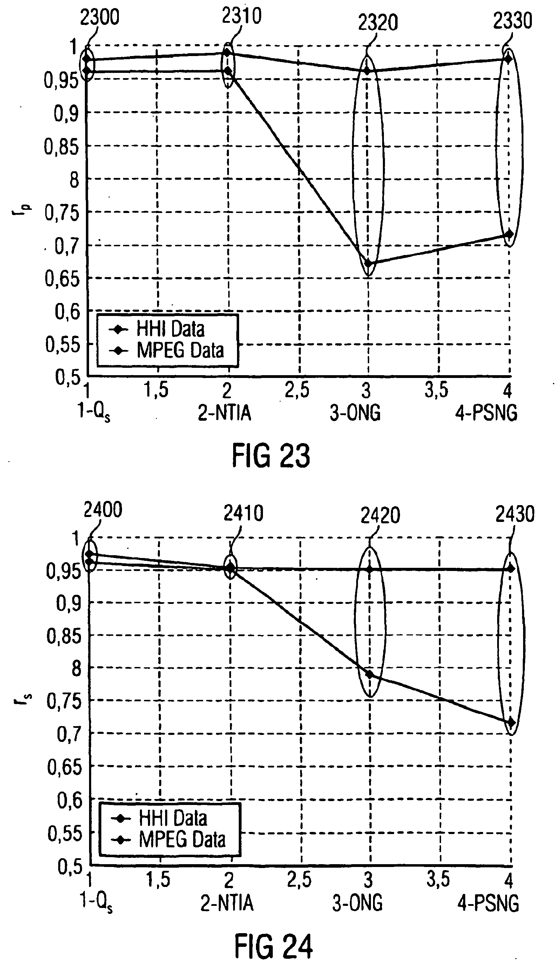

The results presented above are summarized in Fig. 23 and Fig. 24, where Fig. 23 shows Pearson's correlation coefficients achieved for evaluated VQMs and Fig. 24 shows Spearman's correlation coefficients achieved for evaluated VQMs.

In Fig. 23, Pearson's correlation coefficients for the inventive spatial quality measure $Q_s$ is referred to with reference numeral 2300. Pearson's correlation coefficients for NTIA's general VQM is referred to with reference numeral 2310. Pearson's correlation coefficients for Qng et al.'s measure is referred to with reference numeral 2320. Pearson's correlation coefficients for PSNR is referred to with reference numeral 2330.

In Fig. 24, Spearman's correlation coefficients for the inventive spatial quality measure $Q_s$ is referred to with reference numeral 2400. Spearman's correlation coefficients for NTIA's general VQM is referred to with reference numeral 2410. Spearman's correlation coefficients for Qng et al.'s measure is referred to with reference numeral 2420. Spearman's correlation coefficients for PSNR is referred to with reference numeral 2430.

For the sake of completeness, the results for the measure proposed by E. P. Ong, W. Lin, Z. Lu, and S. Yao, "Colour Perceptual Video Quality Metric", Proc. ICIP 2005, IEEE International Conference on Image Processing, Vol. 3, p. 1172-1175, Genova, Italy, 2005 and E. P. Ong, X. Yang, W. Lin, Z. Lu, and S. Yao, "Video Quality Metric for Low Bitrate Compressed Video", Proc. ICIP 2004, IEEE International Conference on Image Processing, p. 3531-3534, Singapore 2004, are also given (2320, 2420). It can be seen that this VQM performs significantly worse than NTIA's (2310, 2410) and the inventive quality assessor $Q_s$ (2300, 2400). The outlier ratio is 0.1 for the HHI data set and zero for MPEG's ground truth set. It should be noted that Ong et al.'s VQM features more than 20 degrees of freedom. It was not possible to obtain the optimized parameter setting from the authors. Hence default parameters were set in the present scope.

The rank order correlation, i.e. Spearman's correlation coefficient, is particularly important in the present coding framework, as automatic discrimination of bad synthesis results is required. This can only be achieved if the measured distortions MOSp correlate with MOS in terms of ranking of the distortions. As can be seen in Fig. 24, the inventive VQM $Q_s$ yields better $r_s$ results than all other examined VQMs.

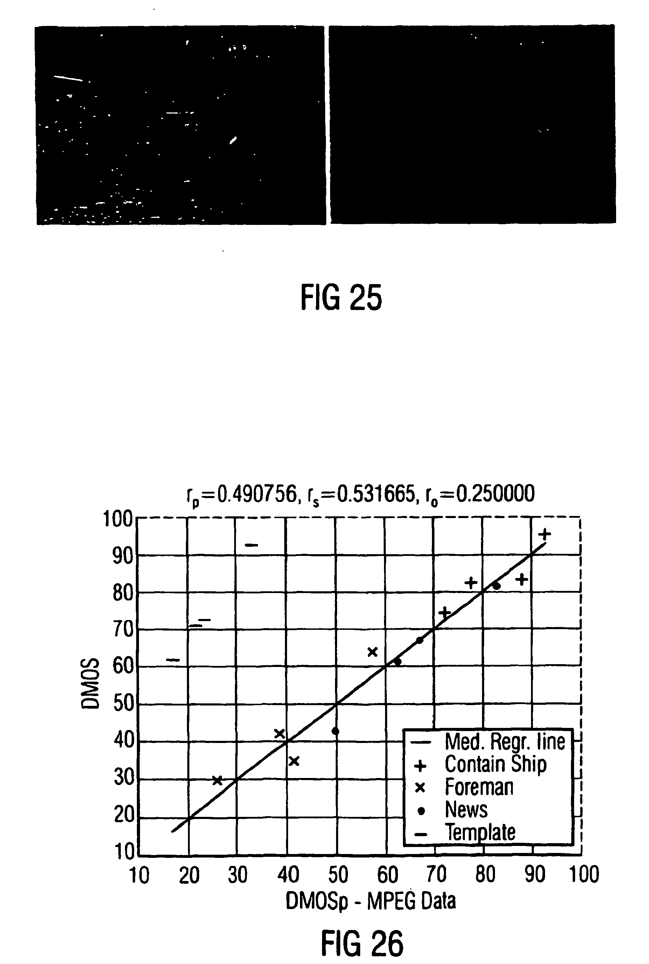

The MPEG data set contains a video sequence called "Tempete". A key frame of this video and its corresponding highpass filtered version is depicted in Fig. 25. Note that the regression line is determined based on the "inlier" sequences here. That is, the sequences for which the hypothesis that the relationship between MOS and MOSp is linear holds (F-test). The "Tempete" sequence was removed from the data set for all evaluations conducted above. This relates to the fact that for all the considered VQMs, the "Tempete" sequence showed a severe outlier behaviour such that regression computations led to the conclusion that no linear relationship exists between MOS and MOSp in all cases (F-test).

A regression result, when "Tempete" is included in the MPEG data set is given in Fig. 26, where Fig. 26 shows linear regression results for the proposed VQM and the MPEG ground truth set including "Tempete". The failure of all the examined quality metrics can be explained by the extreme characteristics of the video sequence. In the sequence, leaves of relevant resolution are continuously falling in the foreground of the scene. The falling of the leaves is chaotic and hardly predictable by motion estimation algorithms, which yields motion prediction failures. That implies lots of localized errors and low objective quality scores. These leaves are however most probably not the objects of interest in the scene. The former nevertheless contribute important distortions that yield to bad quality predictions although the backgroung of the scene that might be subjectively more relevant may not feature annoying artifacts. As can be seen in Fig. 25, the leaves yield high responses in C(y,x,t) (eq. 17) which implies that these particular locations will be assigned high weights in the overall distortion evaluation.

In the following, the complexity of the inventive VQM $Q_s$ is compared to the complexities of PSNR and particularly NTIA's quality assessor. This is done by estimating the corresponding complexities per picture. This approach is chosen in the present work because no command line version of NTIA's quality measure is freely available, such that no precise complexity evaluations can be conducted using adequate software tools. Meaningful insights can however be obtained through simple approximation as will be shown in the following.

The complexity of PSNR can be determined as

$$Pr_{PSNR}^1 = 6 + XY; Add_{PSNR}^1 = 2XY \quad , \qquad (42)$$

where $Pr_{PSNR}^1$ and $Add_{PSNR}^1$ represent the number of products/divisions and the number of additions/subtractions respectively. These complexity estimations do however not include the logarithmic function. A Taylor series representation of the latter can be given as

$$\ln(x) = \sum_{n=0}^{\infty} (-1)^n \frac{(x-1)^{n+1}}{n+1} \approx \sum_{n=0}^{P} (-1)^n \frac{(x-1)^{n+1}}{n+1} \quad . \qquad (43)$$

Hence, the complexity of log10 can be obtained as

$$Pr_{PSNR}^2 \approx 3P(P+1); Add_{PSNR}^2 = 2(2P+1) \quad , \qquad (44)$$

where the condensed form of the arithmetic series

$$1 + 2 + 3 + ... + P = \frac{P(P+1)}{2} \qquad (45)$$

has been used to simplify the expressions of $Pr_{PSNR}^2$ and $Add_{PSNR}^2$. It is assumed here that the Taylor series above is interrupted after P terms without significant loss of accuracy. It can be further supposed that $XY >> 3P(P+1)$ and $XY >> 2(2P+1)$. The (over-) estimated overall PSNR complexity can now be given as

$$Pr_{PSNR} = Pr_{PSNR}^1 + Pr_{PSNR}^2 = 6 + 2XY; Add_{PSNR} = Add_{PSNR}^1 + Add_{PSNR}^2 = 3XY \quad , (46)$$

where $Pr_{PSNR}^2$ and $Add_{PSNR}^2$ have been set to XY each in order to simplify the expression of the overall PSNR complexity.

The complexity of the inventive VQM can be determined as

$$Pr_{VQM}^1 \approx \frac{78}{\kappa} MN + 3 = 4.87MN + 3; Add_{VQM}^1 \approx \frac{13}{\kappa} MN + 2 = 1.625MN + 2 \quad . (47)$$

Notice that boundary issues in filtering operations are ignored here. The exponential function in the inventive spatial VQM $Q_s$ has not been considered so far. A Taylor series representation of the former can be given as

$$e^x = \sum_{n=0}^{\infty} \frac{x^n}{n!} \approx \sum_{n=0}^{P'} \frac{x^n}{n!} \quad . \tag{48}$$

Hence, the complexity of ex can be obtained as

$$\Pr_{VQM}^2 \approx P'(P'+2); \; Add_{VQM}^2 \doteq P' \quad , \tag{49}$$

where eq. (45) has been used to condense the expressions of $\Pr_{VQM}^2$ and $Add_{VQM}^2$ .. It is assumed again that the Taylor series above is interrupted after P' terms without significant loss of accuracy. It can be further assumed that $XY$ >> $P'$ and $XY$ >> P'($P'$+2). The (over-) estimated overall VQM complexity can now be given as

$$\Pr_{VQM} = \Pr_{VQM}^1 + \Pr_{VQM}^2 \approx 5.87XY + 3; \; Add_{VQM} = Add_{VQM}^1 + Add_{VQM}^2 \approx 2.625XY + 2 , \tag{50}$$

where $\Pr_{VQM}^2$ and $.Add_{VQM}^2$ have been approximated by XY each.

NTIA's general VQM is given as

$$\begin{aligned} VQM_{NTIA} = \; & -0.2097\,si\_loss \\ & +0.5969\,hv\_loss \\ & +0.2483\,hv\_gain \\ & +0.0192\,chroma\_spread \\ & -2.3416\,si\_gain \\ & +0.0431\,ct\_ati\_gain \\ & +0.0076\,chroma\_extreme \end{aligned} \tag{51}$$

where the definitions of the terms of the VQM can be found in M. H. Pinson and S. Wolf, "A New Standardized Method for Objectively Measuring Video Quality", IEEE Transactions on Broadcasting, Vol. 50, No. 3, p. 312-322, September 2004. They will not be given here as they are not relevant for the subsequent complexity evaluations.

The si_loss term comprises a 13x13 linear filter operation. This implies an (under-) estimated complexity of

$$\Pr_{NTIA} = 169\,MN; \; Add_{NTIA} = 168\,XY \quad . \tag{52}$$

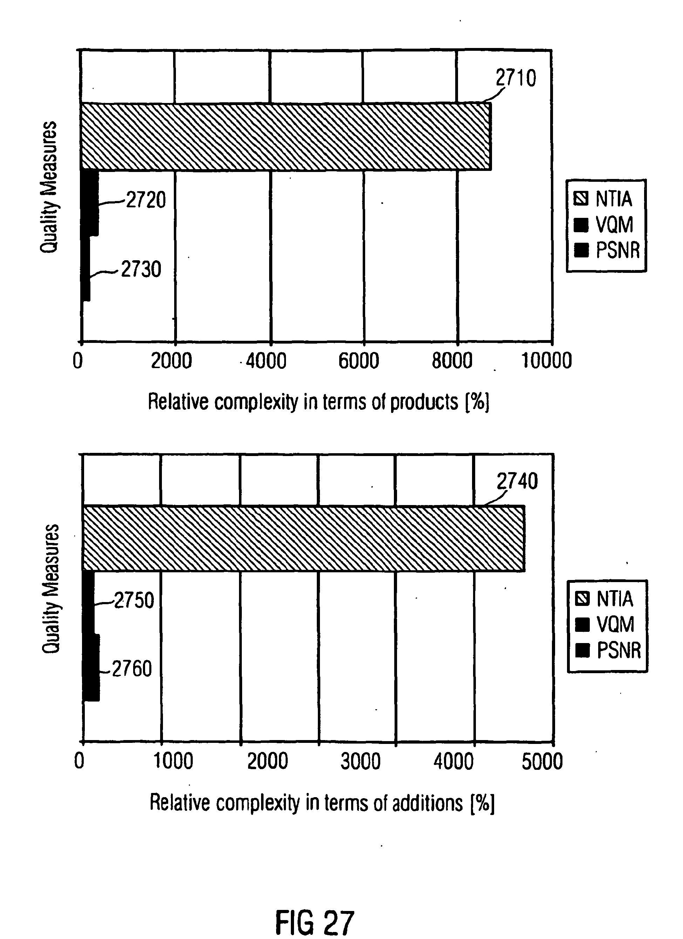

It can be seen in Fig. 27 (upper graph) that both VQMs, i.e. NTIA's 2710 and the inventive assessor 2720, are significantly more complex than PSNR 2730 in terms of the number of multiplications. As far as additions are concerned (lower graph in Fig. 27), NTIA's VQM 2740 is significantly more complex than PSNR 2760, while the inventive VQM 2750 features a comparable complexity to PSNR. This can be explained by the fact that only a selection of feature samples are used for quality assessment by the inventive spatial VQM $Q_s$. Notice that the complexity of PSNR has been set to 100% in Fig. 27. The complexity of the two other VQMs is given relatively to PSNR's in the latter figure.

It also appears that just the filtering operation required in one of the terms of NTIA's VQM is already significantly more complex than the inventive quality assessor. Similarly complex operations are conducted in the other terms of the measure by NTIA. Hence, it can be said that the inventive VQM is significantly less complex than VQEG's best VQM but performs comparably well.

In this following, verification and validation of the inventive spatio-temporal quality metrics for ROI applications is done. Synthesis of rigid and non-rigid textures is exemplarily used as a framework. The two ground truths relating to texture synthesis are used in the following evaluations.

As already explained above, spatial artifacts occur in the shape of inconsistent transitions between synthetic and natural textures in a video sequence. These unnatural spatial discontinuities can be detected by the inventive spatial VQM $Q_s$. Its configuration is given in table 5.

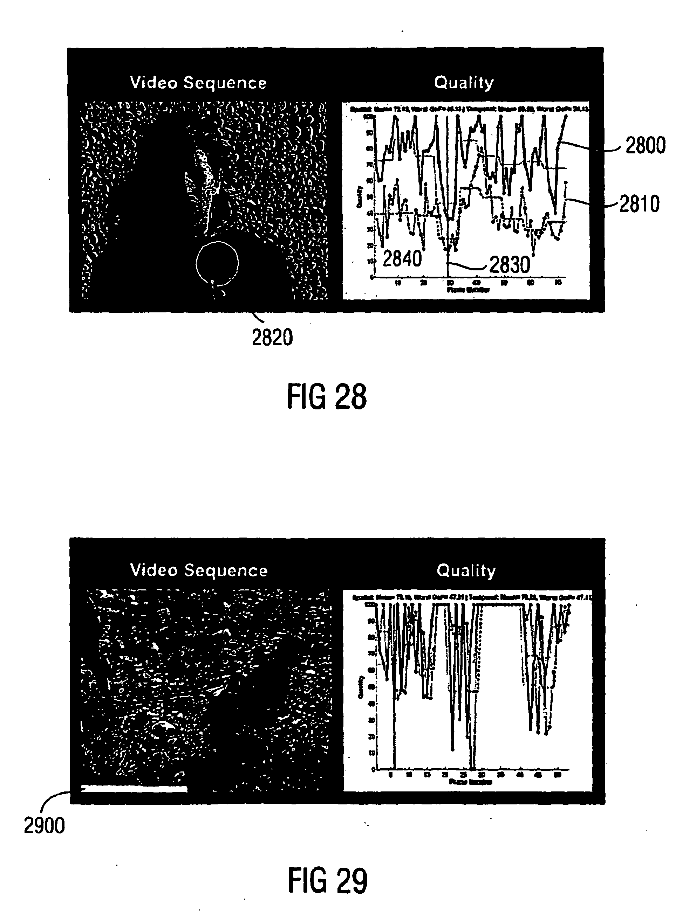

The spatial VQM was applied on the ground truth set for rigid textures. Fig. 28 depicts the results obtained for a "Concrete" sequence.

A picture of the "Concrete" sequence can be seen on the left hand side of Fig. 28, while the inventive spatial VQM $Q_s$ 2800 measured over time is given on the right hand side. The curve with reference numeral 2810 representing the inventive temporal VQM $Q_t$ will be discussed later. Notice that the whole background of the scene is synthetic as well as a part of the foreground object. It can be seen that due to sporadical spatial artifacts in the video, the predicted quality scores fluctuate between high and low values. The picture shown in Fig. 28 is impaired (e.g. noticeable impairment marked with reference numeral 2820). The corresponding low quality score is highlighted by a black vertical line 2830 on the right hand side of the same figure. This type of failure of the texture synthesizer for rigid textures can be explained by inaccurate motion estimation. The dotted line 2840 corresponds to the mean quality score per GoP (GoP = Group of Pictures).

Another problem related to rigid texture synthesis is that, depending on the type of motion in the video sequence, samples at picture borders might not be available in the reference pictures. This is a sign that the GoP may be too long given the motion activity in it. If no countermeasures are taken, the missing samples will yield very annoying artifacts in the shape of white areas 2900 as depicted in Fig. 29.

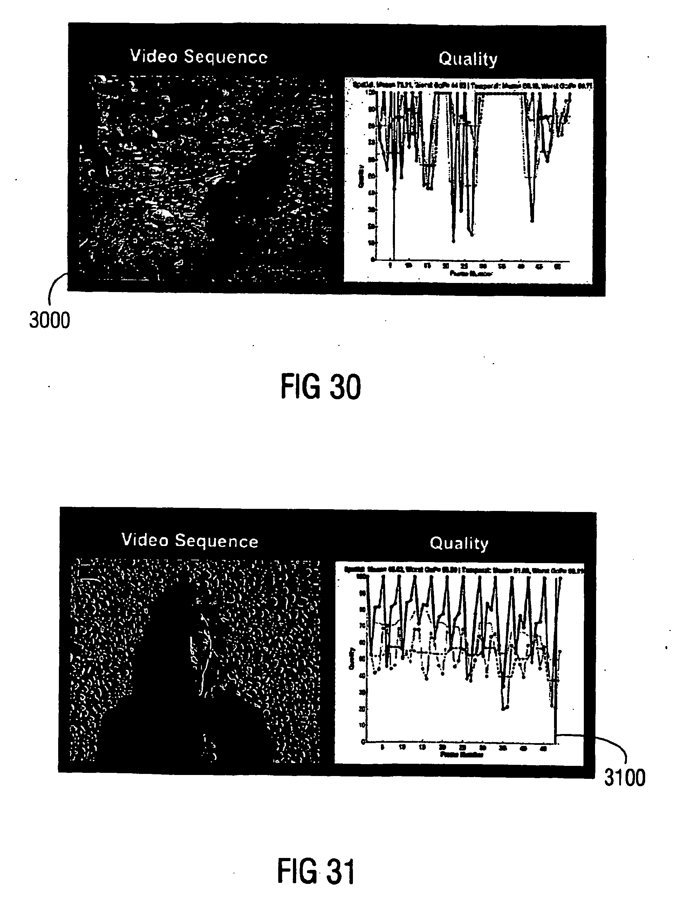

It can be seen that a low quality score is obtained in such cases. Notice that the whole ground has been synthesized in this sequence. If countermeasures are taken in the shape of intra-synthesis with a Markovian synthesizer, these may still yield unsatisfactory results especially if the region featuring missing samples is too large (cp. area 3000 as depicted in Fig. 30).

The synthesizer for rigid textures can also yield temporal artifacts in the shape of jerky motion. These impairments can be detected by the inventive VQM $Q_t$ for temporal artifacts defined by eqs. (1), (2), (26) - (37). Its configuration is given in table 6.

Tab. 6

| Parameters | Setting |
|---|---|
| $\tau$ | 11 |
| $f_{45°}(i,j)$ (Roberts op.) | $\begin{pmatrix} -1 & 0 \\ 0 & 1 \end{pmatrix}$ |
| $f_{135°}(i,j)$ (Roberts op.) | $\begin{pmatrix} 0 & -1 \\ 1 & 0 \end{pmatrix}$ |

Note that Roberts' cross operators are used here. This is done to reduce the temporal considerations to two consecutive pictures such that the motion information is well captured given the small spatio-temporal neighborhood. The results obtained for the inventive VQM are illustrated considering the "Concrete" sequence as example. Two different temporal transitions of the sequence are considered.

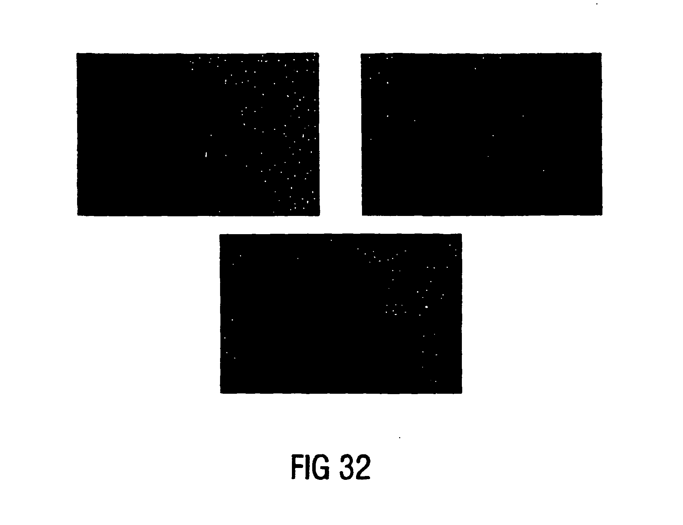

It can be seen that the first transition (cp. Fig. 31 and Fig. 32) obviously features a very noticeable impairment as the quality score is very low. Fig. 31 shows a subjectively annoying temporal transition in the "Concrete" video sequence and a corresponding quality score 3100. Fig. 32 shows temporal gradients measured for the reference (top left) and the impaired (top right) video sequence and corresponding difference signal (bottom).

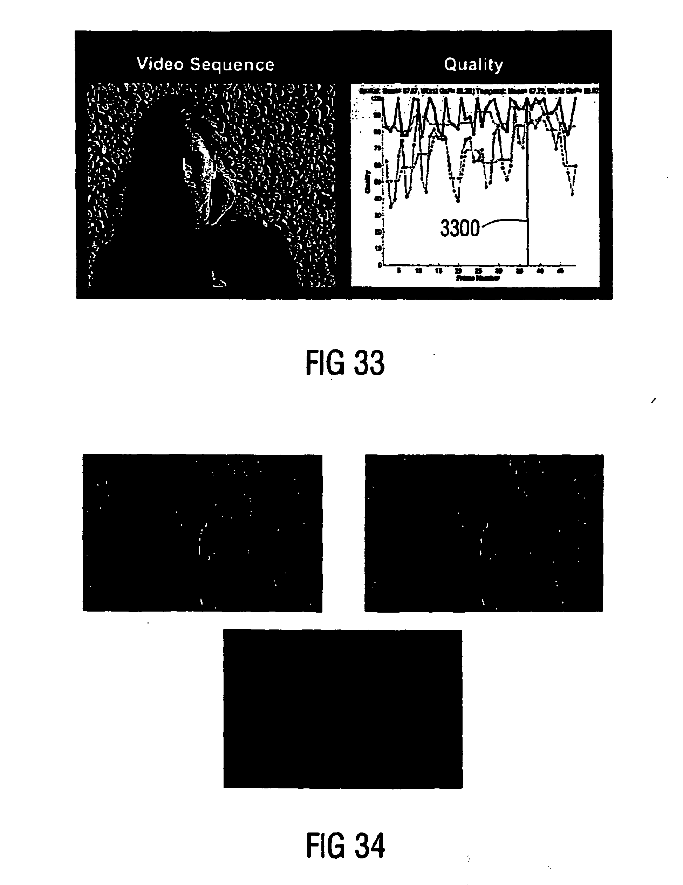

On the contrary, the second transition (cp. Fig. 33 and Fig. 34) has been assigned a very high score, which implies that synthesis was successful in that case. Fig. 33 shows a subjectively non-annoying temporal transition in the "Concrete" video sequence and a corresponding quality score 3300. Fig. 34 shows temporal gradients measured for the reference (top left) and the impaired (top right) video sequence and corresponding difference signal (bottom).

The inventive temporal VQM $Q_t$ is confirmed by the difference signal between the synthetic and the corresponding reference temporal gradient mask (cp. Fig. 32 and Fig. 34). It can be seen that in the case of the impaired synthesis result, the difference signal features very high amplitudes, while they are almost zero for the successful synthesis. Notice that MSE (MSE = Mean Squared Error) reflects subjective impairment perception in the selected examples.

Similarly to synthetic rigid textures, spatial artifacts occur in the shape of inconsistent transitions between synthetic and natural textures in this scenario. Temporal artifacts relate to jerky unnatural motion. The configurations of the spatial and the temporal VQM are given in Tab. 5 and Tab. 6, respectively. Notice that $\tau$ is assigned the value two here. Spatial and temporal VQMs were applied on the ground truth set for non-rigid textures.

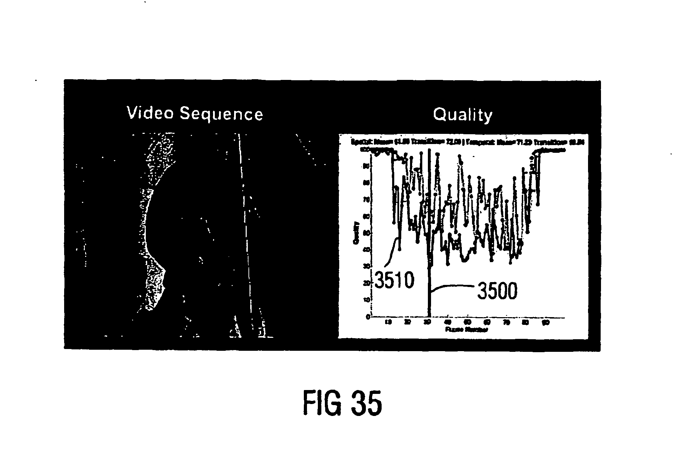

Fig. 35 depicts typical results obtained for non-rigid textures with the "Rain" sequence as an example. The whole background of the scene is synthetic. Fig. 35 shows subjectively annoying spatio-temporal artifact in the "Rain" video sequence and corresponding quality scores 3500. Obvious spatial artifacts are visible in the given picture. Temporal artifacts are also noticeable in this video sequence. This is reflected by the results obtained with the inventive VQMs in Fig. 35. Notice that the spatial VQM is depicted by the curve 3510, while the temporal VQM corresponds to the curve 3520.

In order to objectively gauge the performance of the inventive spatial and temporal VQMs, the separability of impaired and good synthesis results is evaluated in the following. This must be done for both corresponding ground truth sets, i.e. rigid and non-rigid textures, separately. Group of pictures have been extracted from each of the ground truths and classified into "good" and "bad" synthesis.

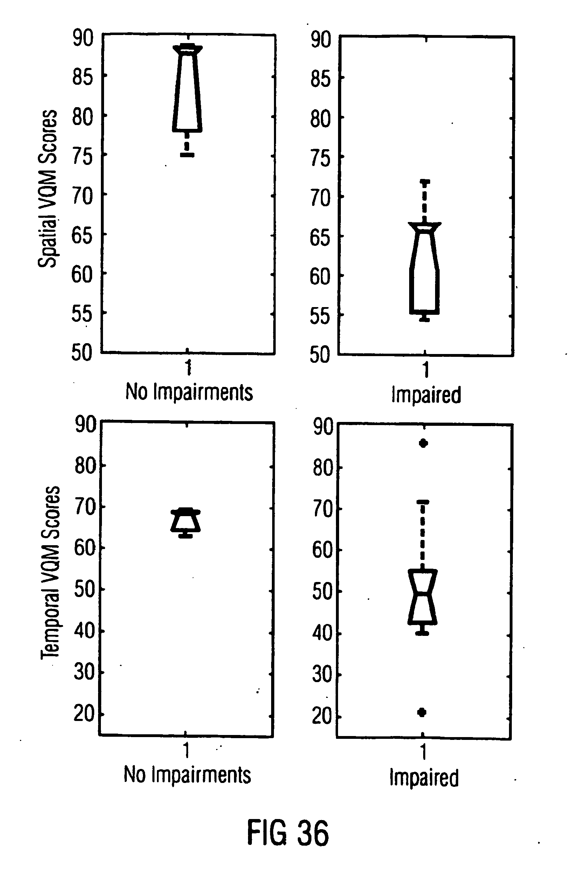

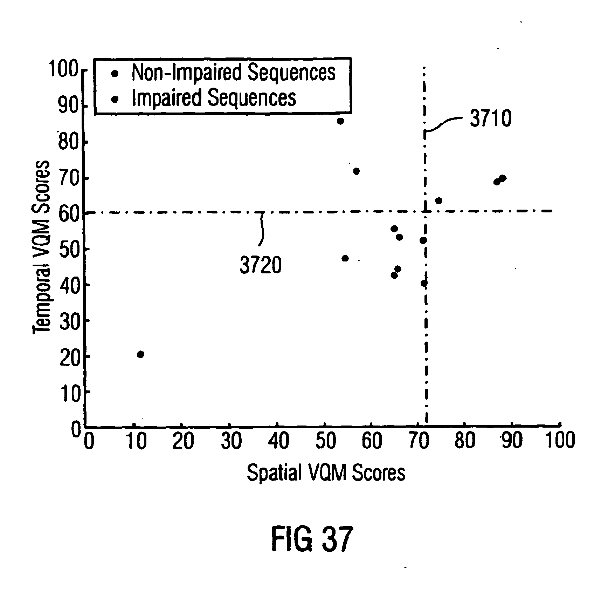

The quality scores obtained from the inventive VQMs are given in Fig. 36 for rigid textures, where Fig. 36 shows quality scores for synthetic video sequences with and without noticeable impairments (rigid textures). It can be seen that, in this scenario, a clear distinction between good and bad synthesis results can be achieved. This implies that the inventive temporal and spatial VQMs are efficient for corresponding artifact detection given rigid synthetic textures. A discrimination threshold can be chosen in the interval [72 75] for spatial artifacts, while it should lie in the interval [54 62] for temporal artifacts. This can be verified in Fig. 36 and Fig. 37. Discrimination is slightly worse for temporal artifacts than for the spatial ones but still statistically significant as the boxplot notches are pairwise nonoverlapping in Fig. 36.

A synthetic result is considered to be impaired if one of the thresholds 3710, 3720 is undershooted (cp. Fig. 37). The classification results obtained for the test sequences are given in Table 7.

| Sequence | GoP | Subj. Value | Spatial Measure | | Temporal Measure | | Output |
|---|---|---|---|---|---|---|---|
| | | | Mean Value | Worst GoP | Mean Value | Worst GoP | |
| Canoe | 7 | Bad | | 7,993 | | 5,202 | |
| Concrete – A | 3 | Good | 88,43 | 73,64 | 68,78 | 50,31 | OK |
| Concrete – B | 7 | Bad | 72,15 | 46,13 | | 26,42 | |
| Concrete – C | 3 | Good | 87,67 | 80,26 | 68,41 | 50,95 | OK |
| Concrete – D | 3 | Bad | | 50,8 | | 38,24 | |
| Flower Garden - A | 3 | Good | 75,05 | 62,42 | 62,8 | 48,73 | OK |
| Flower Garden - B | 7 | Bad | | 49,79 | | 34,72 | |
| Husky – A | 3 | Bad | 71,48 | 60,98 | | 38,67 | |
| Husky – B ('Bridge' texture) | 7 | Bad | | 62,07 | | 36,21 | |
| Husky – C ('Stones' texture) | 3 | Bad | | 59,42 | | 35,94 | |
| Husky – D ('Stones' texture) | 7 | Bad | | 60,64 | | 29,21 | |
| Husky – E (White blocks) | 3 | Bad | | 47,31 | 71,62 | 49,85 | |
| Husky – F (Markovian intra synthesis) | 3 | Bad | | 44,89 | 85,99 | 68,64 | |

**Tab. 7**

The spatial threshold 3710 is set to 72, while the temporal threshold 3720 is set to 60. It can be seen that a correct classification is obtained for 100% of the data. Each of the artifact assessors detects the class of impairments it is responsible for correctly in all the cases.

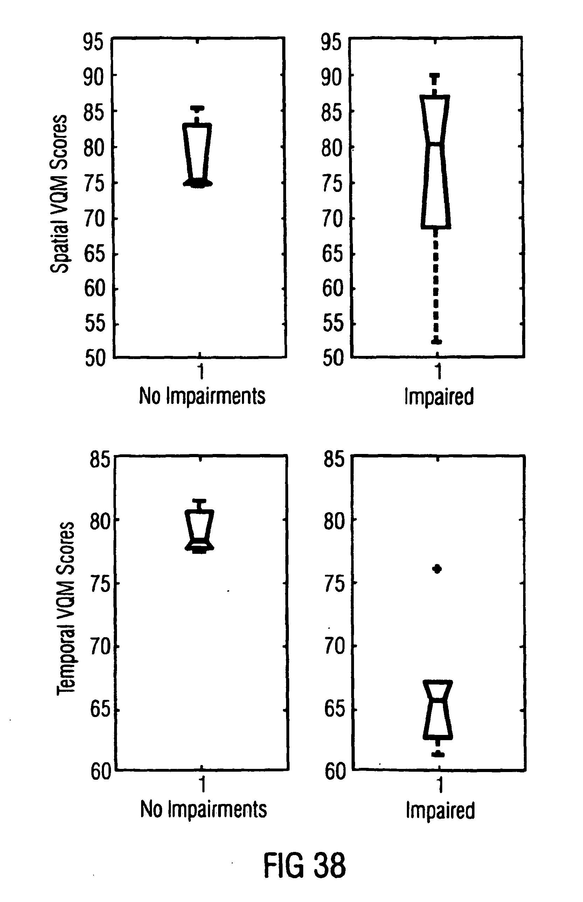

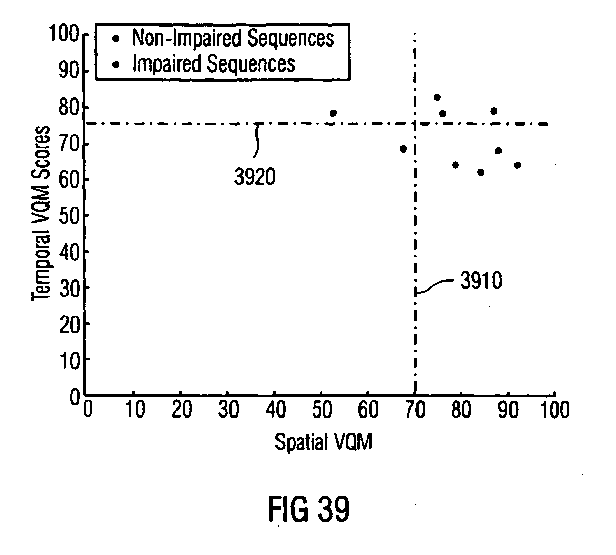

The quality scores obtained from the inventive VQM are given in Fig. 38 for non-rigid textures, where quality scores for synthetic video sequences with and without noticeable impairments (non-rigid textures) are shown. It can be seen that, in this scenario, a clear distinction between good and bad synthesis results can be achieved for temporal artifacts. This shows that the inventive temporal VQM $Q_t$ is efficient for corresponding artifact detection given non-rigid synthetic textures. Spatial artifacts are however more difficult to separate. A discrimination threshold can be chosen in the interval [68 74] for spatial artifacts, while it should lie in the interval [68 77] for temporal artifacts. This can be verified in Fig. 38 and Fig. 39, which shows a threshold selection for non-rigid texture scenario.

A synthetic result is considered to be impaired if one of the thresholds is undershooted. The classification results obtained for the test sequences are given in Table 8.

| Sequence | Subj. Value | Spatial Measure | | Temporal Measure | | Output |
|---|---|---|---|---|---|---|
| | | Mean Value | Transitions | Mean Value | Transitions | |
| Canoe — A | Bad | 83,64 | 76,66 | 61,75 | 78,44 | IMPAIRED |
| Canoe — B | Bad | 86,75 | 80,65 | 67,36 | 78,28 | IMPAIRED |
| Ducks | Good | 74,44 | 73,54 | 81,39 | 84,92 | OK |
| Flood | Bad | 90,47 | 90,47 | 64,31 | 80,58 | IMPAIRED |
| Rain | Bad | 51,66 | 72,09 | 76,4 | 88,76 | IMPAIRED |
| Shuttle | Bad | 77,59 | 86,7 | 63,18 | 84,55 | IMPAIRED |
| Synchronized Swimming | Good | 85,79 | 84,61 | 78,24 | 80,72 | OK |
| Whale | Good | 75,05 | 75,24 | 77,66 | 77,98 | OK |
| Whale — NoAlignment | Bad | 67,89 | 70,97 | 67,19 | 79,77 | IMPAIRED |

Tab. 8

The spatial threshold 3910 is set to 70, while the temporal threshold 3920 is set to 75.

It can be seen in Fig. 37 and Fig. 39 that the distribution of the synthetic sequences in the objective VQM space differs for rigid and non-rigid textures. Most of the examined sequences feature both spatial and temporal artifacts for rigid texture synthesis, while non-rigid synthesis mostly yields only temporal artifacts. These clues might indicate directions for improvement of the texture synthesis algorithms.

To summarize, the embodiments of the present invention relate to an apparatus 100 for determining an image quality measure $Q_s$ of an image signal d(y,x) having a vertical resolution of Y lines and a horizontal resolution of X columns on the basis of a reference image signal o(y,x), having a vertical resolution of Y lines and a horizontal resolution of X columns. The apparatus comprises means 310 for determining a vertical edge image signal $d_v(y,x)$ representing vertical edges in the image signal, a horizontal edge image signal $d_h(y,x)$ representing horizontal edges in the image signal, a vertical edge reference image signal $o_v(y,x)$ representing vertical edges in the reference image signal and a horizontal edge reference image signal $o_h(y,x)$ representing horizontal edges in the reference image signal. The apparatus comprises means 320 for determining a first mean absolute spatial gradient $E_o(y,x)$ in the reference image signal based on a first sum of samples of the horizontal edge reference image signal $o_h(y,x)$ and a second sum of samples of the vertical edge reference image signal $o_v(y,x)$, wherein the samples of the first sum are spaced one line and $\kappa$ columns apart, and the samples of the second sum are spaced $\kappa$ lines and one column apart, and for determining a second mean absolute spatial gradient $E_d(y,x)$ in the image signal based on a third sum of samples of the horizontal edge image signal $d_h(y,x)$ and a fourth sum of samples of the vertical edge image signal $d_v(y,x)$, wherein the samples of the third sum are spaced one line and $\kappa$ columns apart and the samples of the fourth sum are spaced $\kappa$ lines and one column apart. Further, the apparatus comprises means 330 for calculating the image quality measure ($Q_s$), based on the first $E_o(y,x)$ and the second mean absolute spatial gradient $E_d(y,x)$.

According to further embodiments an apparatus is provided for determining a spatial quality measure of a video signal d(y,x,t) having a vertical resolution of Y lines and a horizontal resolution of X columns on the basis of a reference video signal o(y,x,t), having a vertical resolution of Y lines and a horizontal resolution of X columns, the apparatus comprising an apparatus 100 for determining a spatial image quality measure of an image signal (d(y,x)) according to embodiments, with a plurality of frames of the video sequence d(y,x,t), each frame representing an image signal d(y,x) to obtain a plurality of spatial image quality measures $Q_s(t)$, and means for forming the spatial video quality measure $Q_{s,tot}$ on the basis of the plurality of the image quality measures $Q_s(t)$.

According to an embodiment the apparatus is further adapted to determine a temporal video quality measure $Q_t$. For that purpose the apparatus further comprises means 920 for performing an anisotropical gradient filtering on a plurality of first slices $s_{xt}^d(y_0,x,t)$ of the video signal d(y,x,t) having a temporal extension t and a first spatial extension x for a first predetermined edge orientation $\alpha_1$ having a non-zero spatial component to obtain a first filtered signal $s_{xt}^{d'}(y, x,t,\alpha_1)$ extending in the two spatial dimensions x; y and the temporal dimension t, and on a plurality of second slices $s_{yt}^d(y,x_0,t)$ of the video signal d(y,x,t) having the temporal extension and a second spatial extension y perpendicular to the first spatial extension x for a second predetermined edge orientation $\alpha_2$ having a non-zero spatial component to obtain a second filtered signal $s_{yt}^{d'}(y,x,t,\alpha_2)$ extending in the two spatial dimensions and the temporal dimension, as well as on a plurality of third slices $s_{xt}^o(y_0,x,t)$ of the reference video signal o(y,x,t) having the temporal extension t and the first spatial extension x for the first predetermined edge orientation $\alpha_1$ having the non-zero spatial component to obtain a third filtered signal $s_{xt}^{o'}(y,x,t,\alpha1)$ extending in the two spatial dimensions x; y and the temporal dimension t, and on a plurality of fourth slices $s_{yt}^o(y,x_0,t)$ of the reference video signal o(y,x,t) having the temporal extension t and the second spatial extension y for the second predetermined edge orientation $\alpha_2$ to obtain a fourth filtered signal $s_{yt}^{o'}(y,x,t,\alpha_2)$ extending in the two spatial dimensions x; y and the temporal dimension t. Also, the apparatus comprises means 930 for, in the two spatial dimensions x; y, for at least one predetermined time instant $I\Delta t$, performing a sum on summands comprising samples of the first filtered signal $s_{xt}^{d'}(y,x,t,\alpha1)$, a sum on summands comprising samples of the second filtered signal $s_{yt}^{d'}(y,x,t,\alpha_2)$, a sum on summands comprising samples of the third filtered signal $s_{xt}^o(y_0,x,t)$, and a sum on summands comprising samples of the fourth filtered signal $s_{yt}^{o'}(y,x,t,\alpha2)$, respectively, in order to obtain a first $GMA_x^d(I\Delta t,\alpha_1)$ second $GMA_y^d(I\Delta t,\alpha2)$, third $GMA_x^o(I\Delta t,\alpha_1)$, and fourth mean absolute temporal gradient $GMA_y^o(I\Delta t,\alpha_2)$. Means 940; 950; 960 are provided for calculating the temporal video quality measure $Q_t$ based on the first $GMA_x^d(I\Delta t,\alpha_1)$, second $GMA_y^d(I\Delta t,\alpha_2)$, third $GMA_x^o(I\Delta t,\alpha_1)$, and fourth mean absolute temporal gradient $GMA_y^o(I\Delta t,\alpha_2)$.

According to embodiments, the means 930 for performing the anisotropical gradient filtering is adapted to filter the first slices $s_{xt}^d(y_0,x,t)$, the second slices $s_{yt}^d(y,x_0,t)$ of the video signal d(y,x,t) and the third slices $s_{xt}^o(y_0,x,t)$, the fourth slices $sy_t^o(y,x_0,t)$ of the reference video signal o(y,x,t) for two predetermined edge orientations $\alpha_1$; $\alpha_2$, respectively, the two predetermined edge orientations $\alpha_1$; $\alpha_2$ being perpendicular to each other.

According to embodiments the filtering is performed by using a first filter matrix

$$f_{45°}(x,t) = \begin{pmatrix} -1 & 0 \\ 0 & 1 \end{pmatrix}$$

for the first predetermined edge orientation ($\alpha_1$) corresponding to 45˚ for the first $s_{xt}^d(y_0,x,t)$ and third slices $s_{xt}^o(y_0,x,t)$, by a second filter matrix

$$f_{45°}(y,t) = \begin{pmatrix} -1 & 0 \\ 0 & 1 \end{pmatrix}$$

for the first predetermined edge orientation corresponding to 45˚ for the second $s_{yt}^d(y,x_0,t)$ and fourth slices $sy_t^o(y,x_0,t)$, by a third filter matrix

$$f_{135°}(x,t) = \begin{pmatrix} 0 & -1 \\ 1 & 0 \end{pmatrix}$$

for the second predetermined edge orientation ($\alpha_2$) corresponding to 135° for the first $s_{xt}^d(y_0,x,t)$ and third slices $s_{xt}^o(y_0,x,t)$, and by a fourth filter matrix

$$f_{135°}(y,t) = \begin{pmatrix} 0 & -1 \\ 1 & 0 \end{pmatrix}$$

for the second predetermined edge orientation ($\alpha_2$) corresponding to 135° for the second $sy_t^d(y,x_0,t)$ and fourth slices $s_{yt}^o(y,x_0,t)$.

The means 930 for performing the sum on summands may be adapted to form the sum on summands comprising samples of the first filtered signal $s_{xt}^{d'}(y,x,t,\alpha_1)$ according to

$$GMA_x^d(l \cdot \Delta t, \alpha_1) = \frac{1}{K} \sum_{x=1}^{X} \sum_{y=1}^{Y} \left| s_{xt}^{d'}(y,x,l\Delta t,\alpha_1) \right|,$$

and to form the second sum comprising samples of the second filtered signal $s_{yt}^{d'}(y,x,t,\alpha_2)$ according to

$$GMA_y^d(l \cdot \Delta t, \alpha_2) = \frac{1}{K} \sum_{x=1}^{X} \sum_{y=1}^{Y} \left| s_{yt}^{d'}(y,x,l\Delta t,\alpha_2) \right|,$$

and to form the third sum comprising samples of the third filtered signal $s_{xt}^{o'}(y,x,t,\alpha_1)$ according to

$$GMA_x^o(l \cdot \Delta t, \alpha_1) = \frac{1}{K} \sum_{x=1}^{X} \sum_{y=1}^{Y} \left| s_{xt}^{o'}(y,x,l\Delta t,\alpha_1) \right|,$$

and to form the fourth sum comprising samples of the third filtered signal $s_{yt}^{o'}(y,x,t,\alpha_2)$ according to

$$GMA_y^o(l \cdot \Delta t, \alpha_2) = \frac{1}{K} \sum_{x=1}^{X} \sum_{y=1}^{Y} \left| s_{yt}^{o'}(y,x,l\Delta t,\alpha_2) \right|,$$

where $K \leq XY$ and $\Delta t = t - (t - \frac{1}{f_s})$ where $f_s$ represents a frame rate of the video signal.

The means 930 for performing the sum on summands may be adapted to form the sum on summands comprising samples of the first filtered signal $s_{xt}^{d'}(y,x,t,\alpha_1)$ according to

$$GMA_x^d(l \cdot \Delta t, \alpha_1) = \frac{1}{K} \sum_{x=1}^{X} \sum_{y=1}^{Y} \left| s_{xt}^{d'}(y,x,l\Delta t,\alpha_1) \right| \cdot m(y,x,l\Delta t),$$

and to form the second sum comprising samples of the second filtered signal $s_{yt}^{d'}(y,x,t,\alpha_2)$ according to

$$GMA_y^d(l \cdot \Delta t, \alpha_2) = \frac{1}{K} \sum_{x=1}^{X} \sum_{y=1}^{Y} \left| s_{yt}^{d'}(y,x,l\Delta t,\alpha_2) \right| \cdot m(y,x,l\Delta t),$$

and to form the third sum comprising samples of the third filtered signal $s_{xt}o'$ (y,x,t,$\alpha_1$) according to

$$GMA_x^o(l \cdot \Delta t, \alpha_1) = \frac{1}{K}\sum_{x=1}^{X}\sum_{y=1}^{Y}\left|s_{xt}^{o'}(y,x,l\Delta t,\alpha_1)\right| \cdot m(y,x,l\Delta t),$$

and to form the fourth sum comprising samples of the third filtered signal $s_{yt}o'$ (y,x,t,$\alpha_2$) according to

$$GMA_y^o(l \cdot \Delta t, \alpha_2) = \frac{1}{K}\sum_{x=1}^{X}\sum_{y=1}^{Y}\left|s_{yt}^{o'}(y,x,l\Delta t,\alpha_2)\right| \cdot m(y,x,l\Delta t) \, ,$$

where $K \leq XY$ and $\Delta t = t - (t - \frac{1}{f_s})$ where $f_s$ represents a frame rate of the video signal and m(x,y,l$\Delta$t) corresponds to a binary mask signal defining regions of interest in the respective frame signals.

The apparatus may further comprise means 940 for averaging the first $GMA_x^d(l\Delta t,\alpha_1)$, second $GMA_y^d(l\Delta t,\alpha_2)$, third $GMA_x^o(l\Delta t,\alpha_1)$ and fourth mean absolute temporal gradient $GMA_y^o(l\Delta t,\alpha_2)$ over all predetermined edge orientations for a given time instant l$\Delta$t.

The means 940 for averaging may be adapted to average the first mean absolute temporal gradient $GMA_x^d$ (l$\Delta$t,$\alpha_1$) according to

$$GMA_x^d(l\Delta t) = \frac{1}{P}\sum_{p=1}^{P}\left|GMA_x^d(l\Delta t, \alpha_p)\right|,$$

to average the second mean absolute temporal gradient $GMA_y^d(l\Delta t,\alpha_2)$ according to

$$GMA_y^d(l\Delta t) = \frac{1}{P}\sum_{p=1}^{P}\left|GMA_y^d(l\Delta t, \alpha_p)\right|,$$

to average the third mean absolute temporal gradient $GMA_x^o(l\Delta t,\alpha_1)$ according to

$$GMA_x^o(l\Delta t) = \frac{1}{P}\sum_{p=1}^{P}\left|GMA_x^o(l\Delta t, \alpha_p)\right|,$$

and to average the fourth mean absolute temporal gradient $GMA_y^o(l\Delta t,\alpha_2)$ according to

$$GMA_y^o(l\Delta t) = \frac{1}{P}\sum_{p=1}^{P}\left|GMA_y^o(l\Delta t, \alpha_p)\right|,$$

where P corresponds to a number of predetermined edged orientations.

A first temporal video quality measure $Q^h(l\Delta t)$ for a given time instant l$\Delta$t may be determined on the basis of the averaged first $GMA_x^d(l\Delta t)$ and second mean absolute temporal gradient $GMA_x^o(l\Delta t)$ according to

$$Q^h(l\Delta t) = \frac{e^{\frac{\tau}{1+\delta_h}}}{e^{\tau}},$$

with

$$\delta_h = \frac{\left| GMA_x^o(l\Delta t) - GMA_x^d(l\Delta t) \right|}{GMA_x^o(l\Delta t)},$$

and a second temporal video quality measure ($Q^v(l\Delta t)$) for the given time instant $l\Delta t$ is determined on the basis of the averaged second $GMA_y^d(l\Delta t)$ and fourth mean absolute temporal gradient $GMA_y^o(l\Delta t)$ according to

$$Q^v(l\Delta t) = \frac{e^{\frac{\tau}{1+\delta_v}}}{e^{\tau}}$$

with

$$\delta_v = \frac{\left| GMA_y^o(l\Delta t) - GMA_y^d(l\Delta t) \right|}{GMA_y^o(l\Delta t)},$$

where $\tau$ denotes a predefined constant.

A slice independent temporal quality measure $Q_t(l\Delta t)$ at the given time instant ($l\Delta t$) may be formed on the basis of the first $Q^h(l\Delta t)$ and the second temporal video quality measure $Q^v(l\Delta t)$ for the given time instant according to

$$Q_t(l\Delta t) = \min\left( Q^h(l\Delta t), Q^v(l\Delta t) \right).$$

The temporal video measure $Q_{t,tot}$ may be determined by averaging a plurality of the slice independent temporal video quality measures $Q_t(l\Delta t)$ according to

$$Q_{t,tot} = \frac{1}{L_v - 1} \sum_{l=0}^{L_v-1} Q_t(l\Delta t).$$

where $L_v$ corresponds to total number of frames of the video sequence.

According to further embodiments an apparatus is provided for determining a temporal video quality measure $Q_t$ for a video signal $d(y,x,t)$ based on a reference video signal $o(y,x,t)$, both of which have two spatial dimensions x; y and a temporal dimension t. The apparatus comprises means 920 for performing an anisotropical gradient filtering on a plurality of first slices $s_{xt}^d(y_0,x,t)$ of the video signal $d(y,x,t)$ having a temporal extension t and a first spatial extension x for a first predetermined edge orientation $\alpha_1$ having a non-zero spatial component to obtain a first filtered signal $s_{xt}^{d'}(y,x,t,\alpha_1)$ extending in the two spatial dimensions x; y and the temporal dimension t, and on a plurality of second slices $s_{yt}^d(y,x_0,t)$ of the video signal $d(y,x,t)$ having the temporal extension and a second spatial extension y perpendicular to the first spatial extension x for a second predetermined edge orientation $\alpha_2$ having a non-zero spatial component to obtain a second filtered signal $s_{yt}^{d'}(y,x,t,\alpha_2)$ extending in the two spatial dimensions and the temporal dimension, as well as on a plurality of third slices $s_{xt}^{o}(y_0,x,t)$ of the reference video signal $o(y,x,t)$ having the temporal extension t and the first spatial extension x for the first predetermined edge orientation $\alpha1$ having the non-zero spatial component to obtain a third filtered signal $s_{xt}^{o'}(y,x,t,\alpha_1)$ extending in the two spatial dimensions x; y and the temporal dimension t, and on a plurality of fourth slices $sy_t^{o}(y,x_0,t)$ of the reference video signal $o(y,x,t)$ having the temporal extension t and the second spatial extension y for the second predetermined edge orientation $\alpha_2$ to obtain a fourth filtered signal $sy_t^{o'}(y,x,t,\alpha_2)$ extending in the two spatial dimensions x; y and the temporal dimension t. The apparatus comprises means 930 for, in the two spatial dimensions x; y, for at least one predetermined time instant $l\Delta t$, performing a sum on summands comprising samples of the first filtered signal $s_{xt}^{d'}(y,x,t,\alpha_1)$, a sum on summands comprising samples of the second filtered signal $sy_t^{d'}(y,x,t,\alpha_2)$, a sum on summands comprising samples of the third filtered signal $s_{xt}^{o}(y_0,x,t)$, and a sum on summands comprising samples of the fourth filtered signal $sy_t^{o'}(y,x,t,\alpha_2)$, respectively, in order to obtain a first $GMA_x^d(l\Delta t,\alpha_1)$, second $GMA_y^d(l\Delta t,\alpha_2)$, third $GMA_x^o(l\Delta t,\alpha_1)$, and fourth mean absolute temporal gradient $GMA_y^o(l\Delta t,\alpha_2)$. The apparatus comprises means 940; 950; 960 for calculating the temporal video quality measure $Q_t$ based on the first $GMA_x^d(l\Delta t,\alpha_1)$, second $GMA_y^d(l\Delta t,\alpha_2)$, third $GMA_x^o(l\Delta t,\alpha_1)$, and fourth mean absolute temporal gradient $GMA_y^o(l\Delta t,\alpha_2)$.

Also a method is provided for determining a temporal video quality measure $Q_t$ for a video signal $d(y,x,t)$ based on a reference video signal $o(y,x,t)$, both of which have two spatial dimensions x; y and a temporal dimension t. The method comprises performing an anisotropical gradient filtering on a plurality of first slices $s_{xt}^{d}(y_0,x,t)$ of the video signal $d(y,x,t)$ having a temporal extension t and a first spatial extension x for a first predetermined edge orientation $\alpha_1$ having a non-zero spatial component to obtain a first filtered signal $S_{xt}^{d'}(y,x,t,\alpha_1)$ extending in the two spatial dimensions x; y and the temporal dimension t, and on a plurality of second slices $s_{yt}^{d}(y,x_0,t)$ of the video signal $d(y,x,t)$ having the temporal extension and a second spatial extension y perpendicular to the first spatial extension x for a second predetermined edge orientation $\alpha_2$ having a non-zero spatial component to obtain a second filtered signal $s_{yt}^{d'}(y,x,t,\alpha_2)$ extending in the two spatial dimensions and the temporal dimension, as well as on a plurality of third slices $s_{xt}^{o}(y_0,x,t)$ of the reference video signal $o(y,x,t)$ having the temporal extension t and the first spatial extension x for the first predetermined edge orientation $\alpha_1$ having the non-zero spatial component to obtain a third filtered signal $s_{xt}^{o'}(y,x,t,\alpha_1)$ extending in the two spatial dimensions x; y and the temporal dimension t, and on a plurality of fourth slices $s_{yt}^{o}(y,x_0,t)$ of the reference video signal $o(y,x,t)$ having the temporal extension t and the second spatial extension y for the second predetermined edge orientation $\alpha_2$ to obtain a fourth filtered signal $s_{yt}^{o'}(y,x,t,\alpha_2)$ extending in the two spatial dimensions x; y and the temporal dimension t. The method comprises performing, in the two spatial dimensions x; y, for at least one predetermined time instant $l\Delta t$, a sum on summands comprising samples of the first filtered signal $s_{xt}^{d'}(y,x,t,\alpha_1)$, a sum on summands comprising samples of the second filtered signal $s_{yt}^{d'}(y,x,t,\alpha_2)$, a sum on summands comprising samples of the third filtered signal $s_{xt}^{o}(y_0,x,t)$, and a sum on summands comprising samples of the fourth faltered signal $s_{yt}^{o'}(y,x,t,\alpha_2)$, respectively, in order to obtain a first $GMA_x^d(l\Delta t,\alpha_1)$, second $GMA_y^d(l\Delta t,\alpha_2)$, third $GMA_x^o(l\Delta t,\alpha_1)$, and fourth mean absolute temporal gradient $GMA_y^o(l\Delta t,\alpha_2)$. The method comprises calculating the temporal video quality measure $Q_t$ based on the first $GMA_x^d(l\Delta t,\alpha_1)$, second $GMA_y^d(l\Delta t,\alpha_2)$, third $GMA_x^o(l\Delta t,\alpha_1)$, and fourth mean absolute temporal gradient $GMA_y^o(l\Delta t,\alpha_2)$.

Depending on certain implementation requirements, the inventive methods, the inventive method can be implemented in hardware or in software. The implementation can be performed using a digital storage medium, in particular a disk, DVD, or a CD having electronically readable control signals stored thereon, which cooperate with programmable computer systems such that the inventive methods are performed. Generally, the present invention is, therefore, a computer program product with a program code stored on a machine-readable carrier, the program code being operative for performing the inventive methods when the computer program product runs on a computer. In other words, the inventive methods are, therefore, a computer program having a program code for performing at least one of the inventive methods when the computer program runs on a computer.

## Claims

1. Apparatus (100) for determining an image quality measure ($Q_s$) of an image signal ($d(y,x)$) having a vertical resolution of Y lines and a horizontal resolution of X columns on the basis of a reference image signal ($o(y,x)$), having a vertical resolution of Y lines and a horizontal resolution of X columns, the apparatus comprising:

a means (310) for determining a vertical edge image signal ($d_v(y,x)$) representing vertical edges in the image signal, a horizontal edge image signal ($d_h(y,x)$) representing horizontal edges in the image signal, a vertical edge reference image signal ($o_v(y,x)$) representing vertical edges in the reference image signal and a horizontal edge reference image signal ($o_h(y,x)$) representing horizontal edges in the reference image signal;

a means (320) for determining a first mean absolute spatial gradient ($E_o(y,x)$) in the reference image signal based on a first sum of samples of the horizontal edge reference image signal ($o_h(y,x)$) and a second sum of samples of the vertical edge reference image signal ($o_v(y,x)$), wherein the samples of the first sum are spaced one line and $\kappa$ columns apart, and the samples of the second sum are spaced $\kappa$ lines and one column apart, and for determining a second mean absolute spatial gradient ($E_d(y,x)$) in the image signal based on a third sum of samples of the horizontal edge image signal ($d_h(y,x)$) and a fourth sum of samples of the vertical edge image signal ($d_v(y,x)$), wherein the samples of the third sum are spaced one line and $\kappa$ columns apart and the samples of the fourth sum are spaced $\kappa$ lines and one column apart; and

a means (330) for calculating the image quality measure ($Q_s$), based on the first ($E_o(y,x)$) and the second mean absolute spatial gradient ($E_d(y,x)$).

2. Apparatus according to claim 1, wherein the means (320) for for determining the vertical edge image signal ($d_v(y,x)$), the vertical edge reference image signal ($o_v(y,x)$), the horizontal edge image signal ($d_h(y,x)$) and the horizontal edge reference image signal ($o_h(y,x)$) is configured to perform the determination by use of a conventional anisotropical gradient filter.

3. Apparatus according to claim 2, wherein the means (320) for determining comprises a first Sobel filter matrix according to

$$f_v(y,x) = \begin{pmatrix} -0{,}25 & 0 & 0{,}25 \\ -0{,}5 & 0 & 0{,}5 \\ -0{,}25 & 0 & 0{,}25 \end{pmatrix}.$$

for determination of the vertical edge image signal ($d_v(y,x)$), the vertical edge reference image signal ($o_v(y,x)$), and a second Sobel filter matrix for determination of the horizontal edge image signal ($d_h(y,x)$) and the horizontal edge reference image signal ($o_h(y,x)$) according to

$$f_h(y,x) = \begin{pmatrix} 0{,}25 & 0{,}5 & 0{,}25 \\ 0 & 0 & 0 \\ -0{,}25 & -0{,}5 & -0{,}25 \end{pmatrix}.$$

4. Apparatus according to one of claims 1 to 3, wherein the means (310) for determining the vertical edge image signal ($d_v(y,x)$), the vertical edge reference image signal ($o_v(y,x)$), the horizontal edge image signal ($d_h(y,x)$) and the horizontal edge reference image signal ($o_h(y,x)$) is adapted to approximate vertical and horizontal gradients of local luminance of the image signal ($d(y,x)$) and the reference image signal ($o(y,x)$), respectively.

5. Apparatus according to one of the preceding claims, wherein the means (320) for determining the first ($E_o(y,x)$) and the second mean absolute spatial gradient ($E_d(y,x)$) is adapted to determine the first mean absolute spatial gradient ($E_o(y,x)$) according to

$$E_0 = \frac{1}{(\frac{X}{\kappa}-1)Y}\sum_{y=1}^{Y}\sum_{x=1}^{\frac{X}{\kappa}-1}|o_h(y,\kappa x)| + \frac{1}{(\frac{Y}{\kappa}-1)X}\sum_{y=1}^{\frac{Y}{\kappa}-1}\sum_{x=1}^{X}|o_v(\kappa y,x)|,$$

wherein $\displaystyle\sum_{y=1}^{Y}\sum_{x=1}^{\frac{X}{\kappa}-1}|o_h(y,\kappa x)|$ forms the first sum of samples of the horizontal edge reference image signal and

$$\sum_{y=1}^{\frac{Y}{\kappa}-1} \sum_{x=1}^{X} |o_v(\kappa y, x)|$$ forms the second sum of samples of the vertical edge reference image signal, and wherein the means (320) is further adapted to determine the second mean absolute spatial gradient according to

$$E_d = \frac{1}{(\frac{X}{\kappa}-1)Y} \sum_{y=1}^{Y} \sum_{x=1}^{\frac{X}{\kappa}-1} |d_h(y, \kappa x)| + \frac{1}{(\frac{Y}{\kappa}-1)X} \sum_{y=1}^{\frac{Y}{\kappa}-1} \sum_{x=1}^{X} |d_v(\kappa y, x)|,$$

wherein $$\sum_{y=1}^{Y} \sum_{x=1}^{\frac{X}{\kappa}-1} |d_h(y, \kappa x)|$$ forms the third sum of samples of the horizontal edge image signal and

$$\sum_{y=1}^{\frac{Y}{\kappa}-1} \sum_{x=1}^{X} |d_v(\kappa y, x)|$$ forms the fourth sum of samples of the vertical edge image signal.

6. Apparatus according to one of the preceding claims, wherein the means (320) for determining the first and the second mean absolute spatial gradient is adapted to determine the first mean absolute spatial gradient ($E_o(y,x)$) according to

$$E_o = \frac{1}{(\frac{X}{\kappa}-1)Y} \sum_{y=1}^{Y} \sum_{x=1}^{\frac{X}{\kappa}-1} |o_h(y, \kappa x)| \cdot m(y, x) + \frac{1}{(\frac{Y}{\kappa}-1)X} \sum_{y=1}^{\frac{Y}{\kappa}-1} \sum_{x=1}^{X} |o_v(\kappa y, x)| \cdot m(y, x)$$

wherein $$\sum_{y=1}^{Y} \sum_{x=1}^{\frac{X}{\kappa}-1} |o_h(y, \kappa x)| \cdot m(y, x)$$ forms the first sum of samples of the horizontal edge reference image signal and $$\sum_{y=1}^{\frac{Y}{\kappa}-1} \sum_{x=1}^{X} |o_v(\kappa y, x)| \cdot m(y, x)$$ forms the second sum of samples of the vertical edge reference image signal, and is further adapted to determine the second mean absolute spatial gradient ($E_d(y,x)$) according to

$$E_d = \frac{1}{(\frac{X}{\kappa}-1)Y} \sum_{y=1}^{Y} \sum_{x=1}^{\frac{X}{\kappa}-1} |d_h(y, \kappa x)| \cdot m(y, x) + \frac{1}{(\frac{Y}{\kappa}-1)X} \sum_{y=1}^{\frac{Y}{\kappa}-1} \sum_{x=1}^{X} |d_v(\kappa y, x)| \cdot m(y, x)$$

wherein $$\sum_{y=1}^{Y} \sum_{x=1}^{\frac{X}{\kappa}-1} |d_h(y, \kappa x)| \cdot m(y, x)$$ forms the third sum of samples of the horizontal edge image signal and $$\sum_{y=1}^{\frac{Y}{\kappa}-1} \sum_{x=1}^{X} |d_v(\kappa y, x)| \cdot m(y, x)$$ forms the fourth sum of samples of the vertical edge image signal and m(x,y) corresponds to a binary mask signal defining regions of interest in the respective image signals.

7. Apparatus according to one of the preceding claims, wherein the means (310) for determining is configured to weight the vertical edge image signal ($d_v(y,x)$), the horizontal edge image signal ($d_h(y,x,t)$), the vertical edge reference signal ($o_v(y,x)$) and the horizontal edge image signal ($o_h(y,x)$) with an object contour matrix ($C(y,x)$) to obtain a weighted vertical edge image signal ($d_v'(y,x)$), a weighted horizontal edge image signal ($d_h'(y,x)$), a weighted vertical edge reference image signal ($o_v'(y,x)$) and a weighted horizontal edge reference image signal ($o_h'(y,x)$), respectively.

8. Apparatus according to claim 7, wherein the object contour matrix ($C(y,x)$) is determined according to

$$C(y,x) = \frac{\left|o_v(y,x)\right| + \left|o_h(y,x)\right| + \left|o_{45^\circ}(y,x)\right| + \left|o_{135^\circ}(y,x)\right|}{4}$$

where $o_v(y,x)$ corresponds to the vertical edge reference image signal, $o_h(y,x)$ corresponds to the horizontal edge reference image signal, $o_{45^\circ}(y,x)$ corresponds to a first diagonal edge reference image signal and $o_{135^\circ}(y,x)$ corresponds to a second diagonal edge reference signal representing diagonal edges perpendicular to the first diagonal edges.

9. Apparatus according to claim 8, wherein the first diagonal edge signal $o_{45^\circ}(y,x)$ is formed by convolving the reference image $o(y,x)$ signal with a Sobel filter matrix in

$$f_{45^\circ}(y,x) = \begin{pmatrix} -0{,}5 & -0{,}25 & 0 \\ -0{,}25 & 0 & 0{,}25 \\ 0 & 0{,}25 & 0{,}5 \end{pmatrix},$$

and the second diagonal edge signal $o_{135^\circ}(y,x)$ is formed by convolving the reference image signal $o(y,x)$ with a Sobel filter matrix being

$$f_{135^\circ}(y,x) = \begin{pmatrix} 0 & 0{,}25 & 0{,}5 \\ -0{,}25 & 0 & 0{,}25 \\ -0{,}5 & -0{,}25 & 0 \end{pmatrix}.$$

10. Apparatus according to one of the preceding claims, wherein the means for calculating the spatial image quality measure $Q_s$ is adapted to determine $Q_s$ according to

$$Q_s = e^{-\frac{\delta(t)\tau}{1+\delta(t)}},$$

where $\delta(t)$ is a differential term according to

$$\delta(t) = \frac{\left|E_o - E_d\right|}{E_o},$$

whith $E_o$ and $E_d$ being the first and the second mean absolute spatial gradients and the parameter $\tau$ is a predefined

constant.

11. Apparatus for determining a spatial quality measure of a video signal (d(y,x,t)) having a vertical resolution of Y lines and a horizontal resolution of X columns on the basis of a reference video signal (o(y,x,t)), having a vertical resolution of Y lines and a horizontal resolution of X columns, the apparatus comprising:

an apparatus (100) for determining a spatial image quality measure of an image signal (d(y,x)) according to one of the preceding claims, with a plurality of frames of the video sequence (d(y,x,t)), each frame representing an image signal (d(y,x)) to obtain a plurality of spatial image quality measures ($Q_s(t)$); and

means for forming the spatial video quality measure ($Q_{s,tot}$) on the basis of the plurality of the image quality measures ($Q_s(t)$).

12. Apparatus according to claim 11, wherein the means for forming the spatial video quality measure ($Q_{s,tot}$) is adapted to form the video quality measure ($Q_{s,tot}$) according to

$$Q_{s,tot.} = \frac{1}{L_v} \sum_{n=1}^{L_v} Q(nT_v / L_v) ,$$

where $L_v$ corresponds to a total number of frames of the video signal and $T_v$ corresponds to a total duration of the video signal in seconds.

13. Method for determining an image quality measure ($Q_s$) of an image signal (d(y,x)) having a vertical resolution of Y lines and a horizontal resolution of X columns on the basis of a reference image signal (o(y,x)), having a vertical resolution of Y lines and a horizontal resolution of X columns, the method comprising:

determining a vertical edge image signal ($d_v(y,x)$) representing vertical edges in the image signal, a horizontal edge image signal ($d_h(y,x)$) representing horizontal edges in the image signal, a vertical edge reference image signal ($o_v(y,x)$) representing vertical edges in the reference image signal and a horizontal edge reference image signal ($o_h(y,x)$) representing horizontal edges in the reference image signal;

determining a first mean absolute spatial gradient ($E_o(y,x)$) in the reference image signal based on a first sum of samples of the horizontal edge reference image signal ($o_h(y,x)$) and a second sum of samples of the vertical edge reference image signal ($o_v(y,x)$), wherein the samples of the first sum are spaced one line and $\kappa$ columns apart, and the samples of the second sum are spaced $\kappa$ lines and one column apart, and for determining a second mean absolute spatial gradient ($E_d(y,x)$) in the image signal based on a third sum of samples of the horizontal edge image signal ($d_h(y,x)$) and a fourth sum of samples of the vertical edge image signal ($d_v(y,x)$), wherein the samples of the third sum are spaced one line and $\kappa$ columns apart and the samples of the fourth sum are spaced $\kappa$ lines and one column apart; and

calculating the image quality measure ($Q_s(t)$), based on the first ($E_o(y,x)$) and the second mean absolute spatial gradient ($E_d(y,x)$).

14. Method for determining a spatial quality measure of a video signal (d(y,x,t)) having a vertical resolution of Y lines and a horizontal resolution of X columns on the basis of a reference video signal (o(y,x,t)), having a vertical resolution of Y lines and a horizontal resolution of X columns, the method comprising:

determining a spatial image quality measure of an image signal (d(y,x)) according to the method of claim 13, with a plurality of frames of the video sequence (d(y,x,t)), each frame representing an image signal (d(y,x)) to obtain a plurality of spatial image quality measures ($Q_s(t)$); and

forming the spatial video quality measure ($Q_{s,tot}$) on the basis of the plurality of the image quality measures ($Q_s(t)$).

15. Computer-program with a program code being operative for performing on all the steps of the inventive methods according to one of claims 13 or 14, when the computer program product runs on a computer.

**Patentansprüche**

1. Vorrichtung (100) zum Bestimmen einer Bildqualitätsmaßzahl ($Q_s$) eines Bildsignals (d(y,x)), das eine vertikale Auflösung von Y Zeilen und eine horizontale Auflösung von X Spalten aufweist, auf der Basis eines Referenzbildsignals (o(y,x)), das eine vertikale Auflösung von Y Zeilen und eine horizontale Auflösung von X Spalten aufweist, wobei die Vorrichtung folgende Merkmale aufweist:

eine Einrichtung (310) zum Bestimmen eines Vertikalkante-Bildsignals ($d_v$(y,x)), das Vertikalkanten in dem Bildsignal repräsentiert, eines Horizontalkante-Bildsignals ($d_h$(y,x)), das Horizontalkanten in dem Bildsignal repräsentiert, eines Vertikalkante-Referenzbildsignals ($o_v$(y,x)), das Vertikalkanten in dem Referenzbildsignal repräsentiert, und eines Horizontalkante-Referenzbildsignals ($o_h$(y,x)), das Horizontalkanten in dem Referenzbildsignal repräsentiert;

eine Einrichtung (320) zum Bestimmen eines ersten mittleren absoluten räumlichen Gradienten ($E_o$(y,x)) in dem Referenzbildsignal auf der Basis einer ersten Summe von Abtastwerten des Horizontalkante-Referenzbildsignals ($o_h$(y,x)) und einer zweiten Summe von Abtastwerten des Vertikalkante-Referenzbildsignals ($o_v$(y, x)), wobei die Abtastwerte der ersten Summe eine Zeile und $\kappa$ Spalten voneinander beabstandet sind und die Abtastwerte der zweiten Summe $\kappa$ Zeilen und eine Spalte voneinander beabstandet sind, und zum Bestimmen eines zweiten mittleren absoluten räumlichen Gradienten ($E_d$(y,x)) in dem Bildsignal auf der Basis einer dritten Summe von Abtastwerten des Horizontalkante-Bildsignals ($d_h$(y,x)) und einer vierten Summe von Abtastwerten des Vertikalkante-Bildsignals ($d_v$(y,x)), wobei die Abtastwerte der dritten Summe eine Zeile und $\kappa$ Spalten voneinander beabstandet sind und die Abtastwerte der vierten Summe $\kappa$ Zeilen und eine Spalte voneinander beabstandet sind; und

eine Einrichtung (330) zum Berechnen der Bildqualitätsmaßzahl ($Q_s$) auf der Basis des ersten ($E_o$(y,x)) und des zweiten mittleren absoluten räumlichen Gradienten ($E_d$(y,x)).

2.  Vorrichtung gemäß Anspruch 1, bei der die Einrichtung (320) zum Bestimmen des Vertikalkante-Bildsignals ($d_v$(y, x)), des Vertikalkante-Referenzbildsignals ($o_v$(y,x)), des Horizontalkante-Bildsignals ($d_h$(y,x)) und des Horizontalkante-Referenzbildsignals ($o_h$(y,x)) dazu konfiguriert ist, das Bestimmen durch Verwendung eines herkömmlichen anisotropen Gradientenfilters durchzuführen.

3.  Vorrichtung gemäß Anspruch 2, bei der die Einrichtung (320) zum Bestimmen eine erste Sobel-Filtermatrix gemäß

$$f_v(y,x) = \begin{pmatrix} -0,25 & 0 & 0,25 \\ -0,5 & 0 & 0,5 \\ -0,25 & 0 & 0,25 \end{pmatrix}$$

zur Bestimmung des Vertikalkante-Bildsignals ($d_v$(y,x)), des Vertikalkante-Referenzbildsignals ($o_v$(y,x)) und eine zweite Sobel-Filtermatrix zur Bestimmung des Horizontalkante-Bildsignals ($d_h$(y,x)) und des Horizontalkante-Referenzbildsignals ($o_h$(y,x)) gemäß

$$f_h(y,x) = \begin{pmatrix} 0,25 & 0,5 & 0,25 \\ 0 & 0 & 0 \\ -0,25 & -0,5 & -0,25 \end{pmatrix}$$

umfasst.

4.  Vorrichtung gemäß einem der Ansprüche 1 bis 3, bei der die Einrichtung (310) zum Bestimmen des Vertikalkante-Bildsignals ($d_v$(y,x)), des Vertikalkante-Referenzbildsignals ($o_v$(y,x)), des Horizontalkante-Bildsignals ($d_h$(y,x)) und des Horizontalkante-Referenzbildsignals ($o_h$(y,x)) dahin gehend angepasst ist, vertikale und horizontale Gradienten einer lokalen Luminanz des Bildsignals (d(y,x)) beziehungsweise des Referenzbildsignals (o(y,x)) anzunähern.

5.  Vorrichtung gemäß einem der vorhergehenden Ansprüche, bei der die Einrichtung (320) zum Bestimmen des ersten ($E_o$(y,x)) und des zweiten mittleren absoluten räumlichen Gradienten ($E_d$(y,x)) dahin gehend angepasst ist, den ersten mittleren absoluten räumlichen Gradienten ($E_o$(y,x)) gemäß

$$E_0 = \frac{1}{(\frac{X}{\kappa}-1)Y}\sum_{y=1}^{Y}\sum_{x=1}^{\frac{X}{\kappa}-1}|o_h(y,\kappa x)| + \frac{1}{(\frac{Y}{\kappa}-1)X}\sum_{y=1}^{\frac{Y}{\kappa}-1}\sum_{x=1}^{X}|o_v(\kappa y,x)|$$

zu bestimmen, wobei $\sum_{y=1}^{Y}\sum_{x=1}^{\frac{X}{\kappa}-1}|o_h(y,\kappa x)|$ die erste Summe von Abtastwerten des Horizontalkante-Referenzbildsignals bildet und $\sum_{y=1}^{\frac{Y}{\kappa}-1}\sum_{x=1}^{X}|o_v(\kappa y,x)|$ die zweite Summe von Abtastwerten des Vertikalkante-Referenzbildsignals bildet, und wobei die Einrichtung (320) ferner dahin gehend angepasst ist, den zweiten mittleren absoluten räumlichen Gradienten gemäß

$$E_d = \frac{1}{(\frac{X}{\kappa}-1)Y}\sum_{y=1}^{Y}\sum_{x=1}^{\frac{X}{\kappa}-1}|d_h(y,\kappa x)| + \frac{1}{(\frac{Y}{\kappa}-1)X}\sum_{y=1}^{\frac{Y}{\kappa}-1}\sum_{x=1}^{X}|d_v(\kappa y,x)|$$

zu bestimmen, wobei $\sum_{y=1}^{Y}\sum_{x=1}^{\frac{X}{\kappa}-1}|d_h(y,\kappa x)|$ die dritte Summe von Abtastwerten des Horizontalkante-Bildsignals bildet und $\sum_{y=1}^{\frac{Y}{\kappa}-1}\sum_{x=1}^{X}|d_v(\kappa y,x)|$ die vierte Summe von Abtastwerten des Vertikalkante-Bildsignals bildet.

**6.** Vorrichtung gemäß einem der vorhergehenden Ansprüche, bei der die Einrichtung (320) zum Bestimmen des ersten und des zweiten mittleren absoluten räumlichen Gradienten dahin gehend angepasst ist, den ersten mittleren absoluten räumlichen Gradienten ($E_o(y,x)$) gemäß

$$E_o = \frac{1}{(\frac{X}{\kappa}-1)Y}\sum_{y=1}^{Y}\sum_{x=1}^{\frac{X}{\kappa}-1}|o_h(y,\kappa x)| \cdot m(y,x) + \frac{1}{(\frac{Y}{\kappa}-1)X}\sum_{y=1}^{\frac{Y}{\kappa}-1}\sum_{x=1}^{X}|o_v(\kappa y,x)| \cdot m(y,x)$$

zu bestimmen, wobei $\sum_{y=1}^{Y}\sum_{x=1}^{\frac{X}{\kappa}-1}|o_h(y,\kappa x)| \cdot m(y,x)$ die erste Summe von Abtastwerten des Horizontalkante-Referenzbildsignals bildet und $\sum_{y=1}^{\frac{Y}{\kappa}-1}\sum_{x=1}^{X}|o_v(\kappa y,x)| \cdot m(y,x)$ die zweite Summe von Abtastwerten des Vertikalkante-Referenzbildsignals bildet, und ferner dahin gehend angepasst ist, den zweiten mittleren absoluten räumlichen Gradienten ($E_d(y,x)$) gemäß

$$E_d = \frac{1}{(\frac{X}{\kappa}-1)Y} \sum_{y=1}^{Y} \sum_{x=1}^{\frac{X}{\kappa}-1} \left|d_h(y,\kappa x)\right| . m(y,x) + \frac{1}{(\frac{Y}{\kappa}-1)X} \sum_{y=1}^{\frac{Y}{\kappa}-1} \sum_{x=1}^{X} \left|d_v(\kappa y,x)\right| . m(y,x)$$

zu bestimmen, wobei $\displaystyle\sum_{y=1}^{Y} \sum_{x=1}^{\frac{X}{\kappa}-1} \left|d_h(y,\kappa x)\right| . m(y,x)$ die dritte Summe von Abtastwerten des Horizontalkante-

Bildsignals bildet und $\displaystyle\sum_{y=1}^{\frac{Y}{\kappa}-1} \sum_{x=1}^{X} \left|d_v(\kappa y,x)\right| . m(y,x)$ die vierte Summe von Abtastwerten des Vertikalkante-Bildsignals bildet und m(x,y) einem Binärmaskensignal entspricht, das interessierende Regionen in den jeweiligen Bildsignalen definiert.

7. Vorrichtung gemäß einem der vorhergehenden Ansprüche, bei der die Einrichtung (310) zum Bestimmen dahin gehend konfiguriert ist, das Vertikalkante-Bildsignal ($d_v(y,x)$), das Horizontalkante-Bildsignal ($d_h(y,x,t)$), das Vertikalkante-Referenzsignal ($o_v(y,x)$) und das Horizontalkante-Bildsignal ($o_h(y,x)$) mit einer Objektkonturmatrix ($C(y,x)$) zu gewichten, um ein gewichtetes Vertikalkante-Bildsignal ($d_v'(y,x)$), ein gewichtetes Horizontalkante-Bildsignal ($d_h'(y,x)$), ein gewichtetes Vertikalkante-Referenzbildsignal ($o_v'(y,x)$) beziehungsweise ein gewichtetes Horizontalkante-Referenzbildsignal ($o_h'(y,x)$) zu erhalten.

8. Vorrichtung gemäß Anspruch 7, bei der die Objektkonturmatrix ($C(y,x)$) gemäß

$$C(y,x) = \frac{\left|o_v(y,x)\right| + \left|o_h(y,x)\right| + \left|o_{45°}(y,x)\right| + \left|o_{135°}(y,x)\right|}{4}$$

bestimmt wird, wobei $o_v(y,x)$ dem Vertikalkante-Referenzbildsignal entspricht, $o_h(y,x)$ dem Horizontalkante-Referenzbildsignal entspricht, $o_{45°}(y,x)$ einem ersten Diagonalkante-Referenzbildsignal entspricht und $o_{135°}(y,x)$ einem zweiten Digitalkante-Referenzsignal entspricht, das Diagonalkanten repräsentiert, die zu den ersten Diagonalkanten senkrecht sind.

9. Vorrichtung gemäß Anspruch 8, bei der das erste Diagonalkante-Signal $o_{45°}(y,x)$ durch Falten des Referenzbild-o(y,x)-Signals mit einer Sobel-Filtermatrix in

$$f_{45°}(y,x) = \begin{pmatrix} -0,5 & -0,25 & 0 \\ -0,25 & 0 & 0,25 \\ 0 & 0,25 & 0,5 \end{pmatrix}$$

gebildet wird, und das zweite Diagonalkante-Signal $o_{135°}(y,x)$ durch Falten des Referenzbildsignals o(y,x) mit einer Sobel-Filtermatrix, die

$$f_{135°}(y,x) = \begin{pmatrix} 0 & 0,25 & 0,5 \\ -0,25 & 0 & 0,25 \\ -0,5 & -0,25 & 0 \end{pmatrix}$$

ist, gebildet wird.

10. Vorrichtung gemäß einem der vorhergehenden Ansprüche, bei der die Einrichtung zum Berechnen der räumlichen Bildqualitätsmaßzahl $Q_s$ dahin gehend angepasst ist, $Q_s$ gemäß

$$Q_s = e^{-\frac{\delta(t)\tau}{1+\delta(t)}}$$

zu bestimmen, wobei $\delta(t)$ ein Differentialterm gemäß

$$\delta(t) = \frac{|E_o - E_d|}{E_o}$$

ist, wobei $E_o$ und $E_d$ der erste und der zweite mittlere absolute räumliche Gradient sind und der Parameter $\tau$ eine vordefinierte Konstante ist.

11. Vorrichtung zum Bestimmen einer räumlichen Qualitätsmaßzahl eines Videosignals (d(y,x,t)) ist, das eine vertikale Auflösung von Y Zeilen und eine horizontale Auflösung von X Spalten aufweist, auf der Basis eines Referenzvideosignals (o(y,x,t)), das eine vertikale Auflösung von Y Zeilen und eine horizontale Auflösung von X Spalten aufweist, wobei die Vorrichtung folgende Merkmale umfasst:

eine Vorrichtung (100) zum Bestimmen einer räumlichen Qualitätsmaßzahl eines Bildsignals (d(y,x)) gemäß einem der vorhergehenden Ansprüche, mit einer Mehrzahl von Einzelbildern der Videosequenz (d(y,x,t)), wobei jedes Einzelbild ein
Bildsignal (d(y,x)) repräsentiert, um eine Mehrzahl von räumlichen Bildqualitätsmaßzahlen ($Q_s$(t)) zu erhalten; und
eine Einrichtung zum Bilden der räumlichen Videoqualitätsmaßzahl ($Q_{s,\,ges}$) auf der Basis der Mehrzahl der Bildqualitätsmaßzahlen ($Q_s$(t)).

12. Vorrichtung gemäß Anspruch 11, bei der die Einrichtung zum Bilden der räumlichen Videoqualitätsmaßzahl ($Q_{s,\,ges}$) dahin gehend angepasst ist, die Videoqualitätsmaßzahl ($Q_{s,\,ges}$) gemäß

$$Q_{s,ges} = \frac{I}{L_v} \sum_{n=1}^{L_v} Q(nT_v / L_v)$$

zu bilden, wobei $L_v$ einer Gesamtanzahl von Einzelbildern des Videosignals entspricht und $T_v$ einer Gesamtdauer des Videosignals in Sekunden entspricht.

13. Verfahren zum Bestimmen einer Bildqualitätsmaßzahl ($Q_s$) eines Bildsignals (d(y,x)), das eine vertikale Auflösung von Y Zeilen und eine horizontale Auflösung von X Spalten aufweist, auf der Basis eines Referenzbildsignals (o(y, x)), das eine vertikale Auflösung von Y Zeilen und eine horizontale Auflösung von X Spalten aufweist, wobei das Verfahren folgende Schritte umfasst:

Bestimmen eines Vertikalkante-Bildsignals ($d_v$(y,x)), das Vertikalkanten in dem Bildsignal repräsentiert, eines Horizontalkante-Bildsignals ($d_h$(y,x)), das Horizontalkanten in dem Bildsignal repräsentiert, eines Vertikalkante-Referenzbildsignals ($o_v$(y,x)), das Vertikalkanten in dem Referenzbildsignal repräsentiert, und eines Horizon-talkante-Referenzbildsignals ($o_h$(y,x)), das Horizontalkanten in dem Referenzbildsignal repräsentiert;
Bestimmen eines ersten mittleren absoluten räumlichen Gradienten ($E_o$(y,x)) in dem Referenzbildsignal auf der Basis einer ersten Summe von Abtastwerten des Horizontalkante-Referenzbildsignals ($o_h$(y,x)) und einer zweiten Summe von Abtastwerten des Vertikalkante-Referenzbildsignals ($o_v$(y,x)), wobei die Abtastwerte der ersten Summe eine Zeile und $\kappa$ Spalten voneinander beabstandet sind und die Abtastwerte der zweiten Summe $\kappa$

Zeilen und eine Spalte voneinander beabstandet sind, und zum Bestimmen eines zweiten mittleren absoluten räumlichen Gradienten $(E_d(y,x))$ in dem Bildsignal auf der Basis einer dritten Summe von Abtastwerten des Horizontalkante-Bildsignals $(d_h(y,x))$ und einer vierten Summe von Abtastwerten des Vertikalkante-Bildsignals $(d_v(y,x))$, wobei die Abtastwerte der dritten Summe eine Zeile und $\kappa$ Spalten voneinander beabstandet sind und die Abtastwerte der vierten Summe $\kappa$ Zeilen und eine Spalte voneinander beabstandet sind; und
Berechnen der Bildqualitätsmaßzahl $(Q_s(t))$ auf der Basis des ersten $(E_o(y,x))$ und des zweiten mittleren absoluten räumlichen Gradienten $(E_d(y,x))$.

**14.** Verfahren zum Bestimmen einer räumlichen Qualitätsmaßzahl eines Videosignals $(d(y,x,t))$, das eine vertikale Auflösung von Y Zeilen und eine horizontale Auflösung von X Spalten aufweist, auf der Basis eines Referenzvideosignals $(o(y,x,t))$, das eine vertikale Auflösung von Y Zeilen und eine horizontale Auflösung von X Spalten aufweist, wobei das Verfahren folgende Schritte umfasst:

Bestimmen einer räumlichen Bildqualitätsmaßzahl eines Bildsignals $(d(y,x))$ gemäß dem Verfahren von Anspruch 13, mit einer Mehrzahl von Einzelbildern der Videosequenz $(d(y,x,t))$, wobei jedes Einzelbild ein Bildsignal $(d(y,x))$ repräsentiert, um eine Mehrzahl von räumlichen Bildqualitätsmaßzahlen $(Q_s(t))$ zu erhalten; und
Bilden der räumlichen räumlichen Videoqualitätsmaßzahl $(Q_{s,\,ges})$ auf der Basis der Mehrzahl der Bildqualitätsmaßzahlen $(Q_s(t))$.

**15.** Computerprogramm mit einem Programmcode, der dahin gehend wirksam ist, alle Schritte der erfindungsgemäßen Verfahren gemäß einem der Ansprüche 13 oder 14 durchzuführen, wenn das Computerprogrammprodukt auf einem Computer abläuft.

**Revendications**

**1.** Appareil (100) pour déterminer une mesure de qualité d'image $(Q_s)$ d'un signal d'image $(d(y,x))$ ayant une résolution verticale de Y lignes et une résolution horizontale de X colonnes sur base d'un signal d'image de référence $(o(y, x))$ ayant une résolution verticale de Y lignes et une résolution horizontale de X colonnes, l'appareil comprenant:

un moyen (310) pour déterminer un signal d'image de bord vertical $(d_v(y,x))$ représentant les bords verticaux dans le signal d'image, un signal d'image de bord horizontal $(d_h(y,x))$ représentant les bords horizontaux dans le signal d'image, un signal d'image de référence de bord vertical $(o_v(y,x))$ représentant les bords verticaux dans le signal d'image de référence et un signal d'image de référence de bord horizontal $(o_h(y,x))$ représentant les bords horizontaux dans le signal d'image de référence;
un moyen (320) pour déterminer un premier gradient spatial absolu moyen $(E_o(y,x))$ dans le signal d'image de référence sur base d'une première somme d'échantillons du signal d'image de référence de bord horizontal $(o_h(y,x))$ et d'une deuxième somme d'échantillons du signal d'image de référence de bord vertical $(o_v(y,x))$, où les échantillons de la première somme sont espacés l'un de l'autre d'une ligne et de K colonnes, et les échantillons de la deuxième somme sont espacés l'un de l'autre K lignes et d'une colonne, et pour déterminer un deuxième gradient spatial absolu moyen $(E_d(y,x))$ dans le signal d'image sur base d'une troisième somme d'échantillons du signal d'image de bord horizontal $(d_h(y,x))$ et d'une quatrième somme d'échantillons du signal d'image de bord vertical $(d_v(y,x))$, où les échantillons de la troisième somme sont espacés l'un de l'autre d'une ligne et de K colonnes et les échantillons de la quatrième somme sont espacés l'un de l'autre de K lignes et d'une colonne; et
un moyen (330) pour calculer la mesure de qualité d'image $(Q_s)$ sur base du premier $(E_o(y,x))$ et du deuxième gradient spatial absolu moyen $(E_d(y,x))$.

**2.** Appareil selon la revendication 1, dans lequel le moyen (320) pour déterminer le signal d'image de bord vertical $(d_v(y,x))$, le signal d'image de référence de bord vertical $(o_v(y,x))$, le signal d'image de bord horizontal $(d_h(y,x))$ et le signal d'image de référence de bord horizontal $(o_h(y,x))$ est configuré pour effectuer la détermination à l'aide d'un filtre de gradients anisotrope conventionnel.

**3.** Appareil selon la revendication 2, dans lequel le moyen (320) pour déterminer comprend une première matrice de filtres de Sobel selon

$$f_v(y,x) = \begin{pmatrix} -0.25 & 0 & 0.25 \\ -0.5 & 0 & 0.5 \\ -0.25 & 0 & 0.25 \end{pmatrix}$$

pour la détermination du signal d'image de bord vertical ($d_v(y,x)$), du signal d'image de référence de bord vertical ($o_v(y,x)$), et une deuxième matrice de filtres de Sobel pour la détermination du signal d'image de bord horizontal ($d_h(y,x)$) et du signal d'image de référence de bord horizontal ($o_h(y,x)$) selon

$$f_h(y,x) = \begin{pmatrix} -0.25 & 0.5 & 0.25 \\ 0 & 0 & 0 \\ -0.25 & -0.5 & -0.25 \end{pmatrix}.$$

4. Appareil selon l'une des revendications 1 à 3, dans lequel le moyen (310) pour déterminer le signal d'image de bord vertical ($d_v(y,x)$), le signal d'image de référence de bord vertical ($o_v(y,x)$), le signal d'image de bord horizontal ($d_h(y,x)$) et le signal d'image de référence bord horizontal ($o_h(y,x)$) est adapté pour approximer les gradients verticaux et horizontaux de luminance locale respectivement du signal d'image ($d(y,x)$) et du signal d'image de référence ($o(y,x)$).

5. Appareil selon l'une des revendications précédentes, dans lequel le moyen (320) pour déterminer le premier ($E_o(y,x)$) et le deuxième gradient spatial absolu moyen ($E_d(y,x)$) est adapté pour déterminer le premier gradient spatial absolu moyen ($E_o(y,x)$) selon

$$E_0 = \frac{1}{\left(\frac{X}{\kappa}-1\right)y}\sum_{y=1}^{Y}\sum_{x=1}^{\frac{X}{\kappa}-1}\left|o_h(y,\kappa x)\right| + \frac{1}{\left(\frac{Y}{\kappa}-1\right)X}\sum_{y=1}^{\frac{Y}{\kappa}-1}\sum_{x=1}^{X}\left|o_v(\kappa y,x)\right|,$$

où $\displaystyle\sum_{y=1}^{Y}\sum_{x=1}^{\frac{X}{\kappa}-1}\left|o_h(y,\kappa x)\right|$ forme la première somme d'échantillons du signal d'image de référence de bord horizontal

et $\displaystyle\sum_{y=1}^{\frac{Y}{\kappa}-1}\sum_{x=1}^{X}\left|o_v(\kappa y,x)\right|$ forme la deuxième somme d'échantillons du signal d'image de référence de bord vertical, et où le moyen (320) est par ailleurs adapté pour déterminer le deuxième gradient spatial absolu moyen selon

$$E_d = \frac{1}{\left(\frac{X}{\kappa}-1\right)Y}\sum_{y=1}^{Y}\sum_{x=1}^{\frac{X}{\kappa}-1}\left|d_h(y,\kappa x)\right| + \frac{1}{\left(\frac{Y}{\kappa}-1\right)X}\sum_{y=1}^{\frac{Y}{\kappa}-1}\sum_{x=1}^{X}\left|d_v(\kappa y,x)\right|$$

où $\displaystyle\sum_{y=1}^{Y}\sum_{x=1}^{\frac{X}{\kappa}-1}\left|d_h\left(y,\kappa x\right)\right|$ forme la troisième somme d'échantillons du signal d'image de bord horizontal et

$\displaystyle\sum_{y=1}^{\frac{Y}{\kappa}-1}\sum_{x=1}^{X}\left|d_v\left(\kappa y,x\right)\right|$ forme la quatrième somme d'échantillons du signal d'image de bord vertical.

6. Appareil selon l'une des revendications précédentes, dans lequel le moyen (320) pour déterminer le premier et le deuxième gradient spatial absolu moyen est adapté pour déterminer le premier gradient spatial absolu moyen ($E_o(y,x)$) selon

$$E_o = \frac{1}{\left(\dfrac{X}{\kappa}-1\right)Y}\sum_{y=1}^{Y}\sum_{x=1}^{\frac{X}{\kappa}-1}\left|o_h\left(y,\kappa x\right)\right|.m(y,x) + \frac{1}{\left(\dfrac{Y}{\kappa}-1\right)X}\sum_{y=1}^{\frac{Y}{\kappa}-1}\sum_{x=1}^{X}\left|o_v\left(\kappa y,x\right)\right|.m(y,x)$$

où $\displaystyle\sum_{y=1}^{Y}\sum_{x=1}^{\frac{X}{\kappa}-1}\left|o_h\left(y,\kappa x\right)\right|.m(y,x)$ forme la première somme d'échantillons du signal d'image de référence de bord

horizontal et $\displaystyle\sum_{y=1}^{\frac{Y}{\kappa}-1}\sum_{x=1}^{X}\left|o_v\left(\kappa y,x\right)\right|.m(y,x)$ forme la deuxième somme d'échantillons du signal d'image de référence de bord vertical, et est par ailleurs adapté pour déterminer le deuxième gradient spatial absolu moyen ($E_d(y,x)$) selon

$$E_d = \frac{1}{\left(\dfrac{X}{\kappa}-1\right)Y}\sum_{y=1}^{Y}\sum_{x=1}^{\frac{X}{\kappa}-1}\left|d_h\left(y,\kappa x\right)\right|.m(y,x) + \frac{1}{\left(\dfrac{Y}{\kappa}-1\right)X}\sum_{y=1}^{\frac{Y}{\kappa}-1}\sum_{x=1}^{X}\left|d_v\left(\kappa y,x\right)\right|.m(y,x)$$

où $\displaystyle\sum_{y=1}^{Y}\sum_{x=1}^{\frac{X}{\kappa}-1}\left|d_h\left(y,\kappa x\right)\right|.m(y,x)$ forme la troisième somme d'échantillons du signal d'image de bord horizontal et

$\displaystyle\sum_{y=1}^{\frac{Y}{\kappa}-1}\sum_{x=1}^{X}\left|d_v\left(\kappa y,x\right)\right|.m(y,x)$ forme la quatrième somme d'échantillons du signal d'image de bord vertical et m(x,y) correspond à un signal de masque binaire définissant les régions d'intérêt dans les signaux d'image respectifs.

7. Appareil selon l'une des revendications précédentes, dans lequel le moyen (310) pour déterminer est configuré pour pondérer le signal d'image de bord vertical ($d_v(y,x)$), le signal d'image de bord horizontal ($d_h(y,x,t)$), le signal de référence de bord vertical ($o_v(y,x)$) et le signal d'image de bord horizontal ($o_h(y,x)$) avec une matrice de contour d'objet ($C(y,x)$), pour obtenir respectivement un signal d'image de bord vertical pondéré ($d_v'(y,x)$), un signal d'image de bord horizontal pondéré ($d_h'(y,x)$) pondéré, un signal d'image de référence de bord vertical ($o_v'(y,x)$) pondéré et un signal d'image de référence de bord horizontal pondéré ($o_h'(y,x)$).

8. Appareil selon la revendication 7, dans lequel la matrice de contour d'objet (C(y,x)) est déterminée selon

$$C(y,x) = \frac{|o_v(y,x)| + |o_h(y,x)| + |o_{45°}(y,x)| + |o_{135°}(y,x)|}{4}$$

où $o_v(y,x)$ correspond au signal d'image de référence de bord vertical, $o_h(y,x)$ correspond au signal d'image de référence de bord horizontal, $o_{45°}(y,x)$ correspond à un premier signal d'image de référence de bord diagonal et $o_{135°}(y,x)$ correspond à un deuxième signal d'image de référence de bord diagonal représentant les bords diagonaux perpendiculaires aux premiers bords diagonaux.

9. Appareil selon la revendication 8, dans lequel le premier signal de bord diagonal $o_{45°}(y,x)$ est formé par convolution du signal d'image de référence $o(y,x)$ avec une matrice de filtres de Sobel, pour obtenir

$$f_{45°}(y,x) = \begin{pmatrix} -0.5 & -0.25 & 0 \\ -0.25 & 0 & 0.25 \\ 0 & 0.25 & 0.5 \end{pmatrix}$$

et le deuxième signal de bord diagonal $o_{135°}(y,x)$ est formé par convolution du signal d'image de référence $o(y,x)$ avec une matrice de filtres de Sobel qui est

$$f_{135°}(y,x) = \begin{pmatrix} 0 & 0.25 & 0.5 \\ -0.25 & 0 & 0.25 \\ -0.5 & -0.25 & 0 \end{pmatrix}.$$

10. Appareil selon l'une des revendications précédentes, dans lequel le moyen pour calculer la mesure de qualité d'image spatiale $Q_s$ est adapté pour déterminer $Q_s$ selon

$$Q_s = e^{-\frac{\delta(t)s}{1+\delta(t)}},$$

où $\delta(\tau)$ est un terme différentiel selon

$$\delta(\tau) = \frac{|E_o - E_d|}{E_o},$$

$E_o$ et $E_d$ étant le premier et le deuxième gradient spatial absolu moyen et le paramètre $\tau$ est une constante prédéfinie.

11. Appareil pour déterminer une mesure de qualité spatiale d'un signal vidéo (d(y,x,t)) ayant une résolution verticale de Y lignes et une résolution horizontale de X colonnes sur base d'un signal vidéo de référence (o(y,x,t)) ayant une résolution verticale de Y lignes et une résolution horizontale de X colonnes, l'appareil comprenant:

un appareil (100) pour déterminer une mesure de qualité d'image spatiale d'un signal d'image (d(y,x)) selon l'une des revendications précédentes, avec une pluralité de trames de la séquence vidéo (d(y,x,t)), chaque trame représentant un signal d'image (d(y,x)), pour obtenir une pluralité de mesures de qualité d'image spatiales ($Q_s(t)$); et

un moyen pour former la mesure de qualité vidéo spatiale ($Q_{s,tot}$) sur base de la pluralité de mesures de qualité d'image ($Q_s(t)$).

**12.** Appareil selon la revendication 11, dans lequel le moyen pour former la mesure de qualité vidéo spatiale ($Q_{s,tot}$) est adapté pour former la qualité vidéo spatiale ($Q_{s,tot}$) selon

$$Q_{s,tot} = \frac{I}{L_v} \sum_{n=1}^{L_v} Q(nT_v / L_v)$$

où $L_v$ correspond à un nombre total de trames du signal vidéo et
$T_v$ correspond à une durée totale du signal vidéo en secondes.

**13.** Procédé pour déterminer une mesure de qualité d'image ($Q_s$) d'un signal d'image (d(y,x)) ayant une résolution verticale de Y lignes et une résolution horizontale de X colonnes sur base d'un signal d'image de référence (o(y, x)) ayant une résolution verticale de Y lignes et une résolution horizontale de X colonnes, le procédé comprenant:

déterminer un signal d'image de bord vertical ($d_v(y,x)$) représentant des bords verticaux dans le signal d'image, un signal d'image de bord horizontal ($d_h(y,x)$) représentant des bords horizontaux dans le signal d'image, un signal d'image de référence de bord vertical ($o_v(y,x)$) représentant des bords verticaux dans le signal d'image de référence et un signal d'image de référence de bord horizontal ($o_h(y,x)$) représentant des bords horizontaux dans le signal d'image de référence;

déterminer un premier gradient spatial absolu moyen ($E_o(y,x)$) dans le signal d'image de référence sur base d'une première somme d'échantillons du signal d'image de référence de bord horizontal ($o_h(y,x)$) et d'une deuxième somme d'échantillons du signal d'image de référence de bord vertical ($o_v(y,x)$), où les échantillons de la première somme sont espacés l'un de l'autre d'une ligne et de K colonnes, et les échantillons de la deuxième somme sont espacés l'un de l'autre de K lignes et d'une colonne, et déterminer un deuxième gradient spatial absolu moyen ($E_d(y,x)$) dans le signal d'image sur base d'une troisième somme d'échantillons du signal d'image de bord horizontal ($d_h(y,x)$) et d'une quatrième somme d'échantillons du signal d'image de bord vertical ($d_v(y,x)$), où les échantillons de la troisième somme sont espacés l'un de l'autre d'une ligne et de K colonnes, et les échantillons de la quatrième somme sont espacés l'un de l'autre de K lignes et d'une colonne; et

calculer la mesure de qualité d'image ($Q_s(t)$), sur base du premier ($E_o(y,x)$) et du deuxième gradient spatial absolu moyen ($E_d(y,x)$).

**14.** Procédé pour déterminer une mesure de qualité spatiale d'un signal vidéo (d(y,x,t)) ayant une résolution verticale de Y lignes et une résolution horizontale de X colonnes sur base d'un signal vidéo de référence (o(y,x,t)) ayant une résolution verticale de Y lignes et une résolution horizontale de X colonnes, le procédé comprenant:

déterminer une mesure de qualité d'image spatiale d'un signal d'image (d(y,x)) selon le procédé de la revendication 13, avec une pluralité de trames de la séquence vidéo (d(y,x,t)), chaque trame représentant un signal d'image (d(y,x)), pour obtenir une pluralité de mesures de qualité d'image spatiale ($Q_s(t)$); et

former la mesure de qualité vidéo spatiale ($Q_{s,tot}$) sur base de la pluralité de mesures de qualité d'image ($Q_s(t)$).

**15.** Programme d'ordinateur avec un code de programme opérationnel pour réaliser toutes les étapes des procédés de l'invention selon l'une des revendications 13 ou 14 lorsque le produit programme d'ordinateur est exécuté sur un ordinateur.

FIG 1

Input images o,d     —S 210

Determine spatial video quality measure $Q_S(t)$     —S 220

Output spatial video quality measure $Q_S(t)$     —S 230

Compare spatial VQM to threshold     —S 240

FIG 2

FilG 3

EP 2 119 248 B1

S 220

gradient filtering with $f_v$, $f_h$ — S 220-1

Determine 1st mean absolute spatial gradient and 2nd mean absolute — S 220-2

determine spatial VQM $Q_s(t)$ — S 220-3

— S 220-4

FIG 4

FIG 5

FIG 6

700

o(y,x,t)

d(y,x,t)

$Q_t(l \cdot st)$

$\sum$

$Q_{t,tot}$

# FIG 7

FIG 8

FIG 9

S 820

forming x-t and y-t slices — S 820-1

filter x-t and y-t slices — S 820-2

sum filtered slices to 1st, 2nd, 4th mean absolute temporal gradient — S 820-3

compute overall global motion info for given time interval l·st and slice type — S 820-4

compute $Q^v(l \cdot st)$ and $Q^h(l \cdot st)$ — S 820-5

$Q_t(l \cdot st) = min(Q^h(l \cdot st), Q^v(l \cdot st))$ — S 820-6

$$Q_{t,tot} = \frac{1}{L_{v-1}} \sum_{l=0}^{L_{v-2}} Q_t(l \cdot st)$$ — S 820-7

FIG.10

FIG 11

FIG 12

FIG 13

## FIG 14

## FIG.15

| Sequence | Key Frame | Sequence | Key Frame |
|---|---|---|---|
| Concrete | | Flood | |
| Flower Garden | | Rain | |
| Husky | | Shuttle | |
| Canoe | | Synchronized Swimming | |
| Ducks | | Whale | |

FIG 16

$r_p$=0.958921, $r_s$=0.963857, $r_0$=0.000000

FIG 17

$r_p$=0.975304, $r_s$=0.973732, $r_0$=0.000000

FIG.18

$r_p = 0.720167$, $r_s = 0.724398$, $r_0 = 0.000000$

**FIG 19**

$r_p = 0.984760$, $r_s = 0.949213$, $r_0 = 0.000000$

**FIG 20**

$r_p = 0.957494$, $r_s = 0.951808$, $r_o = 0.000000$

**FIG 21**

$r_p = 0.986449$, $r_s = 0.956219$, $r_o = 0.000000$

**FIG 22**

FIG 23

FIG 24

FIG 25

$r_p=0.490756, r_s=0.531665, r_0=0.250000$

FIG 26

FIG 27

**FIG 28**

**FIG 29**

FIG 30

FIG 31

FIG 32

**FIG 33**

**FIG 34**

**FIG 35**

FIG 36

FIG 37

FIG 38

FIG 39

4000

4010

4020

FIG 40

FIG 41
(STAND DER TECHNIK)

FIG 42

FIG 43

## REFERENCES CITED IN THE DESCRIPTION

**Patent documents cited in the description**

- WO 2005060272 A1

**Non-patent literature cited in the description**

- **E.P. Ong ; X. Yang ; W. Lin ; Z. Lu ; S. Yao.** Video Quality Metric for Low Bitrate Compressed Video. *Proc. ICIP 2004, IEEE International Conference on Image Processing,* 2004, 3531-3534
- **E. P. Ong ; W. Lin ; Z. Lu ; S. Yao.** Colour Perceptual Video Quality Metric. *Proc. ICIP 2005, IEEE International Conference on Image Processing,* 2005, vol. 3, 1172-1175
- **E. P. Ong ; X. Yang ; W. Lin ; Z. Lu ; S. Yao.** Video Quality Metric for Low Bitrate Compressed Video. *Proc. ICIP 2004, IEEE International Conference on Image Processing,* 2004, 3531-3534
- **M. H. Pinson ; S. Wolf.** A New Standardized Method for Objectively Measuring Video Quality. *IEEE Transactions on Broadcasting,* September 2004, vol. 50 (3), 312-322